# EUROPEAN PATENT SPECIFICATION

(11) **EP 4 512 861 B1**
(45) Date of publication and mention of the grant of the patent: **30.09.2026**
(21) Application number: 23816118.6
(22) Date of filing: 31.05.2023
(51) Int. Cl.: C08L 83/06, C08G 77/18, C08G 77/24, C08G 77/385, C09D 5/16

(54) **COMPOSITION AND ARTICLE**
ZUSAMMENSETZUNG UND ARTIKEL
COMPOSITION ET ARTICLE

(30) Priority: 03.06.2022 JP 2022091037
(43) Date of publication of application: 26.02.2025
(73) Proprietor: DAIKIN INDUSTRIES, LTD., Osaka-shi, Osaka 530-0001 (JP)
(72) Inventor: YOSHIDA, Tomohiro, 40211 Duesseldorf (DE); SAHRANESHIN, Ameneh, 40211 Duesseldorf (DE); KUZNETSOV, Volodymyr, 40211 Duesseldorf (DE); BACA, Lubos, 2700 Wiener Neustadt (AT); GAMSJAEGER, Norbert, 2700 Wiener Neustadt (AT); STEINER, Hannes, 2700 Wiener Neustadt (AT)
(74) Representative: Hoffmann Eitle
(86) International application number: PCT/JP2023/020312
(87) International publication number: WO 2023/234361

(56) References cited:
- EP-A1- 3 498 756
- WO-A1-2018/056410
- WO-A1-2020/066534
- WO-A1-2020/100725
- WO-A1-2021/049240
- WO-A2-2009/086515
- JP-A- 2014 205 739
- JP-A- 2014 205 739
- US-A1- 2014 309 329

## Description

### Technical Field

The present disclosure relates to a composition and an article.

### Background Art

As organic silane compounds used for coatings and formed articles, organic silane compounds having an epoxy group are known.

Patent Literature 1 describes a curable composition comprising: a fluorine-containing amide compound; a fluorine-containing organohydrogen siloxane; a catalytic amount of a platinum group element; and an organosiloxane having each of one or more hydrogen atoms directly bonded to a silicon atom and one or more epoxy groups and/or trialkoxysilyl groups bonded to a silicon atom via a carbon atom or carbon and oxygen atoms in one molecule.

Patent Literature 2 describes an epoxy group-containing cyclic organosiloxane.

US2014/309329A1 discloses a water-repellent antifouling coating material comprising a condensation product obtained by condensing hydrolyzable silane compounds, wherein the hydrolyzable silane compounds include: (a) a hydrolyzable silane compound having a perfluoropolyether group; (b) a hydrolyzable silane compound having an epoxy group; and (c) a hydrolyzable silane compound having a fluorine-containing group other than perfluoropolyether groups.

### Citation List

### Patent Literature

Patent Literature 1: JP 9-95615 A
Patent Literature 2: JP 2016-204288 A

### Summary

### Technical Problem

When the organic silane compounds as described in Patent Literatures 1 and 2 are used for coating, the anti-icing performance and transparency were found to be insufficient in some cases.

An object of the present disclosure is to provide a composition capable of forming a film that achieves both anti-icing performance and transparency, and preferably, to further provide a composition further capable of forming a film with excellent weather resistance. Another object of the present disclosure is to provide an article using such a composition.

### Solution to Problem

The present disclosure includes the following embodiments.
<1> A composition comprising an organic silane compound (A),
   wherein the organic silane compound (A) comprises a reaction product (A3) between a silane compound (A1) having a fluoropolyether group and a hydrolyzable silyl group and a silicone compound (A2) having an epoxy ring and a hydrolyzable silyl group, and
   wherein the silane compound (A1) having a fluoropolyether group and a hydrolyzable silyl group differs from the silicone compound (A2) having an epoxy group and a hydrolyzable silyl group.
<2> The composition according to <1>, wherein the organic silane compound (A) further comprises the silicone compound (A2) having an epoxy group and a hydrolyzable silyl group.
<3> The composition according to <1> or <2>, wherein the silane compound (A1) having a fluoropolyether group comprises at least one compound represented by formula (1) or (2):

   **R^{F1}**_{α}-**X^{A}-R^{Si}_{β}** **(1)**

   **R^{Si}**_{γ}**-X^{A}-R^{F2}-X^{A}-R^{Si}**_{γ} (2)

   wherein
   R^{F1} is each independently at each occurrence Rf¹-R^{F}-O_{q}-;
   R^{F2} is -Rf²ₚ-R^{F}-O_{q}-;
   Rf¹ is each independently at each occurrence a C₁₋₁₆ alkyl group optionally substituted with one or more fluorine atoms;
   Rf² is a C₁₋₆ alkylene group optionally substituted with one or more fluorine atoms;
   R^{F} is each independently at each occurrence a divalent fluoropolyether group;
   p is 0 or 1;
   q is each independently at each occurrence 0 or 1;
   R^{Si} is each independently at each occurrence a monovalent group containing a Si atom to which a hydroxyl group, a hydrolyzable group, a hydrogen atom, or a monovalent organic group is bonded;
   in each of the formula (1) or the formula (2), at least one R^{Si} is a monovalent group containing a Si atom to which a hydroxyl group or a hydrolyzable group is bonded;
   X^{A} is each independently a single bond or a di- to decavalent organic group;
   α is an integer of 1 to 9;
   β is an integer of 1 to 9; and
   γ is each independently an integer of 1 to 9.
<4> The composition according to any one of <1> to <3>, wherein the silane compound (A1) having a fluoropolyether group comprises a compound represented by formula (1b) or formula (2b): 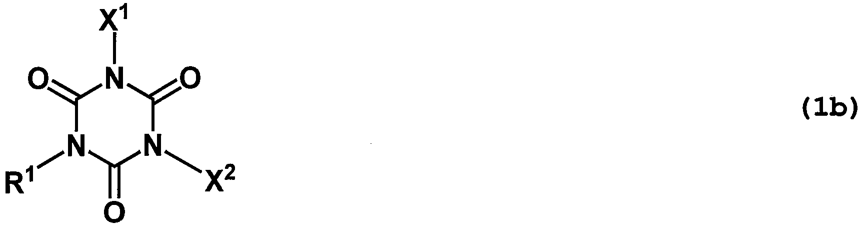 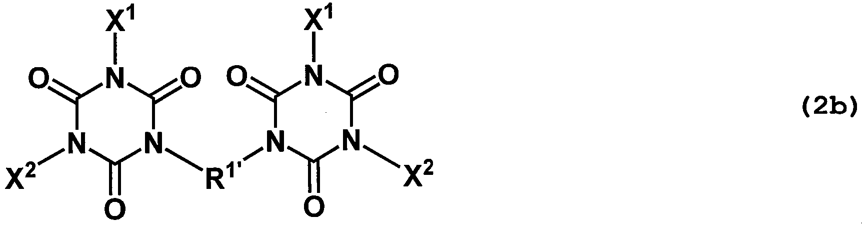
wherein
   R¹ is a monovalent organic group containing a fluoropolyether group;
   R¹' is a divalent organic group containing a fluoropolyether group;
   the fluoropolyether group is each independently at each occurrence a group represented by

      formula: - (OC₆F₁₂)ₘ₃₁-(OC₅F₁₀)ₘ₃₂-(OC₄F₈)ₘ₃₃-(OC₃X¹⁰₆)ₘ₃₄- (OC₂F₄)ₘ₃₅-(OCF₂)ₘ₃₆-
      wherein m31, m32, m33, m34, m35, and m36 are independently an integer of 0 or 1 or more;
      X¹⁰ is independently H, F, or Cl; and
      the occurrence order of the respective repeating units is not limited;
   X¹ is independently a silane-containing reactive crosslinking group;
   X² is independently a monovalent group; and
   in each of the formula (1b) or the formula (2b), at least one of X¹ and X² is a monovalent group containing a Si atom to which a hydroxyl group or a hydrolyzable group is bonded.
<5> The composition according to any one of <1> to <4>, wherein a content of units derived from the silane compound (A1) having a fluoropolyether group is 0.1% by mass or more in the organic silane compound (A).
<6> The composition according to any one of <1> to <5>, wherein the silicone compound (A2) containing an epoxy group and a hydrolyzable silyl group comprises a compound represented by formula (3):

   **Mₐ₁D_{b1}T_{c1}Q_{d1}** (3)

   wherein
   M is a monovalent group represented by (R^{s1}₃SiO_{1/2});
   D is a divalent group represented by (R^{s1}₂SiO_{2/2});
   T is a trivalent group represented by (R^{s1}SiO_{3/2});
   Q is a tetravalent group represented by (SiO_{4/2});
   R^{s1} is each independently at each occurrence a hydrogen atom, a hydroxyl group, a hydrolyzable group, -X^{s1}-NR^{s2}₂, -X^{s1}-COOH, a group having an epoxy ring, a monovalent organic group, or -X^{s1}-SiR^{s3}ₙ₁₁R^{s4}₃₋ₙ₁₁;
   R^{s2} is each independently at each occurrence a hydrogen atom or a C₁₋₂₀ alkyl group;
   R^{s3} is each independently at each occurrence a hydroxyl group or a hydrolyzable group;
   R^{s4} is each independently at each occurrence a C₁₋₂₀ alkyl group;
   X^{s1} is each independently at each occurrence a divalent organic group;
   n11 is an integer of 1 to 3;
   al is an integer of 3 to 60;
   b1 is an integer of 10 to 1,100;
   c1 is an integer of 0 to 30;
   d1 is an integer of 0 to 15; and
   c1 + d1 is 1 or more,
   provided that at least one R^{s1} contains an epoxy ring and at least one other R^{s1} is a hydroxyl group or a hydrolyzable group.
<7> The composition according to any one of <1> to <6>, wherein the composition further comprises a crosslinking agent (B), and the cross-linking agent (B) comprises a compound having two or more groups capable of reacting with at least one of an epoxy group and a hydrolyzable silyl group.
<8> The composition according to <7>, wherein in the cross-linking agent (B), the groups capable of reacting with at least one of an epoxy group and a hydrolyzable silyl group are at least one selected from the group consisting of -OR^{b5}, a carboxy group, -NR^{b5}₂, and - SiR^{b6}ₙ₆R^{b7}₃₋ₙ₆, wherein R^{b5} is each independently at each occurrence a hydrogen atom or a C₁₋₂₀ alkyl group; R^{b6} is each independently at each occurrence a hydroxyl group or a hydrolyzable group; R^{b7} is each independently at each occurrence a C₁₋₂₀ alkyl group; and n6 is an integer of 1 to 3.
<9> The composition according to <7> or <8>, wherein the cross-linking agent (B) is 0.1 parts by mass or more and 30 parts by mass or less with respect to 100 parts by mass of the organic silane compound (A).
<10> The composition according to any one of <1> to <9>, further comprising a catalyst (C).
<11> The composition according to any one of <1> to <10>, wherein the composition is a two-component curable composition comprising a main agent (I) and a curing agent (II),
   the main agent (I) comprises the organic silane compound (A),
   the curing agent (II) comprises a cross-linking agent (B), and
   the cross-linking agent comprises a compound having two or more groups capable of reacting with at least one of an epoxy group and a hydrolyzable silyl group.
<12> An article comprising:
   a substrate; and
   a film provided on the substrate and formed from the composition according to any one of <1> to <11>.
<13> The article according to <12>, wherein a water contact angle of the film is 100° or more.
<14> The article according to <12> or <13>, wherein a haze of the film is 1 or less.
<15> The article according to any one of <12> to <14>, wherein an icing property index of the film is 650 kPa or less, as evaluated by the following method:
   <method for evaluating icing property index>
   the film is formed on a stainless steel substrate, and a bottomless cell with an inner base area of 110 mm² is arranged on the film such that the film and a bottom of the cell are in contact with each other; next, 0.5 mL of water is placed in the cell, the water is brought into contact with the film, and the stainless steel substrate is cooled to -32°C to freeze the water in the cell; and a load is applied to the cell in a direction parallel to a film surface, the cell is moved at a speed of 10 mm/min, and a load at which ice begins to move is used as the icing property index.

### Advantageous Effects

The composition of the present disclosure provides a film that achieves both anti-icing performance and transparency, and preferably, a composition further capable of forming a film that also has excellent weather resistance. The present disclosure further provides an article having such a film.

### Description of Embodiments

The term "hydrolyzable silyl group", as used herein, represents a Si atom to which a hydroxyl group or a hydrolyzable group is bonded.

The term "hydrolyzable group", as used herein, refers to a group that can undergo a hydrolysis reaction, namely, refers to a group that can be removed from a main backbone of the compound by a hydrolysis reaction. Examples of the hydrolyzable group include -OR^{j}, - OCOR^{j}, -O-N=CR^{j}₂, -NR^{j}₂, -NHR^{j}, -NCO, and halogen (in these formulae, R^{j} represents a substituted or unsubstituted C₁₋₄ alkyl group), and it is preferably -OR^{j} (that is, an alkoxy group). Examples of R^{j} include unsubstituted alkyl groups such as a methyl group, an ethyl group, a propyl group, an isopropyl group, a n-butyl group, and an isobutyl group; and substituted alkyl groups such as a chloromethyl group. Among such groups, an alkyl group, in particular an unsubstituted alkyl group, is preferred, and a methyl group or an ethyl group is more preferred. The hydroxyl group in the hydrolyzable silyl group is not limited, and may be generated by hydrolysis of a hydrolyzable group.

The term "organic group", as used herein, refers to a monovalent group containing carbon. The organic group may be a hydrocarbon group or a derivative thereof, unless otherwise specified. The derivative of a hydrocarbon group refers to a group that has one or more of N, O, S, Si, amide, sulfonyl, siloxane, carbonyl, carbonyloxy, and the like at the terminal or in the molecular chain of the hydrocarbon group. The simple term "organic group" refers to a monovalent organic group. The term "divalent organic group" refers to a divalent group containing carbon. The divalent organic group may be, but is not limited to, a divalent group obtained by further removing one hydrogen atom from an organic group.

The term "hydrocarbon group", as used herein, refers to a group that contains carbon and hydrogen and that is obtained by removing one hydrogen atom from a hydrocarbon. The hydrocarbon group is not limited, and examples thereof include a C₁₋₂₀ hydrocarbon group optionally substituted with one or more substituents, such as an aliphatic hydrocarbon group and an aromatic hydrocarbon group. The above "aliphatic hydrocarbon group" may be either linear, branched, or cyclic, and may be either saturated or unsaturated. The hydrocarbon group may contain one or more ring structures.

Each substituent of the "hydrocarbon group", as used herein, is not limited, and examples thereof include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group, each of which is optionally substituted with one or more halogen atoms.

As used herein, unless otherwise specified, examples of the "alkyl group" include C₁₋₁₂ (preferably C₁₋₆, more preferably C₁₋₃, and still more preferably C₁) alkyl groups (such as a methyl group, an ethyl group, a propyl group, and an isopropyl group). Such an "alkyl group" may be linear or branched, but is preferably linear. Furthermore, the "alkyl group" may contain a functional group.

Hereinafter, a composition of the present disclosure will be described.

The composition of the present disclosure comprises
an organic silane compound (A),
wherein the organic silane compound (A) comprises a reaction product (A3) between a silane compound (A1) having a fluoropolyether group and a silicone compound (A2) having an epoxy group and a hydrolyzable silyl group, and
wherein the silane compound (A1) having a fluoropolyether group differs from the silicone compound (A2) having an epoxy group and a hydrolyzable silyl group.

This composition provides a film that achieves both anti-icing performance and transparency.

The composition of the present disclosure may further comprise a cross-linking agent (B) and may further comprise a catalyst (C).

### <Organic silane compound (A)>

The organic silane compound (A) is a compound having at least a Si atom to which an organic group is bonded, and comprises a reaction product (A3) between a silane compound (A1) having a fluoropolyether group and a hydrolyzable silyl group (hereinafter, also referred to as "fluoropolyether group-containing silane compound (A1)") and a silicone compound (A2) having an epoxy group and a hydrolyzable silyl group (hereinafter, also referred to as "epoxy group-containing silicone compound (A2)").

In one embodiment, the reaction product (A3) may be a reaction product in which the hydrolyzable silyl group of the fluoropolyether group-containing silane compound (A1) has reacted with the hydrolyzable silyl group of the epoxy group-containing silicone compound (A2).

In one embodiment, the organic silane compound (A) preferably has a hydrolyzable silyl group.

The fluoropolyether group-containing silane compound (A1) differs from the epoxy group-containing silicone compound (A2). In one embodiment, the fluoropolyether group-containing silane compound (A1) is preferably free from an epoxy group. In another embodiment, the epoxy group-containing silicone compound (A2) is preferably free from a fluoropolyether group (for example, the group represented by PFPE, described later), and more preferably free from a fluorine atom.

In the reaction product (A3), units derived from the fluoropolyether group-containing silane compound (A1) can be preferably 5 parts by mass or more and 100 parts by mass or less, more preferably 10 parts by mass or more and 70 parts by mass or less, and still more preferably 20 parts by mass or more and 60 parts by mass or less, with respect to 100 parts by mass of units derived from the epoxy group-containing silicone compound (A2).

The organic silane compound (A) may further comprise, in addition to the reaction product (A3) of the fluoropolyether group-containing silane compound (A1) and the epoxy group-containing silicone compound (A2), the epoxy group-containing silicone compound (A2). This can result in good adhesion between the composition of the present disclosure and the substrate and miscibility with solvents and other materials.

In the organic silane compound (A), the content of units derived from the fluoropolyether group-containing silane compound (A1) can be preferably 0.1% by mass or more, more preferably 0.1% by mass or more and 2% by mass or less, and still more preferably 0.5% by mass or more and 1.7% by mass or less.

In a preferred embodiment, the fluoropolyether group-containing silane compound (A1) preferably comprises at least one compound represented by the following formula (1) or (2):

**R^{F1}_{α}-X^{A}-R^{Si}_{β}** (1)

**R^{Si}**_{γ}**-X^{A}-R^{F2}-X^{A}-R^{Si}**_{γ} (2)

wherein
R^{F1} is each independently at each occurrence Rf¹-R^{F}-O_{q}-;
R^{F2} is -Rf²ₚ-R^{F}-O_{q}-;
Rf¹ is each independently at each occurrence a C₁₋₁₆ alkyl group optionally substituted with one or more fluorine atoms;
Rf² is a C₁₋₆ alkylene group optionally substituted with one or more fluorine atoms;
R^{F} is each independently at each occurrence a divalent fluoropolyether group;
p is 0 or 1;
q is each independently at each occurrence 0 or 1;
R^{Si} is each independently at each occurrence a monovalent group containing a Si atom to which a hydroxyl group, a hydrolyzable group, a hydrogen atom, or a monovalent organic group is bonded;
at least one R^{Si} is a monovalent group containing a Si atom to which a hydroxyl group or a hydrolyzable group is bonded;
X^{A} is each independently a single bond or a di- to decavalent organic group;
α is an integer of 1 to 9;
β is an integer of 1 to 9; and
γ is each independently an integer of 1 to 9.

In the formula (1), R^{F1} is each independently at each occurrence R^{f1}-R^{F}-O_{q}-.

In the formula (2), R^{F2} is -Rf²ₚ-R^{F}-O_{q}-.

In the formula, Rf¹ is each independently at each occurrence a C₁₋₁₆ alkyl group optionally substituted with one or more fluorine atoms.

In the C₁₋₁₆ alkyl group optionally substituted with one or more fluorine atoms, the "C₁₋₁₆ alkyl group" may be linear or branched, and is preferably a linear or branched C₁₋₆ alkyl group, in particular linear or branched C₁₋₃ alkyl group, and more preferably a linear C₁₋₆ alkyl group, in particular linear C₁₋₃ alkyl group.

Rf¹ is preferably a C₁₋₁₆ alkyl group substituted with one or more fluorine atoms, more preferably a CF₂H-C₁₋₁₅ perfluoroalkylene group, and still more preferably a C₁₋₁₆ perfluoroalkyl group.

The C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically - CF₃, -CF₂CF₃, or -CF₂CF₂CF₃.

In the formula, Rf² is a C₁₋₆ alkylene group optionally substituted with one or more fluorine atoms.

In the C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

R^{f2} is preferably a C₁₋₆ alkylene group substituted with one or more fluorine atoms, more preferably a C₁₋₆ perfluoroalkylene group, and still more preferably a C₁₋₃ perfluoroalkylene group.

The C₁₋₆ perfluoroalkylene group may be linear or branched, and is preferably a linear or branched C₁₋₃ perfluoroalkylene group, more preferably a linear C₁₋₃ perfluoroalkylene group, and specifically -CF₂-, -CF₂CF₂-, or -CF₂CF₂CF₂-.

In the formula, p is 0 or 1. In one embodiment, p is 0. In another embodiment, p is 1.

In the formulae, q is each independently at each occurrence 0 or 1. In one embodiment, q is 0. In another embodiment, q is 1.

In the formulae (1) and (2), R^{F} is each independently at each occurrence a divalent fluoropolyether group.

R^{F} is preferably a group represented by the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is each independently at each occurrence a hydrogen atom, a fluorine atom, or a chlorine atom;
a, b, c, d, e, and f are each independently an integer of 0 to 200, and the sum of a, b, c, d, e, and f is 1 or more; and the occurrence order of the respective repeating units enclosed in parentheses provided with a, b, c, d, e, or f is not limited in the formula, provided that when all R^{Fa} groups are hydrogen atoms or chlorine atoms, at least one of a, b, c, e, and f is 1 or more
   (hereinafter, also referred to as group represented by "PFPE").

R^{Fa} is preferably a hydrogen atom or a fluorine atom, and more preferably a fluorine atom. However, when all R^{Fa} groups are hydrogen atoms or chlorine atoms, at least one of a, b, c, e, and f is 1 or more.

Preferably, a, b, c, d, e, and f may be each independently an integer of 0 to 100.

The sum of a, b, c, d, e, and f is preferably 5 or more, more preferably 10 or more, and it may be, for example, 15 or more or 20 or more. The sum of a, b, c, d, e, and f is preferably 200 or less, more preferably 100 or less, still more preferably 60 or less, and it may be, for example, 50 or less or 30 or less.

These repeating units may be linear or branched, or they may contain a ring structure. For example, -(OC₆F₁₂)- may be -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, -(OCF₂CF₂CF(CF₃)CF₂CF₂)-, - (OCF₂CF₂CF₂CF(CF₃)CF₂)-, -(OCF₂CF₂CF₂CF₂CF(CF₃))-, or the like. -(OC₅F₁₀)- may be - (OCF₂CF₂CF₂CF₂CF₂)-, -(OCF(CF₃)CF₂CF₂CF₂)-, -(OCF₂CF(CF₃)CF₂CF₂)-, - (OCF₂CF₂CF(CF₃)CF₂)-, -(OCF₂CF₂CF₂CF(CF₃))-, or the like. -(OC₄F₈)- may be any of - (OCF₂CF₂CF₂CF₂)-, -(OCF(CF₃)CF₂CF₂)-, -(OCF₂CF(CF₃)CF₂)-, -(OCF₂CF₂CF(CF₃))-, - (OC(CF₃)₂CF₂)-, -(OCF₂C(CF₃)₂)-, -(OCF(CF₃)CF(CF₃))-, -(OCF(C₂F₅)CF₂)-, and - (OCF₂CF(C₂F₅))-. -(OC₃F₆)- (that is, in the above formula, R^{Fa} is a fluorine atom) may be any of -(OCF₂CF₂CF₂)-, -(OCF(CF₃)CF₂)-, and -(OCF₂CF(CF₃))-. -(OC₂F₄)- may be any of -(OCF₂CF₂)- and -(OCF(CF₃))-.

The ring structure may be any of the following 3-membered ring, 4-membered rings, 5-membered rings, and 6-membered rings: 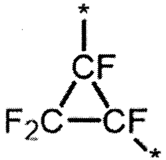 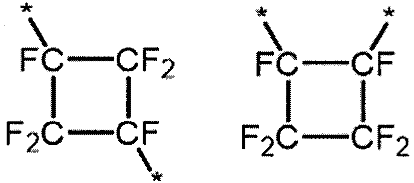 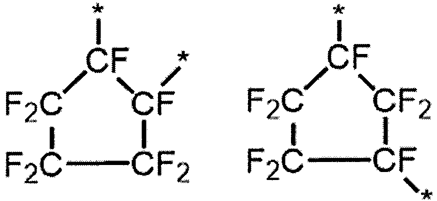 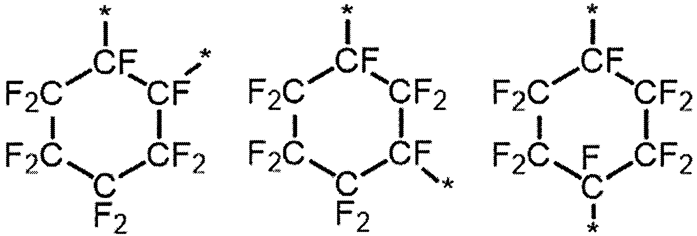 wherein * represents a bond position.

The ring structure may be preferably a 4-membered ring, a 5-membered ring, or a 6-membered ring, and more preferably a 4-membered ring or a 6-membered ring.

The repeating units having a ring structure may be preferably any of the following units: 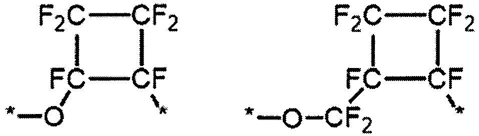 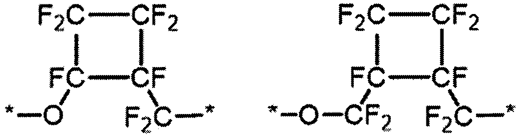 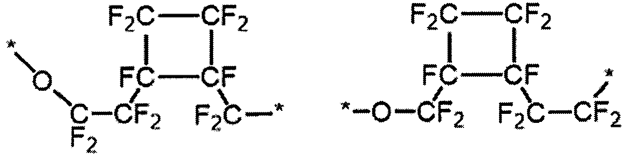 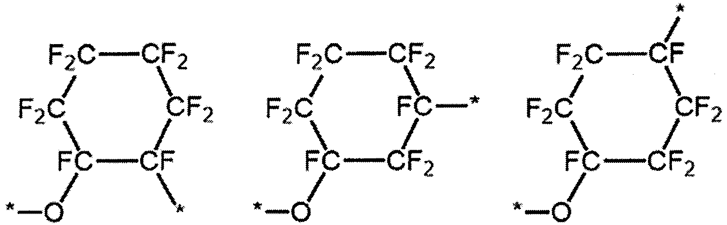 wherein * represents a bond position.

In one embodiment, the repeating units are linear. When the repeating units are linear, the surface lubricity, abrasion durability, and the like of the film (surface-treating layer) can be improved.

In one embodiment, the repeating units are branched. When the repeating units are branched, the dynamic friction coefficient of the film (surface-treating layer) can be increased.

In one embodiment, R^{F} is each independently at each occurrence a group represented by any of the following formulae (fl) to (f6):

-(OC₃F₆)_{d}-(OC₂F₄)ₑ- (f1)

wherein d is an integer of 1 to 200 and e is 0 or 1,

-(OC₄F₈)_{c}-(OC₃R^{Fa}₆)_{d}-(OC₂F₄)ₑ-(OCF₂)_{f}- (f2)
wherein R^{Fa} is each independently at each occurrence a hydrogen atom, a fluorine atom, or a chlorine atom, preferably a fluorine atom, c and d are each independently an integer of 0 or more and 30 or less, and e and f are each independently an integer of 1 or more and 200 or less;
the sum of c, d, e, and f is 2 or more; and
the occurrence order of the respective repeating units enclosed in parentheses provided with the subscript c, d, e, or f is not limited in the formula,

   -(R⁶-R⁷)_{g}- (f3)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups; and
g is an integer of 2 to 100,

   -(R⁶-R⁷)_{g}-R^{r}-(R^{7'}-R^{6'})_{g'}- (f4)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
R^{6'} is OCF₂ or OC₂F₄;
R^{7'} is a group selected from OC₂F₄, OC₃F₆, OC₄F₈, OC₅F₁₀, and OC₆F₁₂, or is a combination of two or three groups independently selected from these groups;
g is an integer of 2 to 100;
g' is an integer of 2 to 100; and
R^{r} is any of the following:

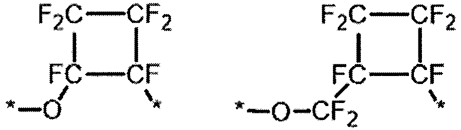

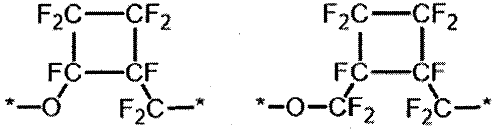

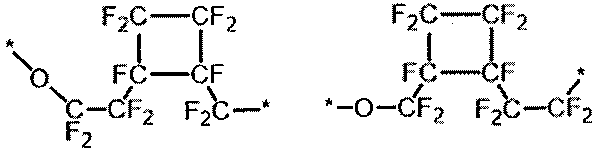

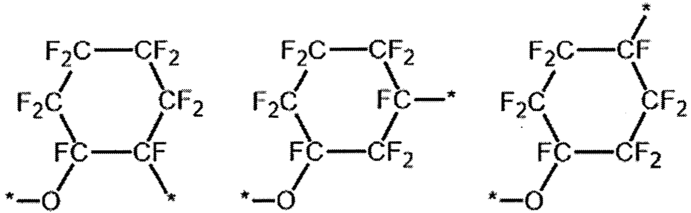

wherein * represents a bond position,

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein e is an integer of 1 or more and 200 or less; a, b, c, d, and f are each independently an integer of 0 or more and 200 or less; and the occurrence order of the respective repeating units enclosed in parentheses provided with a, b, c, d, e, or f is not limited in the formula, and

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
wherein f is an integer of 1 or more and 200 or less; a, b, c, d, and e are each independently an integer of 0 or more and 200 or less; and the occurrence order of the respective repeating units enclosed in parentheses provided with a, b, c, d, e, or f is not limited in the formula.

In the formula (fl), d is preferably 5 to 200, more preferably 10 to 100, and still more preferably 15 to 50, and is, for example, an integer of 25 to 35. OC₃F₆ in the formula (f1) is preferably (OCF₂CF₂CF₂), (OCF(CF₃)CF₂), or (OCF₂CF(CF₃)), and more preferably (OCF₂CF₂CF₂). OC₂F₄ in the formula (f1) is preferably (OCF₂CF₂) or (OCF(CF₃)), and more preferably (OCF₂CF₂). In one embodiment, e is 0. In another embodiment, e is 1.

In the formula (f2), e and f are each independently an integer of preferably 5 to 200, and more preferably 10 to 200. The sum of c, d, e, and f is preferably 5 or more, more preferably 10 or more, and it may be, for example, 15 or more or 20 or more. In one embodiment, the formula (f2) is preferably a group represented by -(OC₄F₈)_{c}-(OC₃F₆)_{d}-(OC₂F₄)ₑ-(OCF₂)_{f}-, and more preferably a group represented by -(OCF₂CF₂CF₂CF₂)_{c}-(OCF₂CF₂CF₂)_{d}-(OCF₂CF₂)ₑ-(OCF₂)_{f}-. In another embodiment, the formula (f2) may be a group represented by -(OC₂F₄)ₑ-(OCF₂)_{f}-. In still another embodiment, the formula (f2) may be -(OC₄F₈)_{c}-(OCF₂CF₂(CR^{Fa})₂)_{d10}-(OCF₂CF(CF₃))_{d11}-(OCF₂CF₂)ₑ-(OCF₂)_{f}-. d10 and d11 are each independently an integer of 0 to 200, and is an integer of preferably 5 to 200, and more preferably 10 to 200. However, the sum of d10 and d11 is 0 to 200, preferably 5 to 200, and more preferably 10 to 200.

In the formula (f3), R⁶ is preferably OC₂F₄, and in another embodiment, it is OCF₂. In (f3), R⁷ is preferably a group selected from OC₂F₄, OC₃F₆, and OC₄F₈, or a combination of two or three groups independently selected from these groups, and more preferably a group selected from OC₃F₆ and OC₄F₈. The combination of two or three groups independently selected from OC₂F₄, OC₃F₆, and OC₄F₈ is not limited, and examples thereof include - OC₂F₄OC₃F₆-, -OC₂F₄OC₄F₈-, -OC₃F₆OC₂F₄-, -OC₃F₆OC₃F₆-, -OC₃F₆OC₄F₈-, -OC₄F₈OC₄F₈-, -OC₄F₈OC₃F₆-, -OC₄F₈OC₂F₄-, -OC₂F₄OC₂F₄OC₃F₆-, -OC₂F₄OC₂F₄OC₄F₈-, - OC₂F₄OC₃F₆OC₂F₄-, -OC₂F₄OC₃F₆OC₃F₆-, -OC₂F₄OC₄F₈OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄-. In the formula (f3), g is an integer of preferably 3 or more, and more preferably 5 or more. g is preferably an integer of 50 or less. In the formula (f3), OC₂F₄, OC₃F₆, OC₄F₈, OC₅F₁₀, and OC₆F₁₂ may be either linear or branched, and are preferably linear. In this embodiment, the formula (f3) is preferably -(OC₂F₄-OC₃F₆)_{g}- or -(OC₂F₄-OC₄F₈)_{g}-.

In the formula (f4), R⁶, R⁷, and g have the same definition as described for the formula (f3) and have the same embodiments. R^{6'}, R^{7'}, and g' have the same definition as R⁶, R⁷, and g described in the formula (f3), respectively, and have the same embodiments. R^{r} is preferably any of the following: 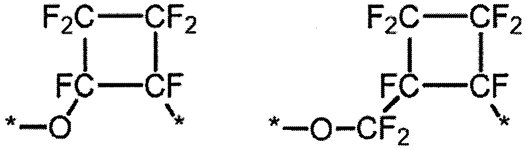 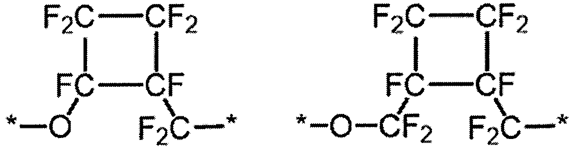 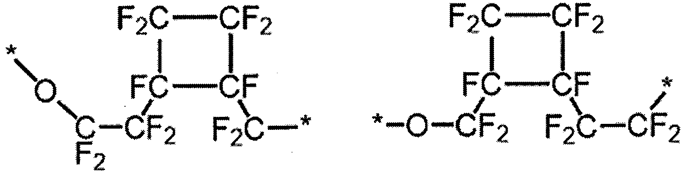 wherein * represents a bond position, and
more preferably 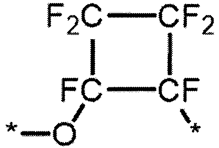 wherein * represents a bond position.

In the formula (f5), e is an integer of preferably 1 or more and 100 or less, and more preferably 5 or more and 100 or less. The sum of a, b, c, d, e, and f is preferably 5 or more, more preferably 10 or more, and it is, for example, 10 or more and 100 or less.

In the formula (f6), f is an integer of preferably 1 or more and 100 or less, and more preferably 5 or more and 100 or less. The sum of a, b, c, d, e, and f is preferably 5 or more, more preferably 10 or more, and it is, for example, 10 or more and 100 or less.

In one embodiment, R^{F} is a group represented by the formula (fl).

In one embodiment, R^{F} is a group represented by the formula (f2).

In one embodiment, R^{F} is a group represented by the formula (f3).

In one embodiment, R^{F} is a group represented by the formula (f4).

In one embodiment, R^{F} is a group represented by the formula (f5).

In R^{F}, the ratio of e to f (hereinafter, referred to as "e/f ratio") is 0.1 to 10, preferably 0.2 to 5, more preferably 0.2 to 2, still more preferably 0.2 to 1.5, and even more preferably 0.2 to 0.85. With an e/f ratio of 10 or less, the lubricity, abrasion durability, and chemical resistance of a film (surface-treating layer) obtained from the compound are further improved. The lower the e/f ratio is, the more improved the lubricity and the abrasion durability of the film are. On the other hand, with an e/f ratio of 0.1 or more, the stability of the compound can be further enhanced. The larger the e/f ratio is, the more improved the stability of the compound is.

In the fluoropolyether group-containing silane compound, the number average molecular weight of the R^{F1} and R^{F2} moieties is, but is not limited to, for example, 500 to 30,000, preferably 1,500 to 30,000, and more preferably 2,000 to 10,000. Herein, the number average molecular weight of R^{F1} and R^{F2} is a value obtained by ¹⁹F-NMR measurement.

In another embodiment, the number average molecular weight of the R^{F1} and R^{F2} moieties is 500 to 30,000, preferably 1,000 to 20,000, more preferably 2,000 to 15,000, and even more preferably 2,000 to 10,000, and may be, for example, 3,000 to 6,000.

In another embodiment, the number average molecular weight of the R^{F1} and R^{F2} moieties may be 4,000 to 30,000, preferably 5,000 to 10,000, and more preferably 6,000 to 10,000.

In the formulae (1) and (2), R^{Si} is each independently at each occurrence a monovalent group containing a Si atom to which a hydroxyl group, a hydrolyzable group, a hydrogen atom, or a monovalent organic group is bonded, and at least one R^{Si} is a monovalent group containing a Si atom to which a hydroxyl group or a hydrolyzable group is bonded. R^{Si} contributes to adhesion to the substrate and may chemically react with the material of the substrate.

In a preferred embodiment, R^{Si} is a monovalent group containing a Si atom to which a hydroxyl group or a hydrolyzable group is bonded.

In a preferred embodiment, R^{Si} is a group represented by the following formula (S1), (S2), (S3), or (S4):

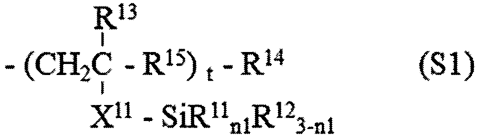

- SiR¹¹ₙ₁R¹²₃₋ₙ₁ (S2)

- SiR^{a1}ₖ₁R^{b1}ₗ₁R^{c1}ₘ₁ (S3)

- CR^{d1}ₖ₂R^{e1}ₗ₂R^{f1}ₘ₂ (S4)

- NR^{g1}R^{h1} (S5)

In the formulae, R¹¹ is each independently at each occurrence a hydroxyl group or a hydrolyzable group.

R¹¹ is preferably, each independently at each occurrence, a hydrolyzable group.

Preferably, R¹¹ is each independently at each occurrence -OR^{j}, -OCOR^{j}, -ON=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

In the formulae, R¹² is each independently at each occurrence a hydrogen atom or a monovalent organic group. Such a monovalent organic group is a monovalent organic group excluding the above hydrolyzable group.

In R¹², the monovalent organic group is preferably a C₁₋₂₀ alkyl group, more preferably a C₁₋₆ alkyl group, and still more preferably a methyl group.

In the formulae, n1 is each independently an integer of 0 to 3 for each (SiR¹¹ₙ₁R¹²₃₋ₙ₁) unit. However, when R^{Si} is a group represented by the formula (S1) or (S2), the R^{Si} moiety at the terminal of the formulae (1) and (2) (hereinafter, also referred to simply as "terminal moiety" of the formulae (1) and (2)) has at least one (SiR¹¹ₙ₁R¹²₃₋ₙ₁) unit wherein n1 is 1 to 3. That is, in such terminal moieties, not all n1 are 0 at the same time. In other words, in the terminal moieties of the formula (1) and the formula (2), at least one Si atom to which a hydroxyl group or a hydrolyzable group is bonded is present.

n1 is each independently an integer of preferably 1 to 3, more preferably 2 to 3, and still more preferably 3 for each (SiR¹¹ₙ₁R¹²₃₋ₙ₁) unit.

In the formula, X¹¹ is each independently at each occurrence a single bond or a divalent organic group. Such a divalent organic group is preferably -R²⁸-Oₓ-R²⁹- (wherein R²⁸ and R²⁹ are each independently at each occurrence a single bond or a C₁₋₂₀ alkylene group, and x is 0 or 1). Such a C₁₋₂₀ alkylene group may be linear or branched, and is preferably linear. Such a C₁₋₂₀ alkylene group is preferably a C₁₋₁₀ alkylene group, more preferably a C₁₋₆ alkylene group, and still more preferably a C₁₋₃ alkylene group.

In one embodiment, X¹¹ is each independently at each occurrence a -C₁₋₆ alkylene-O-C₁₋₆ alkylene- or a -O-C₁₋₆ alkylene-.

In a preferred embodiment, X¹¹ is each independently at each occurrence a single bond or a linear C₁₋₆ alkylene group, preferably a single bond or a linear C₁₋₃ alkylene group, more preferably a single bond or a linear C₁₋₂ alkylene group, and still more preferably a linear C₁₋₂ alkylene group.

In the formula, R¹³ is each independently at each occurrence a hydrogen atom or a monovalent organic group. Such a monovalent organic group is preferably a C₁₋₂₀ alkyl group. Such a C₁₋₂₀ alkyl group may be linear or branched, but is preferably linear.

In a preferred embodiment, R¹³ is each independently at each occurrence a hydrogen atom or a linear C₁₋₆ alkyl group, preferably a hydrogen atom or a linear C₁₋₃ alkyl group, and preferably a hydrogen atom or a methyl group.

In the formula, t is each independently at each occurrence an integer of 2 or more.

In a preferred embodiment, t is each independently at each occurrence an integer of 2 to 10, and preferably an integer of 2 to 6.

In the formula, R¹⁴ is each independently at each occurrence a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferred embodiment, R¹⁴ is a hydrogen atom.

In the formula, R¹⁵ is each independently at each occurrence a single bond, an oxygen atom, a C₁₋₆ alkylene group, or a C₁₋₆ alkyleneoxy group.

In one embodiment, R¹⁵ is each independently at each occurrence an oxygen atom, a C₁₋₆ alkylene group, or a C₁₋₆ alkyleneoxy group.

In a preferred embodiment, R¹⁵ is a single bond.

In one embodiment, the formula (S1) is the following formula (S1-a): 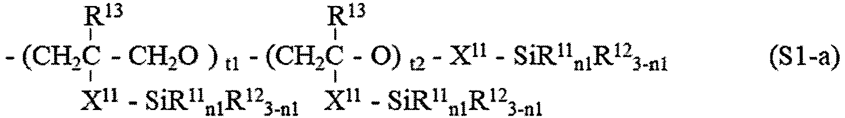 wherein
R¹¹, R¹², R¹³, X¹¹, and n1 have the same definition as described for the formula (S1);
t1 and t2 are, each independently at each occurrence, an integer of 1 or more, preferably an integer of 1 to 10, and more preferably an integer of 2 to 10, such as an integer of 1 to 5 or an integer of 2 to 5; and
the occurrence order of the respective repeating units enclosed in parentheses provided with t1 and t2 is not limited in the formula.

In a preferred embodiment, the formula (S1) is the following formula (S1-b): 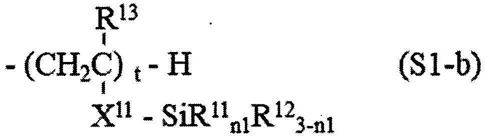 wherein R¹¹, R¹², R¹³, X¹¹, nl, and t have the same definition as described for the formula (S1).

In the formula, R^{a1} is each independently at each occurrence -Z¹-SiR²¹ₚ₁R²²_{q1}R²³ᵣ₁.

Z¹ is each independently at each occurrence an oxygen atom or a divalent organic group. The structure denoted as Z¹ hereinafter is bonded to (SiR²¹ₚ₁R²²_{q1}R²³ᵣ₁) on the right side.

In a preferred embodiment, Z¹ is a divalent organic group.

In a preferred embodiment, Z¹ does not include a group that forms a siloxane bond with the Si atom to which Z¹ is bonded. Preferably, in the formula (S3), (Si-Z¹-Si) does not contain a siloxane bond.

Z¹ is preferably a C₁₋₆ alkylene group, -(CH₂)_{z1}-O-(CH₂)_{z2}- (wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}- (wherein z3 is an integer of 0 to 6, such as an integer of 1 to 6, and z4 is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z¹ is a C₁₋₆ alkylene group or -(CH₂)_{z3}-phenylene-(CH₂)_{z4}-, and preferably -phenylene-(CH₂)_{z4}-. When Z¹ is such a group, light resistance, in particular ultraviolet resistance, can be further enhanced.

In another preferred embodiment, Z¹ is a C₁₋₃ alkylene group. In one embodiment, Z¹ may be -CH₂CH₂CH₂-. In another embodiment, Z¹ may be -CH₂CH₂-.

R²¹ is each independently at each occurrence -Z^{1'}-SiR^{21'}_{p1'}R^{22'}_{q1'}R^{23'}_{r1'}.

Z^{1'} is each independently at each occurrence an oxygen atom or a divalent organic group. The structure denoted as Z^{1'} hereinafter is bonded to (SiR^{21'}_{p1'}R^{22'}_{q1'}R^{23'}_{r1'}) on the right side.

In a preferred embodiment, Z^{1'} is a divalent organic group.

In a preferred embodiment, Z^{1'} does not include a group that forms a siloxane bond with the Si atom to which Z^{1'} is bonded. Preferably, in the formula (S3), (Si-Z^{1'}-Si) does not contain a siloxane bond.

Z^{1'} is preferably a C₁₋₆ alkylene group, -(CH₂)_{z1'}-O-(CH₂)_{z2'}- (wherein z1' is an integer of 0 to 6, such as an integer of 1 to 6, and z2' is an integer of 0 to 6, such as an integer of 1 to 6), or -(CH₂)_{z3'}-phenylene-(CH₂)_{z4'}- (wherein z3' is an integer of 0 to 6, such as an integer of 1 to 6, and z4' is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{1'} is a C₁₋₆ alkylene group or -(CH₂)_{z3'}-phenylene-(CH₂)_{z4'}-, and preferably -phenylene-(CH₂)_{z4'}-. When Z^{1'} is such a group, light resistance, in particular ultraviolet resistance, can be further enhanced.

In another preferred embodiment, Z^{1'} is a C₁₋₃ alkylene group. In one embodiment, Z^{1'} may be -CH₂CH₂CH₂-. In another embodiment, Z^{1'} may be -CH₂CH₂-.

R^{21'} is each independently at each occurrence -Z^{1"}-SiR^{22"}_{q1"}R^{23"}_{r1"}.

Z^{1"} is each independently at each occurrence an oxygen atom or a divalent organic group. The structure denoted as Z^{1"} hereinafter is bonded to (SiR^{22"}_{q1"}R^{23"}_{r1"}) on the right side.

In a preferred embodiment, Z^{1"} is a divalent organic group.

In a preferred embodiment, Z^{1"} does not include a group that forms a siloxane bond with the Si atom to which Z^{1"} is bonded. Preferably, in the formula (S3), (Si-Z^{1"}-Si) does not contain a siloxane bond.

Z^{1"} is preferably a C₁₋₆ alkylene group, -(CH₂)_{z1"}-O-(CH₂)_{z2"}- (wherein z1" is an integer of 0 to 6, such as an integer of 1 to 6, and z2" is an integer of 0 to 6, such as an integer of 1 to 6), or -(CH₂)_{z3"}-phenylene-(CH₂)_{z4"}- (wherein z3" is an integer of 0 to 6, such as an integer of 1 to 6, and z4" is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{1"} is a C₁₋₆ alkylene group or -(CH₂)_{z3"}-phenylene-(CH₂)_{z4"}-, and preferably -phenylene-(CH₂)_{z4"}-. When Z^{1"} is such a group, light resistance, in particular ultraviolet resistance, can be further enhanced.

In another preferred embodiment, Z^{1"} is a C₁₋₃ alkylene group. In one embodiment, Z^{1"} may be -CH₂CH₂CH₂-. In another embodiment, Z^{1"} may be -CH₂CH₂-.

R^{22"} is each independently at each occurrence a hydroxyl group or a hydrolyzable group.

R^{22"} is preferably, each independently at each occurrence, a hydrolyzable group.

Preferably, R^{22"} is each independently at each occurrence -OR^{j}, -OCOR^{j}, -ON=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

R^{23"} is each independently at each occurrence a hydrogen atom or a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and still more preferably a methyl group.

q1" is each independently at each occurrence an integer of 0 to 3, and r1" is each independently at each occurrence an integer of 0 to 3. The total of q1" and r1" is 3 in the (SiR^{22"}_{q1"}R^{23"}_{r1"}) unit.

q1" is each independently an integer of preferably 1 to 3, more preferably 2 to 3, and still more preferably 3 for each (SiR^{22"}_{q1"}R^{23"}_{r1"}) unit.

R^{22'} is each independently at each occurrence a hydroxyl group or a hydrolyzable group.

R^{22'} is preferably, each independently at each occurrence, a hydrolyzable group.

Preferably, R^{22'} is each independently at each occurrence -OR^{j}, -OCOR^{j}, -ON=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

R^{23'} is each independently at each occurrence a hydrogen atom or a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and still more preferably a methyl group.

p1' is each independently at each occurrence an integer 0 to 3, q1' is each independently at each occurrence an integer of 0 to 3, and r1' is each independently at each occurrence an integer of 0 to 3. The total of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferred embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and more preferably 3 for each (SiR^{21'}_{p1'}R^{22'}_{q1'}R^{23'}_{r1'}) unit.

R²² is each independently at each occurrence a hydroxyl group or a hydrolyzable group.

R²² is preferably, each independently at each occurrence, a hydrolyzable group.

Preferably, R²² is each independently at each occurrence -OR^{j}, -OCOR^{j}, -ON=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

R²³ is each independently at each occurrence a hydrogen atom or a monovalent organic group. Such a monovalent organic group is a monovalent organic group excluding the above hydrolyzable group.

In R²³, the monovalent organic group is preferably a C₁₋₂₀ alkyl group, more preferably a C₁₋₆ alkyl group, and still more preferably a methyl group.

pl is each independently at each occurrence an integer of 0 to 3, q1 is each independently at each occurrence an integer of 0 to 3, and r1 is each independently at each occurrence an integer of 0 to 3. The total of p1, ql, and rl is 3 in the (SiR²¹ₚ₁R²²_{q1}R²³ᵣ₁) unit.

In one embodiment, pl is 0.

In one embodiment, pl may be each independently an integer of 1 to 3, an integer of 2 to 3, or 3 for each (SiR²¹ₚ₁R²²_{q1}R²³ᵣ₁) unit. In a preferred embodiment, p1 is 3.

In one embodiment, ql is each independently an integer of 1 to 3, preferably an integer of 2 to 3, and more preferably 3 for each (SiR²¹ₚ₁R²²_{q1}R²³ᵣ₁) unit.

In one embodiment, pl is 0, and ql is each independently an integer of 1 to 3, preferably an integer of 2 to 3, and still more preferably 3 for each (SiR²¹ₚ₁R²²_{q1}R²³ᵣ₁) unit.

In the formula, R^{b1} is each independently at each occurrence a hydroxyl group or a hydrolyzable group.

R^{b1} is preferably, each independently at each occurrence, a hydrolyzable group.

Preferably, R^{b1} is each independently at each occurrence -OR^{j}, -OCOR^{j}, -ON=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

In the formula, R^{c1} is each independently at each occurrence a hydrogen atom or a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and still more preferably a methyl group.

k1 is each independently at each occurrence an integer of 0 to 3, l1 is each independently at each occurrence an integer of 0 to 3, and m1 is each independently at each occurrence an integer of 0 to 3. The total of k1, 11, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferred embodiment, k1 is 3.

In the formulae (1) and (2), when R^{Si} is a group represented by the formula (S3), preferably, at least two Si atoms to which a hydroxyl group or a hydrolyzable group is bonded are present in the terminal moieties of the formulae (1) and (2).

In a preferred embodiment, the group represented by the formula (S3) has any one of -Z¹-SiR²²_{q1}R²³ᵣ₁ (wherein ql is an integer of 1 to 3, preferably 2 or 3, and more preferably 3, and rl is an integer of 0 to 2), -Z^{1'}-SiR^{22'}_{q1'}R^{23'}_{r1'} (wherein q1' is an integer of 1 to 3, preferably 2 or 3, and more preferably 3, and rl' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} have the same definition as described above.

In a preferred embodiment, when R^{21'} is present in the formula (S3), q1" is an integer of 1 to 3, preferably 2 or 3, and more preferably 3 in at least one, preferably all of R^{21'} groups.

In a preferred embodiment, when R²¹ is present in the formula (S3), p1' is 0, and q1' is an integer of 1 to 3, preferably 2 or 3, and more preferably 3 in at least one, preferably all of R²¹ groups.

In a preferred embodiment, when R^{a1} is present in the formula (S3), p1 is 0, and q1 is an integer of 1 to 3, preferably 2 or 3, and more preferably 3 in at least one, preferably all of R^{a1} groups.

In a preferred embodiment, in the formula (S3), k1 is 2 or 3, preferably 3, p1 is 0, and q1 is 2 or 3, preferably 3.

R^{d1} is each independently at each occurrence -Z²-CR³¹ₚ₂R³²_{q2}R³³ᵣ₂.

Z² is each independently at each occurrence a single bond, an oxygen atom, or a divalent organic group. The structure denoted as Z² hereinafter is bonded to (CR³¹ₚ₂R³²_{q2}R³³ᵣ₂) on the right side.

In a preferred embodiment, Z² is a divalent organic group.

Z² is preferably a C₁₋₆ alkylene group, -(CH₂)_{z5}-O-(CH₂)_{z6}- (wherein z5 is an integer of 0 to 6, such as an integer of 1 to 6, and z6 is an integer of 0 to 6, such as an integer of 1 to 6), or -(CH₂)_{z7}-phenylene-(CH₂)_{z8}- (wherein z7 is an integer of 0 to 6, such as an integer of 1 to 6, and z8 is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z² is a C₁₋₆ alkylene group or -(CH₂)_{z7}-phenylene-(CH₂)_{z8}-, and preferably -phenylene-(CH₂)_{z8}-. When Z² is such a group, light resistance, in particular ultraviolet resistance, can be further enhanced.

In another preferred embodiment, Z² is a C₁₋₃ alkylene group. In one embodiment, Z² may be -CH₂CH₂CH₂-. In another embodiment, Z² may be -CH₂CH₂-.

R³¹ is each independently at each occurrence -Z^{2'}-CR^{32'}_{q2'}R^{33'}_{r2'}.

Z^{2'} is each independently at each occurrence a single bond, an oxygen atom, or a divalent organic group. The structure denoted as Z^{2'} hereinafter is bonded to (CR^{32'}_{q2'}R^{33'}_{r2'}) on the right side.

Z^{2'} is preferably a C₁₋₆ alkylene group, -(CH₂)_{z5'}-O-(CH₂)_{z6'}- (wherein z5' is an integer of 0 to 6, such as an integer of 1 to 6, and z6' is an integer of 0 to 6, such as an integer of 1 to 6), or -(CH₂)_{z7'}-phenylene-(CH₂)_{z8'}- (wherein z7' is an integer of 0 to 6, such as an integer of 1 to 6, and z8' is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{2'} is a C₁₋₆ alkylene group or -(CH₂)_{z7'}-phenylene-(CH₂)_{z8'}-, preferably -phenylene-(CH₂)_{z8'}-. When Z^{2'} is such a group, light resistance, in particular ultraviolet resistance, can be further enhanced.

In another preferred embodiment, Z^{2'} is a C₁₋₃ alkylene group. In one embodiment, Z^{2'} may be -CH₂CH₂CH₂-. In another embodiment, Z^{2'} may be -CH₂CH₂-.

R^{32'} is each independently at each occurrence -Z³-SiR³⁴ₙ₂R³⁵₃₋ₙ₂.

Z³ is each independently at each occurrence a single bond, an oxygen atom, or a divalent organic group. The structure denoted as Z³ hereinafter is bonded to (SiR³⁴ₙ₂R³⁵₃₋ₙ₂) on the right side.

In one embodiment, Z³ is an oxygen atom.

In one embodiment, Z³ is a divalent organic group.

Z³ is preferably a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z³ is a C₁₋₆ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be further enhanced.

In another preferred embodiment, Z³ is a C₁₋₃ alkylene group. In one embodiment, Z³ may be -CH₂CH₂CH₂-. In another embodiment, Z³ may be -CH₂CH₂-.

R³⁴ is each independently at each occurrence a hydroxyl group or a hydrolyzable group.

R³⁴ is preferably, each independently at each occurrence, a hydrolyzable group.

Preferably, R³⁴ is each independently at each occurrence -OR^{j}, -OCOR^{j}, -ON=CR^{j}₂, -NR^{j}₂, -NHR^{j}, -NCO, or halogen (in these formulae, R^{j} represents a substituted or unsubstituted C₁₋₄ alkyl group), and more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

R³⁵ is each independently at each occurrence a hydrogen atom or a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and still more preferably a methyl group.

In the formula, n2 is each independently an integer of 0 to 3 for each (SiR³⁴ₙ₂R³⁵₃₋ₙ₂) unit. However, when R^{Si} is a group represented by the formula (S4), the terminal moieties of the formulae (1) and (2) have at least one (SiR³⁴ₙ₂R³⁵₃₋ₙ₂) unit wherein n2 is 1 to 3. That is, in such terminal moieties, not all n2 are 0 at the same time. In other words, in the terminal moieties of the formula (1) and the formula (2), at least one Si atom to which a hydroxyl group or a hydrolyzable group is bonded is present.

n2 is each independently an integer of preferably 1 to 3, more preferably 2 to 3, and still more preferably 3 for each (SiR³⁴ₙ₂R³⁵₃₋ₙ₂) unit.

R^{33'} is each independently at each occurrence a hydrogen atom, a hydroxyl group, or a monovalent organic group. Such a monovalent organic group is a monovalent organic group excluding the above hydrolyzable group.

In R^{33'}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently at each occurrence an integer of 0 to 3, and r2' is each independently at each occurrence an integer of 0 to 3. The total of q2' and r2' is 3 in the (CR^{32'}_{q2'}R^{33'}_{r2'}) unit.

q2' is each independently an integer of preferably 1 to 3, more preferably 2 to 3, and still more preferably 3 for each (CR^{32'}_{q2}R^{33'}_{r2'}) unit.

R³² is each independently at each occurrence -Z³-SiR³⁴ₙ₂R³⁵₃₋ₙ₂. Such -Z³-SiR³⁴ₙ₂R³⁵₃₋ₙ₂ has the same definition as described for R^{32'}.

R³³ is each independently at each occurrence a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently at each occurrence an integer of 0 to 3, q2 is each independently at each occurrence an integer of 0 to 3, and r2 is each independently at each occurrence an integer of 0 to 3. The total of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferred embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and still more preferably 3 for each (CR³¹ₚ₂R³²_{q2}R³³ᵣ₂) unit.

R^{e1} is each independently at each occurrence -Z³-SiR³⁴ₙ₂R³⁵₃₋ₙ₂. Such -Z³-SiR³⁴ₙ₂R³⁵₃₋ₙ₂ has the same definition as described for R^{32'}.

R^{f1} is each independently at each occurrence a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently at each occurrence an integer of 0 to 3, l2 is each independently at each occurrence an integer of 0 to 3, and m2 is each independently at each occurrence an integer of 0 to 3. The total of k2, l2, and m2 is 3 in the (CR^{d1}ₖ₂R^{e1}ₗ₂R^{f1}ₘ₂) unit.

In the formulae (1) and (2), when R^{Si} is a group represented by the formula (S4), preferably, at least two Si atoms to which a hydroxyl group or a hydrolyzable group is bonded are present in the terminal moieties of the formulae (1) and (2).

In one embodiment, when R^{Si} is a group represented by the formula (S4), 2 or more, for example, 2 to 27, preferably 2 to 9, more preferably 2 to 6, even more preferably 2 to 3, and particularly preferably 3 (SiR³⁴ₙ₂R³⁵₃₋ₙ₂) units in which n2 is 1 to 3, preferably 2 or 3, and more preferably 3 are present in each terminal moiety of the formula (1) and the formula (2).

In a preferred embodiment, when R^{32'} is present in the formula (S4), n2 is an integer of 1 to 3, preferably 2 or 3, and more preferably 3 in at least one, preferably all of R^{32'} groups.

In a preferred embodiment, when R³² is present in the formula (S4), n2 is an integer of 1 to 3, preferably 2 or 3, and more preferably 3 in at least one, preferably all of R³² groups.

In a preferred embodiment, when R^{e1} is present in the formula (S4), n2 is an integer of 1 to 3, preferably 2 or 3, and more preferably 3 in at least one, preferably all of R^{a1} groups.

In a preferred embodiment, in the formula (S4), k2 is 0, l2 is 2 or 3, preferably 3, and n2 is 2 or 3, preferably 3.

R^{g1} and R^{h1} are each independently at each occurrence -Z⁴-SiR¹¹ₙ₁R¹²₃₋ₙ₁, -Z⁴-SiR^{a1}ₖ₁R^{b1}ₗ₁R^{c1}ₘ₁**,** or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, 11, m1, k2, l2, and m2 have the same definition as described above.

In a preferred embodiment, R^{g1} and R^{h1} are each independently -Z⁴-SiR¹¹ₙ₁R¹²₃₋ₙ₁.

Z⁴ is each independently at each occurrence a single bond, an oxygen atom, or a divalent organic group. The structure denoted as Z⁴ hereinafter is bonded to (SiR¹¹ₙ₁R¹²₃₋ₙ₁) on the right side.

In one embodiment, Z⁴ is an oxygen atom.

In one embodiment, Z⁴ is a divalent organic group.

Z⁴ is preferably a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6). Such a C₁₋₆ alkylene group may be linear or branched, but is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z⁴ is a C₁₋₆ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be further enhanced.

In another preferred embodiment, Z⁴ is a C₁₋₃ alkylene group. In one embodiment, Z⁴ may be -CH₂CH₂CH₂-. In another embodiment, Z⁴ may be -CH₂CH₂-.

In one embodiment, R^{Si} is a group represented by the formula (S2), (S3), (S4), or (S5). These compounds are capable of forming a film (surface-treating layer) having high surface lubricity.

In one embodiment, R^{Si} is a group represented by the formula (S3), (S4), or (S5). These compounds have a plurality of hydrolyzable groups at one terminal, and are therefore capable of forming a film (surface-treating layer) that firmly adheres to a substrate and that has high abrasion durability.

In one embodiment, R^{Si} is a group represented by the formula (S3) or (S4). These compounds can have a plurality of hydrolyzable groups branched from one Si atom or C atom at one terminal, and are therefore capable of forming a film having higher abrasion durability.

In one embodiment, R^{Si} is a group represented by the formula (S1).

In one embodiment, R^{Si} is a group represented by the formula (S2).

In one embodiment, R^{Si} is a group represented by the formula (S3).

In one embodiment, R^{Si} is a group represented by the formula (S4).

In one embodiment, R^{Si} is a group represented by the formula (S5).

In one embodiment, the hydrolyzable group contained in the formulae (1) and (2) may be condensed with other hydrolyzable groups. In this case, the hydrolyzable group contained in the formula (1) or (2) may be a divalent group excluding the moiety involved in the condensation, and those in which hydrolyzability is replaced by such a divalent group in the formula (1) or (2) are also included in the compound (1) or (2). The same is true for the hydrolyzable group contained in the formulae (1a) and (2a), which will be described later.

In the formulae (1) and (2), X^{A} is interpreted as a linker connecting fluoropolyether moieties (R^{F1} and R^{F2}), which mainly provide water-repellency, surface lubricity and the like, to a moiety (R^{Si}) providing a binding ability to a substrate. Accordingly, such X^{A} may be a single bond or any group as long as the compounds represented by the formulae (1) and (2) can stably exist.

In the formula (1), α is an integer of 1 to 9, and β is an integer of 1 to 9. These α and β may vary depending on the valence of X^{A}. The sum of α and β is the same as the valence of X^{A}. For example, when X^{A} is a decavalent organic group, the sum of α and β is 10; for example, a case where α is 9 and β is 1, a is 5 and β is 5, or α is 1 and β is 9, can be considered. When X^{A} is a divalent organic group, α and β are 1.

In the formula (2), γ is an integer of 1 to 9. γ may vary depending on the valence of X^{A}. That is, γ is a value obtained by subtracting 1 from the valence of X^{A}.

X^{A} may be each independently a single bond or a di- to decavalent organic group.

The di- to decavalent organic group in X^{A} is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri- to octavalent organic group, and more preferably a tri- to hexavalent organic group.

In one embodiment, X^{A} is a single bond or a divalent organic group, α is 1, and β is 1.

In one embodiment, X^{A} is a single bond or a divalent organic group, and γ is 1.

In one embodiment, X^{A} is a tri- to hexavalent organic group, α is 1, and β is 2 to 5.

In one embodiment, X^{A} is a tri- to hexavalent organic group, and γ is 2 to 5.

In one embodiment, X^{A} is a trivalent organic group, α is 1, and β is 2.

In one embodiment, X^{A} is a trivalent organic group, and γ is 2.

When X^{A} is a single bond or a divalent organic group, the formulae (1) and (2) are represented by the following formulae (1a) and (2a).

**R^{F1}-X^{A}-R^{Si}** **(1a)**

**R^{Si}-X^{A}-R^{F2}-X^{A}-R^{Si}** **(2a)**

In each of the formula (1a) or the formula (2a), at least one R^{Si} is a monovalent group containing a Si atom to which a hydroxyl group or a hydrolyzable group is bonded.

In one embodiment, X^{A} is a single bond.

In another embodiment, X^{A} is a divalent organic group.

In one embodiment, examples of X^{A} include a single bond or a divalent organic group represented by the following formula:

-(R⁵¹)ₚ₅-(X⁵¹)_{q5}-

wherein
R⁵¹ represents a single bond, -(CH₂)ₛ₅-, or an o-, m- or p-phenylene group, and is preferably -(CH₂)ₛ₅-;
s5 is an integer of 1 to 20, preferably 1 to 6, more preferably 1 to 3, and still more preferably 1 or 2;
X⁵¹ represents -(X⁵²)ₗ₅-;
X⁵² each independently at each occurrence represents a group selected from the group consisting of -O-, -S-, an o-, m- or p-phenylene group, -C(O)O-, -Si(R⁵³)₂-, -(Si(R⁵³)₂O)ₘ₅-Si(R⁵³)₂-, -CONR⁵⁴-, -O-CONR⁵⁴-, -NR⁵⁴- and -(CH₂)ₙ₅-;
R⁵³ each independently at each occurrence represents a phenyl group, a C₁₋₆ alkyl group, or a C₁₋₆ alkoxy group, is preferably a phenyl group or a C₁₋₆ alkyl group, and is more preferably a methyl group;
R⁵⁴ each independently at each occurrence represents a hydrogen atom, a phenyl group, or a C₁₋₆ alkyl group (preferably a methyl group);
m5 is each independently at each occurrence an integer of 1 to 100 and preferably an integer of 1 to 20;
n5 is each independently at each occurrence an integer of 1 to 20, preferably an integer of 1 to 6, and more preferably an integer of 1 to 3;
l5 is an integer of 1 to 10, preferably an integer of 1 to 5, and more preferably an integer of 1 to 3;
p5 is 0 or 1; and
q5 is 0 or 1,
where at least one of p5 and q5 is 1, and the occurrence order of the respective repeating units enclosed in parentheses provided with p5 or q5 is not limited.
Here, X^{A} (typically a hydrogen atom of X^{A}) is optionally substituted with one or more substituents selected from a fluorine atom, a C₁₋₃ alkyl group, and a C₁₋₃ fluoroalkyl group. In a preferred embodiment, X^{A} is not substituted with any of these groups.

In a preferred embodiment, X^{A} is each independently -(R⁵¹)ₚ₅₋(X⁵¹)_{q5-}R⁵²-. R⁵² represents a single bond, -(CH₂)ₜ₅-, or an o-, m- or p-phenylene group, and is preferably - (CH₂)ₜ₅-. t5 is an integer of 1 to 20, preferably an integer of 2 to 6, and more preferably an integer of 2 to 3. Here, R⁵² (typically a hydrogen atom of R⁵²) is optionally substituted with one or more substituents selected from a fluorine atom, a C₁₋₃ alkyl group, and a C₁₋₃ fluoroalkyl group. In a preferred embodiment, R⁵⁶ is not substituted with any of these groups.

Preferably, X^{A} may be each independently
a single bond,
a C₁₋₂₀ alkylene group,
-R⁵¹-X⁵³-R⁵²-, or
-X⁵⁴-R⁵²-

wherein R⁵¹ and R⁵² have the same definition as described above, and
X⁵³ represents
   -O-,
   -S-,
   -C(O)O-,
   -CONR⁵⁴-,
   -O-CONR⁵⁴-,
   -Si(R⁵³)₂-_{,}
   -Si(R⁵³)₂-,
   -(Si(R⁵³ )₂O)ₘ₅-Si(R⁵³)₂-,
   -O-(CH₂)ᵤ₅-(Si(R⁵³)₂O)ₘ₅-Si(R⁵³)₂-,
   -O-(CH₂)ᵤ₅-Si(R⁵³)₂-O-Si(R⁵³)₂-CH₂CH₂-Si(R⁵³)₂-O-Si(R⁵³)₂-,
   -O-(CH₂)ᵤ₅-Si(OCH₃)₂OSi(OCH₃)₂-,
   -CONR⁵⁴-(CH₂)ᵤ₅-(Si(R⁵³)₂O)ₘ₅-Si(R⁵³)₂-,
   -CONR⁵⁴-(CH₂)ᵤ₅-N(R⁵⁴)-, or
   -CONR⁵⁴-(o-, m- or p-phenylene)-Si(R⁵³)₂-,
wherein R⁵³, R⁵⁴, and m5 have the same definition as described above, and
u5 is an integer of 1 to 20, preferably an integer of 2 to 6, and more preferably an integer of 2 to 3, and
X⁵⁴ represents
   -S-,
   -C(O)O-,
   -CONR⁵⁴-,
   -O-CONR⁵⁴-,
   -CONR⁵⁴-(CH₂)ᵤ₅-(Si(R⁵⁴)₂O)ₘ₅-Si(R⁵⁴)₂-,
   -CONR⁵⁴-(CH₂)ᵤ₅-N(R⁵⁴)-, or
   -CONR⁵⁴-(o-, m- or p-phenylene)-Si(R⁵⁴)₂-,
wherein individual reference symbols have the same definition as described above.

More preferably, X^{A} is each independently
a single bond,
a C₁₋₂₀ alkylene group,
-(CH₂)ₛ₅-X⁵³-,
-(CH₂)ₛ₅-X⁵³-(CH₂)ₜ₅-,
-X⁵⁴-, or
-X⁵⁴-(CH₂)ₜ₅-,
wherein X⁵³, X⁵⁴, s5, and t5 have the same definition as described above.

More preferably, X^{A} may be each independently
a single bond,
a C₁₋₂₀ alkylene group,
-(CH₂)ₛ₅-X⁵³-(CH₂)ₜ₅-, or
-X⁵⁴-(CH₂)ₜ₅-,
wherein individual reference symbols have the same definition as described above.

In a preferred embodiment, X^{A} may be each independently
a single bond,
a C₁₋₂₀ alkylene group,
-(CH₂)ₛ₅-X⁵³-, or
-(CH₂)ₛ₅-X⁵³-(CH₂)ₜ₅-,
wherein
X⁵³ is -O-, -CONR⁵⁴-, or -O-CONR⁵⁴-,
R⁵⁴ each independently at each occurrence represents a hydrogen atom, a phenyl group, or a C₁₋₆ alkyl group,
s5 is an integer of 1 to 20, and
t5 is an integer of 1 to 20.

In a preferred embodiment, X^{A} may be each independently
-(CH₂)ₛ₅-O-(CH₂)ₜ₅-, or
-CONR⁵⁴-(CH₂)ₜ₅-,
wherein
R⁵⁴ each independently at each occurrence represents a hydrogen atom, a phenyl group, or a C₁₋₆ alkyl group,
s5 is an integer of 1 to 20, and
t5 is an integer of 1 to 20.

In one embodiment, X^{A} is each independently
a single bond,
a C₁₋₂₀ alkylene group,
-(CH₂)ₛ₅-O-(CH₂)ₜ₅-,
-(CH₂)ₛ₅-(Si(R⁵³)₂O)ₘ₅-Si(R⁵³ )₂-(CH₂)ₜ₅-,
-(CH₂)ₛ₅-O-(CH₂)ᵤ₅-(Si(R⁵³)₂O)ₘ₅-Si(R^{s3})₂-(CH₂)ₜ₅-, or
-(CH₂)ₛ₅-O-(CH₂)ₜ₅-Si(R⁵³)₂-(CH₂)ᵤ₅-Si(R⁵³)₂-(Cᵥ₅H₂ᵥ₅)-,
wherein R⁵³, m5, s5, t5, and u5 have the same definition as described above, and v5 is an integer of 1 to 20, preferably an integer of 2 to 6, and more preferably an integer of 2 to 3.

In the formula, -(CᵥH₂ᵥ)- may be linear or branched, and it may be, for example, - CH₂CH₂-, -CH₂CH₂CH₂-, -CH(CH₃)-, or -CH(CH₃)CH₂-.

X^{A} is each independently optionally substituted with one or more substituents selected from a fluorine atom, a C₁₋₃ alkyl group, and a C₁₋₃ fluoroalkyl group (preferably a C₁₋₃ perfluoroalkyl group). In one embodiment, X^{A} is unsubstituted.

X^{A} is bonded to R^{F1} or R^{F2} on the left side, and bonded to R^{Si} on the right side.

In one embodiment, X^{A} may be each independently a group other than an -O-C₁₋₆ alkylene group.

In another embodiment, examples of X^{A} include the following groups: 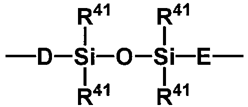 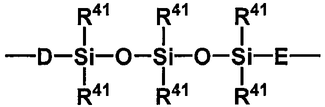 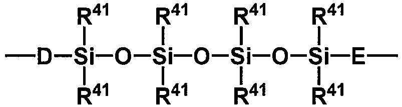 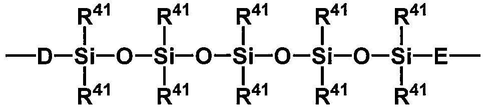 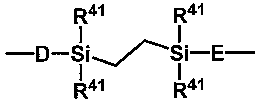 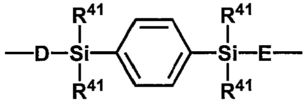 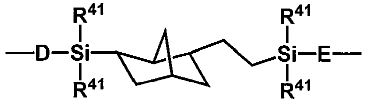
wherein R⁴¹ is each independently a hydrogen atom, a phenyl group, a C₁₋₆ alkyl group, or a C₁₋₆ alkoxy group, and preferably a methyl group;
D is a group selected from
   -CH₂O(CH₂)₂-,
   -CH₂O(CH₂)₃-,
   -CF₂O(CH₂)₃-,
   -(CH₂)₂-,
   -(CH₂)₃-,
   -(CH₂)₄-,
   -CONH-(CH₂)₃-,
   -CON(CH₃)-(CH₂)₃-,
   -CON(Ph)-(CH₂)₃- (wherein Ph means phenyl), and

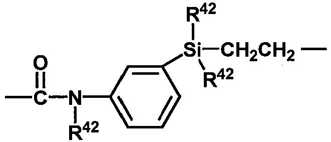

wherein R⁴² each independently represents a hydrogen atom, a C₁₋₆ alkyl group, or a C₁₋₆ alkoxy group, preferably a methyl group or a methoxy group, and more preferably a methyl group;
E is -(CH₂)ₙ- (n is an integer of 2 to 6); and
D is bonded to R^{F1} or R^{F2} of the molecular backbone, and E is bonded to R^{Si}.

Specific examples of X^{A} include
a single bond,
-CH₂OCH₂-,
-CH₂O(CH₂)₂-,
-CH₂O(CH₂)₃-,
-CH₂O(CH₂)₄-,
-CH₂O(CH₂)₅-,
-CH₂O(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O(Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂OCH₂(CH₂)₇CH₂Si(OCH₃)₂OSi(OCH₃)₂(CH₂)₂Si(OCH₃)₂OSi(OCH₃)₂(CH₂)₂-,
-CH₂OCH₂CH₂CH₂Si(OCH₃)₂OSi(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
-(CH₂)₂-Si(CH₃)₂-(CH₂)₂-,
-CH₂-,
-(CH₂)₂-,
-(CH₂)₃-,
-(CH₂)₄-,
-(CH₂)₅-,
-(CH₂)₆-,
-CO-,
-CONH-,
-CONH-CH₂-,
-CONH-(CH₂)₂-,
-CONH-(CH₂)₃-,
-CONH-(CH₂)₄-,
-CONH-(CH₂)₅-,
-CONH-(CH₂)₆-,
-CON(CH₃)-CH₂-,
-CON(CH₃)-(CH₂)₂-,
-CON(CH₃)-(CH₂)₃-,
-CON(CH₃)-(CH₂)₄-,
-CON(CH₃)-(CH₂)₅-,
-CON(CH₃)-(CH₂)₆-,
-CON(Ph)-CH₂- (wherein Ph means phenyl),
-CON(Ph)-(CH₂)₂- (wherein Ph means phenyl),
-CON(Ph)-(CH₂)₃- (wherein Ph means phenyl),
-CON(Ph)-(CH₂)₄- (wherein Ph means phenyl),
-CON(Ph)-(CH₂)₅- (wherein Ph means phenyl),
-CON(Ph)-(CH₂)₆- (wherein Ph means phenyl),
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-S-(CH₂)₃-,
-(CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂OSi(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-,
-OCFHCF₂-, 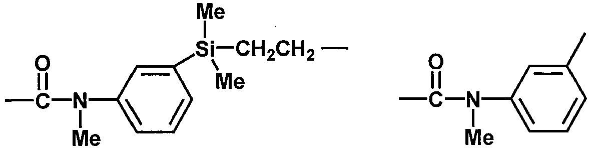
and the like.

In still another embodiment, X^{A} is each independently a group represented by the formula: -(R¹⁶)ₓ₁-(CFR¹⁷)_{y1}-(CH₂)_{z1}-. In the formula, x1, y1, and z1 are each independently an integer of 0 to 10, the sum of x1, y1, and z1 is 1 or more, and the occurrence order of the respective repeating units enclosed in parentheses is not limited in the formula.

In the formula, R¹⁶ is each independently at each occurrence an oxygen atom, phenylene, carbazolylene, -NR¹⁸- (in the formula, R¹⁸ represents a hydrogen atom or an organic group), or a divalent organic group. Preferably, R¹⁸ is an oxygen atom or a divalent polar group.

Examples of the "divalent polar group" include, but are not limited to, -C(O)-, - C(=NR¹⁹)-, and -C(O)NR¹⁹- (in these formulae, R¹⁹ represents a hydrogen atom or a lower alkyl group). The "lower alkyl group" is, for example, a C₁₋₆ alkyl group, such as methyl, ethyl, or n-propyl, that is optionally substituted with one or more fluorine atoms.

In the formula, R¹⁷ is each independently at each occurrence a hydrogen atom, a fluorine atom, or a lower fluoroalkyl group, and is preferably a fluorine atom. The "lower fluoroalkyl group" is, for example, a C₁₋₆, preferably C₁₋₃, fluoroalkyl group, preferably a C₁₋₃ perfluoroalkyl group, more preferably a trifluoromethyl group or a pentafluoroethyl group, and still more preferably a trifluoromethyl group.

In still another embodiment, examples of X^{A} include the following groups: 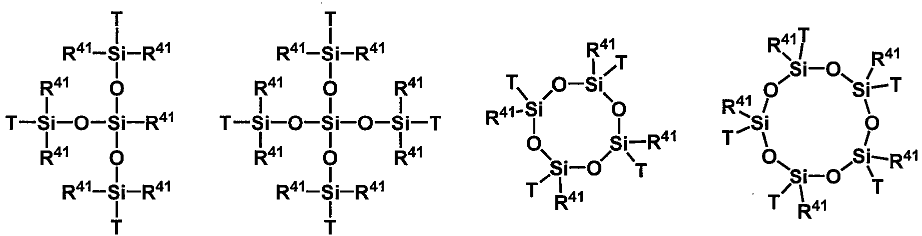 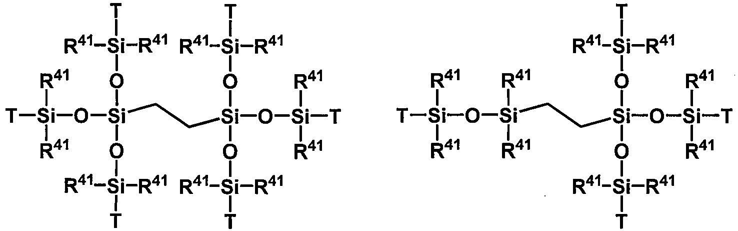 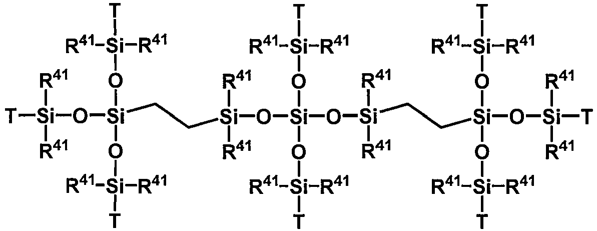 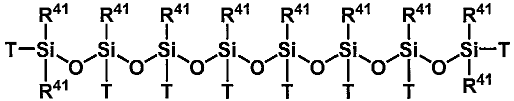 wherein
R⁴¹ is each independently a hydrogen atom, a phenyl group, a C₁₋₆ alkyl group, or a C₁₋₆ alkoxy group, and preferably a methyl group;
some of the groups of T in each X^{A} group are the following groups bonded to R^{F1} or R^{F2} of the molecular backbone:
   -CH₂O(CH₂)₂-,
   -CH₂O(CH₂)₃-,
   -CF₂O(CH₂)₃-,
   -(CH₂)₂-,
   -(CH₂)₃-,
   -(CH₂)₄-,
   -CONH-(CH₂)₃-,
   -CON(CH₃)-(CH₂)₃-,
   -CON(Ph)-(CH₂)₃- (wherein Ph means phenyl), or

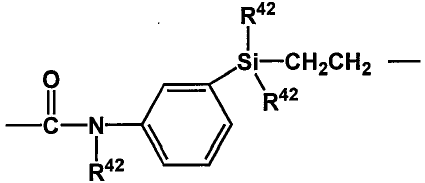

wherein R⁴² each independently represents a hydrogen atom, a C₁₋₆ alkyl group, or a C₁₋₆ alkoxy group, preferably a methyl group or a methoxy group, and more preferably a methyl group; and
some other groups of T are bonded to R^{Si} of the molecular backbone, and the remaining groups of T, if present, are each independently a methyl group, a phenyl group, a C₁₋₆ alkoxy group, or a radical scavenging group or an UV absorbing group.

The radical scavenging group is not limited as long as it can scavenge a radical generated by light irradiation, and examples thereof include residues of benzophenones, benzotriazoles, benzoates, phenyl salicylates, crotonic acids, malonates, organoacrylates, hindered amines, hindered phenols, and triazines.

The UV absorbing group is not limited as long as it can absorb ultraviolet rays, and examples thereof include residues of benzotriazoles, hydroxybenzophenones, esters of substituted and unsubstituted benzoic acid or salicylic acid compounds, acrylates or alkoxy cinnamates, oxamides, oxanilides, benzoxazinones, and benzoxazoles.

In a preferred embodiment, examples of the preferred radical scavenging group or UV absorbing group include groups represented by the following formulae.

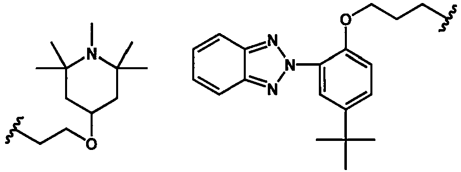

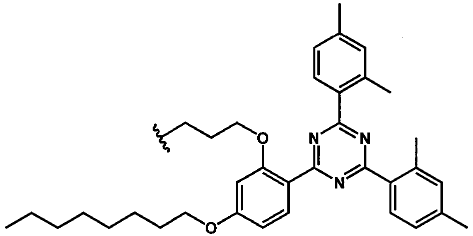

In this embodiment, X^{A} may be each independently a tri- to decavalent organic group.

In still another embodiment, examples of X^{A} include the following group: 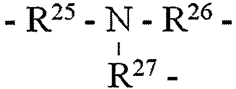
wherein R²⁵, R²⁶, and R²⁷ are each independently a di- to hexavalent organic group; and
R²⁵ is bonded to at least one R^{F1} and R²⁶ and R²⁷ are each bonded to at least one R^{Si}.

In one embodiment, R²⁵ is a single bond, a C₁₋₂₀ alkylene group, a C₃₋₂₀ cycloalkylene group, a C₅₋₂₀ arylene group, -R⁵⁷-X⁵⁸-R⁵⁹-, -X⁵⁸-R⁵⁹-, or -R⁵⁷-X⁵⁸-. R⁵⁷ and R⁵⁹ are each independently a single bond, a C₁₋₂₀ alkylene group, a C₃₋₂₀ cycloalkylene group, or a C₅₋₂₀ arylene group. X⁵⁸ is -O-, -S-, -CO-, -O-CO-, or -COO-.

In one embodiment, R²⁶ and R²⁷ are each independently a hydrocarbon, or a group having at least one atom selected from N, O, and S at a terminal or in the main chain of a hydrocarbon, and preferred examples thereof include a C₁₋₆ alkyl group, -R³⁶-R³⁷-R³⁶, and - R³⁶-CHR³⁸₂-. Here, R³⁶ is each independently a single bond or a C₁₋₆ alkyl group, and preferably a C₁₋₆ alkyl group. R³⁷ is N, O, or S, and preferably N or O. R³⁸ is -R⁴⁵-R⁴⁶-R⁴⁵-, -R⁴⁶-R⁴⁵-, or -R⁴⁵-R⁴⁶-. Here, R⁴⁵ is each independently a C₁₋₆ alkyl group. R⁴⁶ is N, O, or S, and preferably O.

In this embodiment, X^{A} may be each independently a tri- to decavalent organic group.

In still another embodiment, examples of X^{A} include a group represented by the following: 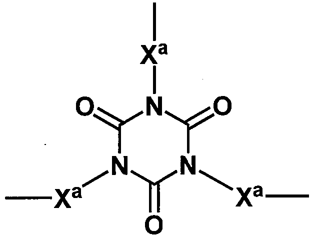 wherein X^{a} is a single bond or a divalent organic group.

X^{a} is a single bond or divalent linking group directly bonded to the isocyanuric ring. X^{a} is preferably a single bond, an alkylene group, or a divalent group containing at least one bond selected from the group consisting of an ether bond, an ester bond, an amide bond, and a sulfide bond, and more preferably a single bond, a C₁₋₁₀ alkylene group, or a divalent C₁₋₁₀ hydrocarbon group containing at least one bond selected from the group consisting of an ether bond, an ester bond, an amide bond, and a sulfide bond.

X^{a} is still more preferably a group represented by the following formula:

-(CX¹²¹X¹²²)ₓ₁-(X^{a1})_{y1}-(CX¹²³X¹²⁴)_{z1}-
wherein X¹²¹ to X¹²⁴ are each independently H, F, OH, or -OSi(OR¹²¹)₃, where three R¹²¹ are each independently a C₁₋₄ alkyl group,
X^{a1} is -C(=O)NH-, -NHC(=O)-, -O-, -C(=O)O-, -OC(=O)-, -OC(=O) O-, or - NHC(=O)NH- (each bond is bonded to CX¹²¹X¹²² on its left side), and
x1 is an integer of 0 to 10, y1 is 0 or 1, and z1 is an integer of 1 to 10.

X^{a1} is preferably -O- or -C(=O)O-.

X^{a} is particularly preferably
a group represented by the following formula:

   -(CF₂)ₘ₁₁-(CH₂)ₘ₁₂-O-(CH₂)ₘ₁₃-
wherein m11 is an integer of 1 to 3, m12 is an integer of 1 to 3, and m13 is an integer of 1 to 3,
a group represented by the following formula:

   -(CF₂)ₘ₁₄-(CH₂)ₘ₁₅-O-CH₂CH(OH)-(CH₂)ₘ₁₆-
wherein m14 is an integer of 1 to 3, m15 is an integer of 1 to 3, and m16 is an integer of 1 to 3,
   a group represented by the following formula:

   -(CF₂)ₘ₁₇-(CH₂)ₘ₁₈-
wherein m17 is an integer of 1 to 3, and m18 is an integer of 1 to 3,
   a group represented by the following formula:

   -(CF₂)ₘ₁₉-(CH₂)ₘ₂₀-O-CH₂CH(OSi(OCH₃)₃)-(CH₂)ₘ₂₁-
wherein m19 is an integer of 1 to 3, m20 is an integer of 1 to 3, and m21 is an integer of 1 to 3, or
   a group represented by the following formula:

   -(CH2)m22-
wherein m22 is an integer of 1 to 3.

X^{a} is not limited, and specific examples thereof include -CH₂-, -C₂H₄-, -C₃H₆-, -C₄H₈-, -C₄H₈-O-CH₂-, -CO-O-CH₂-CH(OH)-CH₂-, -(CF₂)ₙ₅- (n5 is an integer of 0 to 4), -(CF₂)ₙ₅-(CH₂)ₘ₅- (n5 and m5 are each independently an integer of 0 to 4), - CF₂CF₂CH₂OCH₂CH(OH)CH₂-, and -CF₂CF₂CH₂OCH₂CH(OSi(OCH₃)₃)CH₂-.

In this embodiment, X^{A} may be each independently a di- or trivalent organic group.

In a preferred embodiment, the fluoropolyether group-containing compound may be a compound represented by formula (1b) or formula (2b): 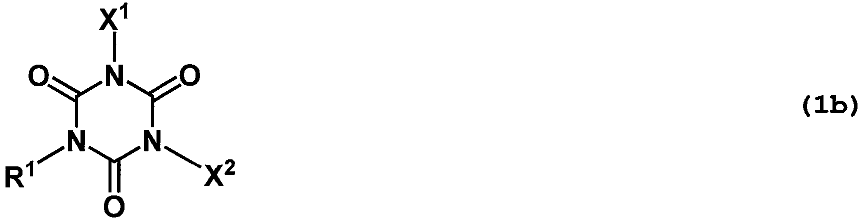 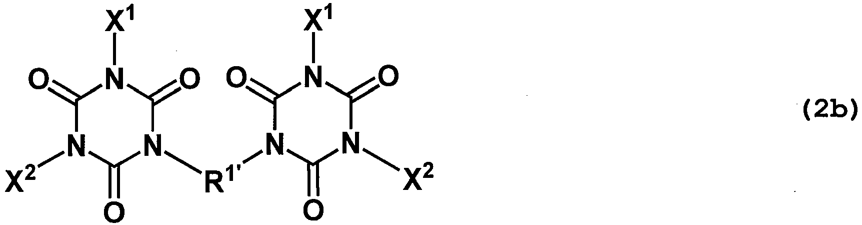 wherein
R¹ is a monovalent organic group containing a fluoropolyether group;
R^{1'} is a divalent organic group containing a fluoropolyether group;
the fluoropolyether group is each independently at each occurrence a group represented by

   formula: - (OC₆F₁₂)ₘ₃₁-(OC₅F₁₀)ₘ₃₂-(OC₄F₈)ₘ₃₃-(OC₃X¹⁰₆)ₘ₃₄- (OC₂F₄)ₘ₃₅-(OCF₂)ₘ₃₆-
   wherein m31, m32, m33, m34, m35, and m36 are independently an integer of 0 or 1 or more;
   X¹⁰ is independently H, F, or Cl; and
   the occurrence order of the respective repeating units is not limited;
   X¹ is independently a silane-containing reactive crosslinking group;
   X² is independently a monovalent group; and
   in each of the formula (1b) or the formula (2b), at least one of X¹ and X² is a monovalent group containing a Si atom to which a hydroxyl group or a hydrolyzable group is bonded.

R¹ is preferably a monovalent organic group containing a fluoropolyether group (provided that those containing a urethane bond are excluded).

R^{1'} is preferably a divalent organic group containing a fluoropolyether group (provided that those containing a urethane bond are excluded).

X¹⁰ is preferably F.

m31 to m36 are each preferably an integer of 0 to 200, and more preferably an integer of 0 to 100. The total of m31 to m36 is preferably 1 or more, more preferably 5 or more, and still more preferably 10 or more. The total of m31 to m36 is preferably 200 or less, and more preferably 100 or less. The total of m31 to m36 is preferably 10 to 200, and more preferably 10 to 100.

In the fluoropolyether group, each repeating unit may be linear or branched, or may contain a ring structure, and is preferably linear. For example, -(OC₆F₁₂)- may be - (OCF₂CF₂CF₂CF₂CF₂CF₂)-, -(OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, -(OCF₂CF₂CF₂CF₂CF(CF₃))-, or the like, and is preferably -(OCF₂CF₂CF₂CF₂CF₂CF₂)-. -(OC₅F₁₀)- may be - (OCF₂CF₂CF₂CF₂CF₂)-, -(OCF(CF₃)CF₂CF₂CF₂)-, -(OCF₂CF(CF₃)CF₂CF₂)-, - (OCF₂CF₂CF(CF₃)CF₂)-, -(OCF₂CF₂CF₂CF(CF₃))-, or the like, and is preferably - (OCF₂CF₂CF₂CF₂CF₂)-. -(OC₄F₈)- may be any of -(OCF₂CF₂CF₂CF₂)-, - (OCF(CF₃)CF₂CF₂)-, -(OCF₂CF(CF₃)CF₂)-, -(OCF₂CF₂CF(CF₃))-, -(OC(CF₃)₂CF₂)-, - (OCF₂C(CF₃)₂)-, -(OCF(CF₃)CF(CF₃))-, -(OCF(C₂F₅)CF₂)-, and -(OCF₂CF(C₂F₅))-, and is preferably -(OCF₂CF₂CF₂CF₂)-. -(OC₃F₆)- may be any of -(OCF₂CF₂CF₂)-, - (OCF(CF₃)CF₂)-, and -(OCF₂CF(CF₃))-, and is preferably -(OCF₂CF₂CF₂)-. In addition, - (OC₂F₄)- may be any of -(OCF₂CF₂)- and -(OCF(CF₃))-, and is preferably -(OCF₂CF₂)-.

The ring structure may be any of the following 3-membered ring, 4-membered rings, 5-membered rings, and 6-membered rings: 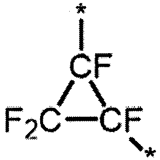 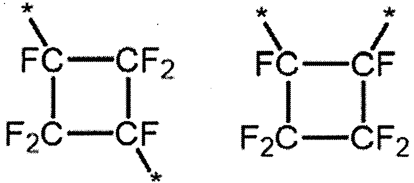 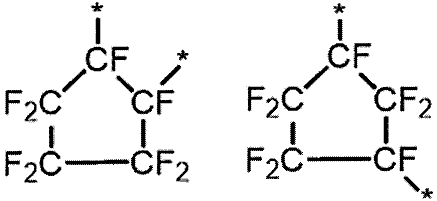 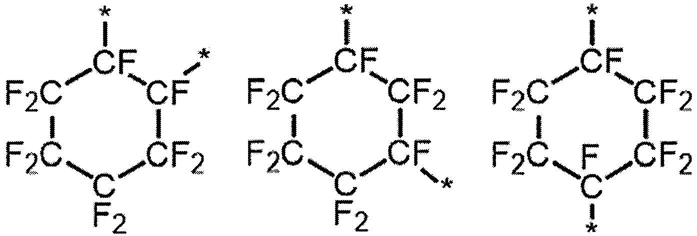 wherein * represents a bond position.

The ring structure may be preferably a 4-membered ring, a 5-membered ring, or a 6-membered ring, and more preferably a 4-membered ring or a 6-membered ring.

The repeating units having a ring structure may be preferably any of the following units: 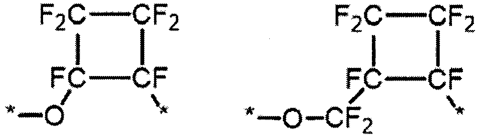 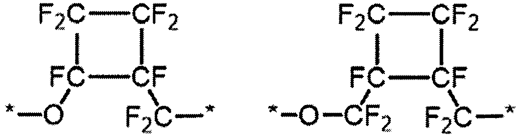 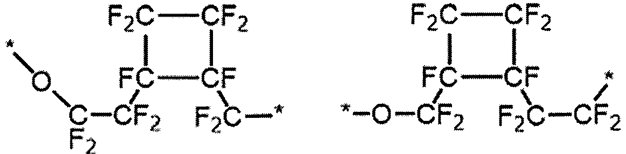 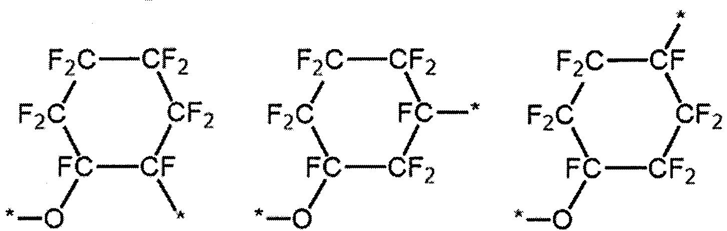 wherein * represents a bond position.

In one embodiment, the fluoropolyether group is a chain represented by - (OC₃F₆)ₘ₃₄-(OC₂F₄)ₘ₃₅- (wherein m34 is an integer of 1 to 200 and m35 is 0 or 1). (OC₃F₆) in the fluoropolyether group is preferably (OCF₂CF₂CF₂), (OCF(CF₃)CF₂), or (OCF₂CF(CF₃)), and more preferably (OCF₂CF₂CF₂). (OC₂F₄) in the fluoropolyether group is preferably (OCF₂CF₂) or (OCF(CF₃)), and more preferably (OCF₂CF₂). m34 is preferably an integer of 5 to 200, and more preferably an integer of 10 to 200. In one embodiment, m35 is 0. In another embodiment, m35 is 1.

In another embodiment, the fluoropolyether group is a chain represented by - (OC₄F₈)ₘ₃₃-(OC₃F₆)ₘ₃₄-(OC₂F₄)ₘ₃₅-(OCF₂)ₘ₃₆- (wherein m33 and m34 are each an integer of 0 to 30, and m35 and m36 are each an integer of 1 to 200; the total of m33 to m36 is 5 or more; and the occurrence order of the respective repeating units is not limited). m35 and m36 are each preferably an integer of 5 to 200, and more preferably an integer of 10 to 200. The total of m33 to m36 is preferably 10 or more. The fluoropolyether group is preferably - (OCF₂CF₂CF₂CF₂)ₘ₃₃-(OCF₂CF₂CF₂)ₘ₃₄-(OCF₂CF₂)ₘ₃₅-(OCF₂)ₘ₃₆-. In one embodiment, the fluoropolyether group may be a chain represented by -(OC₂F₄)ₘ₃₅- (OCF₂)ₘ₃₆- (wherein m35 and m36 are each an integer of 1 to 200; and the occurrence order of the respective repeating units is not limited). m35 and m36 are each preferably an integer of 5 to 200, and more preferably an integer of 10 to 200.

In still another embodiment, the fluoropolyether group is a group represented by - (R^{m1}-R^{m2}) ₘ₃₇-. In the formula, R^{m1} is OCF₂ or OC₂F₄, and preferably OC₂F₄. In the formula, R^{m2} is a group selected from OC₂F₄, OC₃F₆, OC₄F₈, OC₅F₁₀, and OC₆F₁₂, or is a combination of two or three groups independently selected from these groups. Preferably, R^{m1} is a group selected from OC₂F₄, OC₃F₆, and OC₄F₈, a group selected from OC₃F₆, OC₄F₈, OC₅F₁₀, and OC₆F₁₂, or a combination of two or three groups independently selected from these groups. The combination of two or three groups independently selected from OC₂F₄, OC₃F₆, and OC₄F₈ is not limited, and examples thereof include -OC₂F₄OC₃F₆-, - OC₂F₄OC₄F₈-, -OC₃F₆OC₂F₄-, -OC₃F₆OC₃F₆-, -OC₃F₆OC₄F₈-, -OC₄F₈OC₄F₈-, -OC₄F₈OC₃F₆-, -OC₄F₈OC₂F₄-, -OC₂F₄OC₂F₄OC₃F₆-, -OC₂F₄OC₂F₄OC₄F₈-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄-, -OC₃F₆OC₂F₄OC₃F₆-, - OC₃F₆OC₃F₆OC₂F₄-, and -OC₄F₈OC₂F₄OC₂F₄-. m37 is an integer of 2 or more, preferably an integer of 3 or more, and more preferably an integer of 5 or more, and is an integer of 100 or less, and preferably an integer of 50 or less. In the formulae, OC₂F₄, OC₃F₆, OC₄F₈, OC₅F₁₀, and OC₆F₁₂ may be linear or branched, and are preferably linear. In this embodiment, the fluoropolyether group is preferably -(OC₂F₄-OC₃F₆)ₘ₃₇- or -(OC₂F₄-OC₄F₈)ₘ₃₇-.

In still another embodiment, the fluoropolyether group is a group represented by - (R^{m1}-R^{m2}) ₘ₃₇-R^{r'}-(R^{m1'}-R^{m2'})_{m37'}-. In the formula, R^{m1} is OCF₂ or OC₂F₄; R^{m2} is a group selected from OC₂F₄, OC₃F₆, OC₄F₈, OC₅F₁₀, and OC₆F₁₂, or is a combination of two or three groups independently selected from these groups; R^{m1'} is OCF₂ or OC₂F₄; R^{m2'} is a group selected from OC₂F₄, OC₃F₆, OC₄F₈, OC₅F₁₀, and OC₆F₁₂, or is a combination of two or three groups independently selected from these groups; m37 is an integer of 2 to 100; m37' is an integer of 2 to 100; and R^{r'} is any of the following: 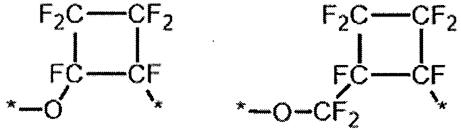 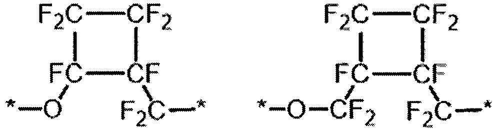 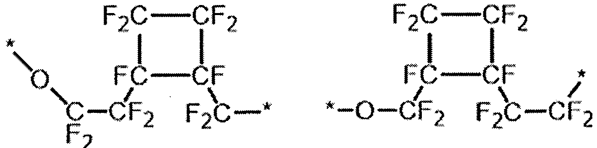 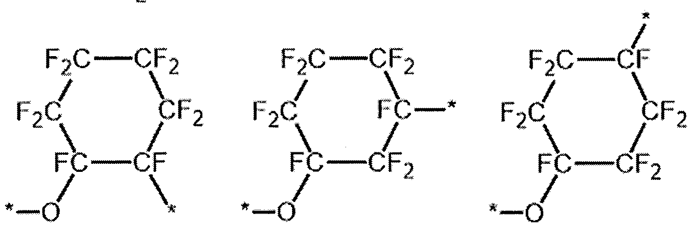 wherein * represents a bond position.

R^{m1}, R^{m2}, and m37 have the same definition as described above and have the same embodiments. R^{m1'}, R^{m2'}, and m37' have the same definition as R^{m1}, R^{m2}, and m37, respectively, and have the same embodiments.

R^{r} is preferably any of the following: 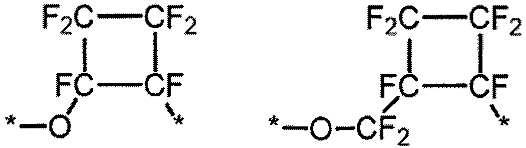 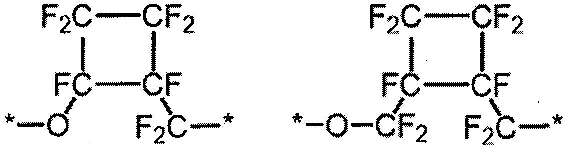 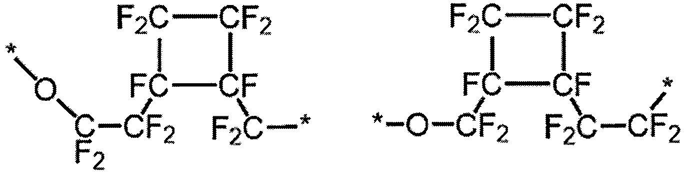 wherein * represents a bond position, and
more preferably 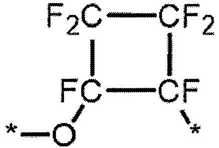 wherein * represents a bond position.

In still another embodiment, the fluoropolyether group is a group represented by - (OC₆F₁₂)m₃₁- (OC₅F₁₀)ₘ₃₂- (OC₄F₈)ₘ₃₃-(OC₃F₆)ₘ₃₄-(OC₂F₄)ₘ₃₅-(OCF₂)ₘ₃₆- (wherein m35 is an integer of 1 or more and 200 or less; m31, m32, m33, m34, and m36 are each independently an integer of 0 or more and 200 or less; the sum of m31, m32, m33, m34, m35 and m36 is at least 1; and the occurrence order of the respective repeating units enclosed in parentheses provided with m31, m32, m33, m34, m35 or m36 is not limited in the formula). m35 is preferably an integer of 1 or more and 100 or less, and more preferably 5 or more and 100 or less. The sum of m31, m32, m33, m34, m35 and m36 is preferably 5 or more, and more preferably 10 or more, for example, 10 or more and 100 or less.

In still another embodiment, the fluoropolyether group is a group represented by - (OC₆F₁₂)ₘ₃₁- (OC₅F₁₀)m₃₂- (OC₄F₈)ₘ₃₃-(OC₃F₆)ₘ₃₄-(OC₂F₄)ₘ₃₅-(OCF₂)ₘ₃₆- (wherein m36 is an integer of 1 or more and 200 or less; m31, m32, m33, m34, and m35 are each independently an integer of 0 or more and 200 or less; the sum of m31, m32, m33, m34, m35 and m36 is at least 1; and the occurrence order of the respective repeating units enclosed in parentheses provided with m31, m32, m33, m34, m35 or m36 is not limited in the formula). m36 is preferably an integer of 1 or more and 100 or less, and more preferably 5 or more and 100 or less. The sum of m31, m32, m33, m34, m35 and m36 is preferably 5 or more, and more preferably 10 or more, for example, 10 or more and 100 or less.

The ratio of m35 to m36 in the fluoropolyether group (hereinafter, referred to as "m35/m36 ratio") is 0.1 to 10, preferably 0.2 to 5, more preferably 0.2 to 2, still more preferably 0.2 to 1.5, and even more preferably 0.2 to 0.85. With an m35/m36 ratio of 10 or less, the lubricity, friction durability, and chemical resistance of a film (surface-treating layer) are further improved. The lower the m35/m36 ratio is, the more improved the lubricity and the friction durability of the film (surface-treating layer) are. On the other hand, with an m35/m36 ratio of 0.1 or more, the stability of the compound can be further enhanced. The larger the m35/m36 ratio is, the more improved the stability of the compound is.

The fluoropolyether group may be at least one chain selected from the group consisting of a chain represented by

formula: -(OCF₂CF₂CX¹¹₂)ₙ₁₁(OCF₂CF(CF₃))ₙ₁₂(OCF₂CF₂)ₙ₁₃(OCF₂)ₙ₁₄(OC₄F₈)ₙ₁₅-

wherein n11, n12, n13, n14, and n15 are independently an integer of 0 or 1 or more;
X¹¹ is independently H, F, or Cl; and
the occurrence order of the respective repeating units is not limited, and
a chain represented by

formula: -(OCF₂-R¹¹)_{f10}-

-wherein R¹¹ is a group selected from OC₂F₄, OC₃F₆, and OC₄F₈, and f10 is an integer of 2 to 100.

X¹¹ is preferably F.

n11 to n15 are each preferably an integer of 0 to 200. The total of n11 to n15 is preferably 2 or more, more preferably 5 to 300, still more preferably 10 to 200, and particularly preferably 10 to 100.

R¹¹ is a group selected from OC₂F₄, OC₃F₆ and OC₄F₈, or is a combination of two or three groups independently selected from these groups. The combination of two or three groups independently selected from OC₂F₄, OC₃F₆, and OC₄F₈ is not limited, and examples thereof include -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, -OC₂F₄OC₂F₄OC₃F₆-, - OC₂F₄OC₂F₄OC₄F₈-, -OC₂F₄OC₃F₆OC₂F₄-, -OC₂F₄OC₃F₆OC₃F₆-, -OC₂F₄OC₄F₈OC₂F₄-, - OC₃F₆OC₂F₄OC₂F₄-, -OC₃F₆OC₂F₄OC₃F₆-, -OC₃F₆OC₃F₆OC₂F₄-, and -OC₄F₈OC₂F₄OC₂F₄-. f is an integer of 2 to 100, and preferably an integer of 2 to 50. In the formulae, OC₂F₄, OC₃F₆, and OC₄F₈ may be linear or branched, and are preferably linear. In this embodiment, the formula: -(OC₂F₄-R¹¹)_{f10}- is preferably formula: -(OC₂F₄-OC₃F₆)_{f10}- or formula: -(OC₂F₄-OC₄F₈)_{f10}-.

In the isocyanuric compound, the number average molecular weight of the fluoropolyether group portion is not limited, and is, for example, 500 to 30,000, preferably 1,500 to 30,000, and more preferably 2,000 to 10,000. The number average molecular weight is a value obtained by ¹⁹F-NMR measurement.

In another embodiment, the number average molecular weight of the fluoropolyether group portion may be 500 to 30,000, preferably 1,000 to 20,000, more preferably 2,000 to 15,000, and even more preferably 2,000 to 10,000, for example, 3,000 to 6,000.

In another embodiment, the number average molecular weight of the fluoropolyether group portion may be 4,000 to 30,000, preferably 5,000 to 10,000, and more preferably 6,000 to 10,000.

R¹ is preferably a monovalent organic group represented by

formula: R³-(OR²)ₐ₁₀-L-
wherein (OR²)ₐ₁₀ is the above fluoropolyether group,
R³ is an alkyl group or a fluorinated alkyl group, and
L is a single bond or a divalent linking group.

R^{1'} is preferably a monovalent organic group represented by

formula: -L'-(OR²)ₐ₁₀-L-

wherein (OR²)ₐ₁₀ is the above fluoropolyether chain,
L is independently a single bond or a divalent linking group,
L' is independently a single bond or a divalent linking group,
L is bonded to the isocyanuric ring on the right side of the formula (2b), and L' is bonded to the isocyanuric ring on the left side.

The number of carbon atoms in R³ is preferably 1 to 16, and preferably 1 to 8.

R³ may be a linear or branched chain, and is preferably a linear or branched alkyl group or fluorinated alkyl group having 1 to 16 carbon atoms, more preferably a linear or branched alkyl group or fluorinated alkyl group having 1 to 8 carbon atoms, still more preferably a linear or branched alkyl group or fluorinated alkyl group having 1 to 6 carbon atoms, even more preferably a linear or branched alkyl group or fluorinated alkyl group having 1 to 3 carbon atoms, and particularly preferably a linear alkyl group or fluorinated alkyl group having 1 to 3 carbon atoms.

R³ is preferably a fluorinated alkyl group having 1 to 16 carbon atoms, more preferably a CF₂H-C₁₋₁₅ fluoroalkylene group or a perfluoroalkyl group having 1 to 16 carbon atoms, and still more preferably a perfluoroalkyl group having 1 to 16 carbon atoms.

The perfluoroalkyl group having 1 to 16 carbon atoms may be linear or branched, and is preferably a linear or branched perfluoroalkyl group having 1 to 6 carbon atoms and particularly 1 to 3 carbon atoms, more preferably a linear perfluoroalkyl group having 1 to 3 carbon atoms, and specifically -CF₃, -CF₂CF₃, or -CF₂CF₂CF₃.

L is a single bond or a divalent linking group directly bonded to the isocyanuric ring of the formula (1b). L is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

L is still more preferably a group represented by

formula: -(CX²²¹X²²²)ₒ₁₀-(L¹)ₚ₁₀-(CX²²³X²²⁴)_{q10}-
wherein X²²¹ to X²²⁴ are independently H, F, OH, or -OSi(OR²²⁵)₃, where three R²²⁵ are independently an alkyl group having 1 to 4 carbon atoms,
L¹ is -C(=O)NH-, -NHC(=O)-, -O-, -C(=O)O-, -OC(=O)-, -OC(=O) O-, or - NHC(=O)NH- (the left side of each bond is bonded to CX²²¹X²²²),
o10 is an integer of 0 to 10,
p10 is 0 or 1, and
q10 is an integer of 1 to 10.

L' is still more preferably a group represented by

-(CX²²⁶X²²⁷)ᵣ₁₀-(CX²²¹X²²²)ₒ₁₀-(L¹)ₚ₁₀-(CX²²³X²²⁴)_{q10}-

wherein X²²¹ to X²²⁴, L¹, o10, p10, and q10 have the same meanings as those defined for L,
X²²⁶ and X²²⁷ are independently H, F, or Cl, and preferably F,
r10 is an integer of 1 to 6, and
-(CX²²⁶X²²⁷)ᵣ₁₀- is bonded to (OR²)ₐ₁₀, and (CX²²³X²²⁴)_{q10} is bonded to the isocyanuric ring.

L¹ is preferably -O- or -C(=O)O-.

L is particularly preferably
a group represented by

   formula: -(CF₂)ₘ₃₁-(CH₂)ₘ₃₂-O-(CH₂)ₘ₃₃-
wherein m31 is an integer of 1 to 3, m32 is an integer of 1 to 3, and m33 is an integer of 1 to 3,
a group represented by

   formula: -(CF₂)ₘ₃₄-(CH₂)ₘ₃₅-O-CH₂CH(OH)-(CH₂)ₘ₃₆-
wherein m34 is an integer of 1 to 3, m35 is an integer of 1 to 3, and m36 is an integer of 1 to 3,
a group represented by

   formula: -(CF₂)ₘ₃₇-(CH₂)ₘ₃₈-
wherein m37 is an integer of 1 to 3, and m38 is an integer of 1 to 3, a group represented by

   -(R^{m1}-R^{m2})ₘ₃₇-R^{r'}-(R^{m1'}-R^{m2'})_{m37'}-, or
a group represented by

   formula: -(CF₂)ₘ₃₉-(CH₂)ₘ₄₀-O-CH₂CH(OSi(OCH₃)₃)-(CH₂)ₘ₄₁-
wherein m39 is an integer of 1 to 3, m40 is an integer of 1 to 3, and m41 is an integer of 1 to 3.

L is not limited, and specific examples thereof include -C₂H₄-, -C₃H₆-, -C₄H₈-O-CH₂-, -CO-O-CH₂-CH(OH)-CH₂-, -(CF₂)ₙ₁₀- (n10 is an integer of 0 to 4), -CH₂-, -C₄H₈-, - (CF₂)ₙ₁₀-(CH₂)ₘ₁₀- (n10 and m10 are independently an integer of 0 to 4), - CF₂CF₂CH₂OCH₂CH(OH)CH₂-, and -CF₂CF₂CH₂OCH₂CH(OSi(OCH₃)₃)CH₂-.

X¹ is a monovalent silane-containing reactive crosslinking group.

The silane-containing reactive crosslinking group contributes to adhesion to the substrate. The crosslinkable group may chemically react with the material of the substrate.

In one embodiment, the silane-containing reactive crosslinking group is preferably a group represented by

formula: -L²-{Si(R^{a})ₛ₁₀(R^{b})ₜ₁₀(R^{c})ᵤ₁₀(R^{d})ᵥ₁₀}ₙ₁₀

wherein L² is a single bond or a divalent linking group,
R^{a}, R^{b}, and R^{c} are the same or different, and are each a hydrogen atom, a hydroxyl group, or a hydrolyzable group; preferably, R^{a}, R^{b}, and R^{c} are the same or different, and are each a hydrogen atom, a halogen atom, a hydroxyl group, an alkoxy group having 1 to 10 carbon atoms, an amino group having 1 to 10 carbon atoms, an acetoxy group having 1 to 10 carbon atoms, an allyl group having 3 to 10 carbon atoms, or a glycidyl group having 3 to 10 carbon atoms; and more preferably, R^{a}, R^{b}, and R^{c} are the same or different, and are each a hydrogen atom, a halogen atom, a hydroxyl group, an alkoxy group having 1 to 10 carbon atoms, an amino group having 1 to 10 carbon atoms, an acetoxy group having 1 to 10 carbon atoms, or an allyl group having 3 to 10 carbon atoms,
R^{d} is the same or different, and is -O-, -NH-, -C=C-, or a silane bond,
s10, t10, and u10 are the same or different, and are 0 or 1, v10 is an integer of 0 to 3, and n10 is an integer of 1 to 20, when n10 is 1, s10 + t10 + u10 is 3, and v10 is 0, and when n10 is 2 to 20, s10 + t10 + u10 is the same or different and is 0 to 2, v10 is the same or different and is 0 to 2, and when v10 is an integer of 1 or more, at least two Si atoms are bonded in a linear, ladder, cyclic, or polycyclic form via R^{d}. R^{a}, R^{b}, and R^{c} are monovalent
groups bonded to Si. R^{d} is a divalent group bonded to two Si atoms.

Preferably, R^{a}, R^{b}, and R^{c} are the same or different, and at least one of them is a hydrogen atom, a halogen atom, a hydroxyl group, an alkoxy group having 1 to 10 carbon atoms, or an amino group having 1 to 10 carbon atoms and the others are each an acetoxy group having 1 to 10 carbon atoms, an allyl group having 3 to 10 carbon atoms, or a glycidyl group having 3 to 10 carbon atoms; more preferably, R^{a}, R^{b}, and R^{c} are the same or different, and at least one of them is a hydrogen atom, a halogen atom, a hydroxyl group, an alkoxy group having 1 to 10 carbon atoms, or an amino group having 1 to 10 carbon atoms and the others are each an acetoxy group having 1 to 10 carbon atoms or an allyl group having 3 to 10 carbon atoms; still more preferably, R^{a}, R^{b}, and R^{c} are the same or different, and they are each a hydroxyl group or an alkoxy group having 1 to 4 carbon atoms; and even more preferably, R^{a}, R^{b}, and R^{c} are the same or different, and they are alkoxy groups having 1 to 4 carbon atoms. Preferably, when n10 is 2 to 20, s10 + t10 + u10 is the same or different and is 0 to 2, and v10 is 0 to 2.

In R^{a}, R^{b}, and R^{c}, halogen is preferably Cl, Br, or I, and more preferably Cl.

In R^{a}, R^{b}, and R^{c}, the number of carbon atoms in the alkoxy group is preferably 1 to 5. The alkoxy group may be linear, cyclic, or branched. A hydrogen atom is optionally substituted with a fluorine atom or the like. The alkoxy group is preferably a methoxy group, an ethoxy group, a propyloxy group, or a butoxy group, and more preferably a methoxy group or an ethoxy group.

R^{d} is the same or different, and is -O-, -NH-, -C≡C-, or a silane bond. R^{d} is preferably -O-, -NH-, or -C=C-. R^{d} is a divalent group bonded to two Si atoms, and due to R^{d}, two or more silicon atoms can be bonded in a linear, ladder, cyclic, or polycyclic form via R^{d}. When n is an integer of 2 or more, silicon atoms may be bonded to each other.

In one embodiment, X¹ is a silane-containing reactive crosslinking group represented by formula:

-L²-{Si(R^{a})ₛ₁₀(R^{b})ₜ₁₀(R^{c})ᵤ₁₀(R^{d'})ᵥ₁₀}ₙ₁₀

wherein L² is a single bond or a divalent linking group,
R^{a}, R^{b}, and R^{c} are the same or different, and are each a hydrogen atom, a hydroxyl group, or a hydrolyzable group; preferably, R^{a}, R^{b}, and R^{c} are the same or different, and are each a hydrogen atom, a halogen atom, a hydroxyl group, an alkoxy group having 1 to 10 carbon atoms, an amino group having 1 to 10 carbon atoms, an acetoxy group having 1 to 10 carbon atoms, an allyl group having 3 to 10 carbon atoms, or a glycidyl group having 3 to 10 carbon atoms; and more preferably, R^{a}, R^{b}, and R^{c} are the same or different, and are each a hydrogen atom, a halogen atom, a hydroxyl group, an alkoxy group having 1 to 10 carbon atoms, an amino group having 1 to 10 carbon atoms, an acetoxy group having 1 to 10 carbon atoms, or an allyl group having 3 to 10 carbon atoms,
R^{d'} is the same or different, and is a group represented by -Z-SᵢR^{d2}ₚ₁₁R^{d3}_{q11}R^{d4}ᵣ₁₁, wherein Z is the same or different, and is a single bond or a divalent linking group, R^{d2} is the same or different, and is R^{d"},
R^{d"} has the same definition as R^{d'},
in R^{d'}, the number of Si atoms linearly linked via Z group is at most 5,
R^{d3} is the same or different, and is a hydroxyl group or a hydrolyzable group,
R^{d4} is the same or different, and is a hydrogen atom or a lower alkyl group,
p11 is the same or different, and is an integer of 0 to 3,
q11 is the same or different, and is an integer of 0 to 3, and
r11 is the same or different, and is an integer of 0 to 3,
provided that the sum of p11, q11, and r11 is 3,
s11, t11, and u11 are the same or different, and are 0 or 1,
v11 is an integer of 0 to 3, and
n10 is an integer of 1 to 20.

In the formula, Z is the same or different, and represents a single bond or a divalent linking group.

Specific examples of Z include -C₂H₄-, -C₃H₆-, -CO-O-CH₂-CH(OH)-CH₂-, -CH₂-, and -C₄H₈-.

In the formula, R^{d2} is the same or different, and represents R^{d"}. R^{d"} has the same definition as R^{d'}.

In R^{d'}, the number of Si atoms linearly linked via Z group is at most 5. That is to say, in R^{d'}, when at least one R^{d2} is present, the number of Si atoms linearly linked via Z group in R^{d'} is two or more, and the number of Si atoms linearly linked via Z group is at most 5. Note that "the number of Si atoms linearly linked via Z group in R^{d'}" is equal to the number of repeats of -Z-Si- linearly linked in R^{d'}.

One example where Si atoms are linked via Z group in R^{d'} is shown below:

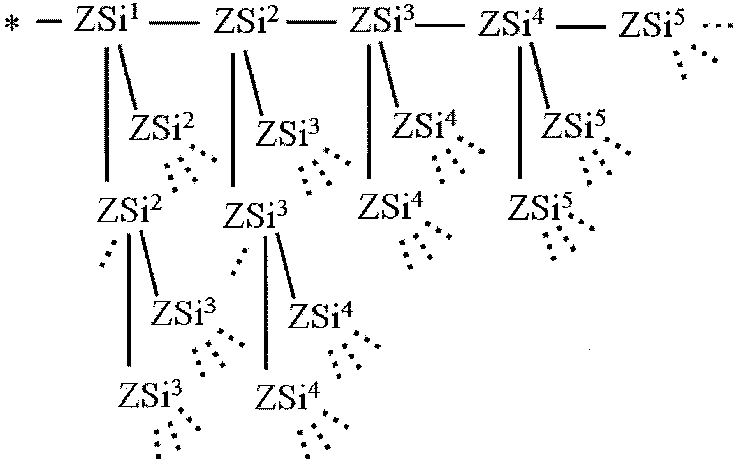

In the formula, "*" means a site to be bonded to the Si atom of the main chain, and "..." means that a predetermined group except ZSi is bonded, or that is to say, when three bonds of a Si atom are all expressed by "...", the repeat of ZSi ends there. The superscripted number on Si means the number of Si atoms that appear and that are linearly linked via Z group when counted from "*". That is to say, a chain where the repetition of ZSi terminates at Si² is a chain where the "number of Si atoms linearly linked via Z group in R^{d'}" is 2, and similarly, chains where the repetition of ZSi terminates at Si³, Si⁴, and Si⁵ mean chains where the "number of Si atoms linearly linked via Z group in R^{d'}" is 3, 4, and 5, respectively. As is clear from the formula, a plurality of ZSi chains are present in R^{d'}, and all these chains do not necessarily have the same length, and may each have any length.

In a preferred embodiment, as shown below, "the number of Si atoms linearly linked via Z group in R^{d'}" is one (left formula) or two (right formula) in all chains.

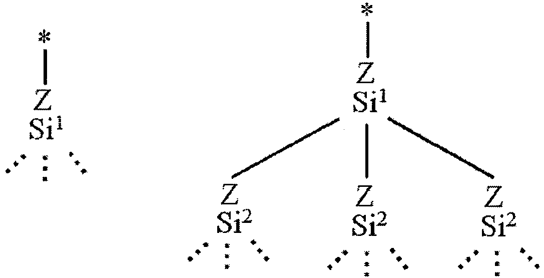

In one embodiment, the number of Si atoms linearly linked via Z group in R^{d'} is one or two, and preferably one.

In the formula, R^{d3} is the same or different, and represents a hydroxyl group or a hydrolyzable group. The hydroxyl group is not limited, and may be generated by hydrolysis of a hydrolyzable group.

Preferably, R^{d3} is -OR (wherein R represents a substituted or unsubstituted C₁₋₃ alkyl group, and more preferably a methyl group).

In the formula, R^{d4} is the same or different, and represents a hydrogen atom or a lower alkyl group. The lower alkyl group is preferably an alkyl group having 1 to 20 carbon atoms, more preferably an alkyl group having 1 to 6 carbon atoms, and still more preferably a methyl group.

In the formula, p11 is the same or different, and is an integer of 0 to 3; q11 is the same or different, and is an integer of 0 to 3; and r11 is the same or different, and is an integer of 0 to 3, provided that the sum of p11, q11, and r11 is 3.

In a preferred embodiment, q11 in R^{d'} (R^{d} in the case where no R^{d'} is present) at an end of R^{d} is preferably 2 or more, such as 2 or 3, and is more preferably 3.

In a preferred embodiment, R^{d} may have at least one -Si(-Z-SiR^{d3}_{q11}R^{d4}ᵣ₁₁)₂ or -Si(-Z-SiR^{d3}_{q11}R^{d4}ᵣ₁₁)₃ at an end, and preferably -Si(-Z-SiR^{d3}_{q11}R^{d4}ᵣ₁₁)₃. In the formula, the (-Z-SiR^{d3}_{q11}R^{d4}ᵣ₁₁) unit is preferably (-Z-SiR^{d3}₃). In a still more preferred embodiment, all ends of R^{d} are preferably -Si(-Z-SiR^{d3}_{q11}R^{d4}ᵣ₁₁)₃, and more preferably -Si(-Z-SiR^{d4}₃)₃. The larger the number of R^{d3} bonded to each Si at an end is, the greater the adhesion to the substrate is, and thus excellent durability can be obtained.

In a preferred embodiment, in the formula, the number of Si atoms having a hydroxyl group or a hydrolyzable group in the formula (1b) may be preferably 1 to 6, more preferably 2 to 4, and still more preferably 3, and in the formula (2b), it may be preferably 2 to 12, more preferably 4 to 8, and still more preferably 6.

In a preferred embodiment, v10 is 3, and R^{d} is each independently -Z-SiR^{d3}_{q11}R^{d4}ᵣ₁₁.

L² is a single bond or a divalent linking group directly bonded to the ring of the formula (α1). L² is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

Specific examples of L² include -C₂H₄-, -C₃H₆-, -C₄H₈-O-CH₂-, -CO-O-CH₂-CH(OH)-CH₂-, -CH₂-, and -C₄H₈-.

Examples of the silane-containing reactive crosslinking group include -L²-SiR⁵₃, - L²-Si(OR⁶⁰)₃, -L²-Si(NR⁶⁰₂)₃, and -L²-Si(OCOR⁶⁰)₃ (in each formula, L² is as described above, R⁵ is a halogen atom, and R⁶⁰ is independently an alkyl group having 1 to 4 carbon atoms).

In one embodiment, the silane-containing reactive crosslinking group is preferably a group represented by

formula: -L⁶- {C(R^{a6})ₛ₆(R^{b6})ₜ₆(R^{c6})ᵤ₆(R^{d6})ᵥ₆}ₙ₆

wherein L⁶ is a single bond or a divalent linking group,
R^{a6}, R^{b6}, and R^{c6} are the same or different, and are each a hydrogen atom, a hydroxyl group, or a hydrolyzable group; preferably, R^{a6}, R^{b6}, and R^{c6} are the same or different, and are each hydrogen, halogen, an alkoxy group having 1 to 10 carbon atoms, an amino group having 1 to 10 carbon atoms, an acetoxy group having 1 to 10 carbon atoms, an allyl group having 3 to 10 carbon atoms, a glycidyl group having 3 to 10 carbon atoms, OCOR⁶⁷ (wherein R⁶⁷ is an alkyl group having 1 to 6 carbon atoms), OH, or -Y⁶-SiR⁶¹ⱼ₆R⁶⁶₃₋ⱼ₆; and more preferably, R^{a6}, R^{b6}, and R^{c6} are the same or different, and are each hydrogen, halogen, an alkoxy group having 1 to 10 carbon atoms, an amino group having 1 to 10 carbon atoms, an acetoxy group having 1 to 10 carbon atoms, an allyl group having 3 to 10 carbon atoms, OCOR⁶⁷ (wherein R⁶⁷ is an alkyl group having 1 to 6 carbon atoms), OH, or -Y⁶-SiR⁶⁵ⱼ₆R⁶⁶₃-j6,
R^{d6} is the same or different, and is -O-, -NH-, -C=C-, or -Z⁶-CR⁶¹ₚ₆R⁶²_{q6}R⁶³ᵣ₆,
Z⁶ is the same or different, and is an oxygen atom or a divalent organic group, wherein R⁶¹ is the same or different, and represents R^{d6'},
R^{d6'} has the same definition as R^{a6},
in R^{d6}, the number of C atoms linearly linked via Z⁶ group is at most 5,
R⁶² is the same or different, and is -Y⁶-SiR⁶ⱼ₆R⁶⁶₃₋ⱼ₆,
Y⁶ is the same or different, and is a divalent organic group,
R⁶⁵ is the same or different, and is a hydroxyl group or a hydrolyzable group,
R⁶⁶ is the same or different, and is a hydrogen atom or a lower alkyl group,
j6 is independently an integer of 1 to 3 in each (-Y⁶-SiR⁶⁵ⱼ₆R⁶⁶₃₋ⱼ₆) unit,
R⁶³ is the same or different, and is a hydrogen atom or a lower alkyl group,
p6 is the same or different, and is an integer of 0 to 3,
q6 is the same or different, and is an integer of 0 to 3,
r6 is the same or different, and is an integer of 0 to 3, and
s6, t6, and u6 are the same or different, and are 0 or 1, v6 is an integer of 0 to 3, and n6 is an integer of 1 to 20,
provided that, in the formula, at least two (-Y⁶-SiR⁶⁵ⱼ₆R⁶⁶₃₋ⱼ₆) are present.

L⁶ is a single bond or a divalent linking group directly bonded to the ring of the formula (α1) or the formula (α2). L⁶ is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

Specific examples of L⁶ include -C₂H₄-, -C₃H₆-, -C₄H₈-O-CH₂-, -CO-O-CH₂-CH(OH)-CH₂-, -CH₂-, and -C₄H₈-.

In R^{a}, R^{b}, R^{c}, R^{a6}, R^{b6}, and R^{c6}, halogen is preferably Cl, Br, or I, and more preferably Cl.

In R^{a}, R^{b}, R^{c}, R^{a6}, R^{b6}, and R^{c6}, the number of carbon atoms in the alkoxy group is preferably 1 to 5. The alkoxy group may be linear, cyclic, or branched. A hydrogen atom is optionally substituted with a fluorine atom or the like. The alkoxy group is preferably a methoxy group, an ethoxy group, a propyloxy group, or a butoxy group, and more preferably a methoxy group or an ethoxy group.

Z⁶ is preferably a C₁₋₆ alkylene group, -(CH₂)_{g10}-O-(CH₂)ₕ₁₀-, wherein g10 is an integer of 0 to 6, such as an integer of 1 to 6, and h10 is an integer of 0 to 6, such as an integer of 1 to 6, or -phenylene-(CH₂)ᵢ₁₀-, wherein i10 is an integer of 0 to 6, and is more preferably a C₁₋₃ alkylene group. These groups are optionally substituted with one or more substituents selected from, for example, a fluorine atom, a C₁₋₆ alkyl group, a C₂₋₆ alkenyl group, and a C₂₋₆ alkynyl group.

In the formula, R⁶¹ each independently at each occurrence represents R^{d6'}. R^{d6'} has the same definition as R^{d6}.

In R^{d6}, the number of C atoms linearly linked via Z⁶ group is at most 5. That is to say, in R^{d6}, when at least one R⁶¹ is present, the number of Si atoms linearly linked via Z⁶ in R^{d6} is two or more, and the number of C atoms linearly linked via Z⁶ group is at most 5. The "number of C atoms linearly linked via Z⁶ group in R^{d6}" is equal to the number of repeats of - Z⁶-C- linearly linked in R^{d6}.

In a preferred embodiment, as shown below, "the number of C atoms linearly linked via Z⁶ group in R^{d6}" is one (left formula) or two (right formula) in all chains.

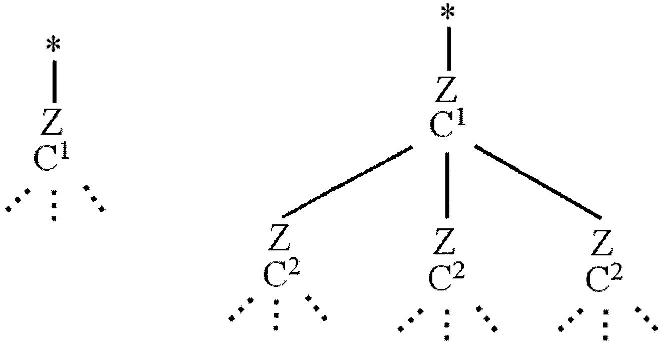

In one embodiment, the number of C atoms linearly linked via Z⁶ group in R^{d6} is 1 or 2, and preferably 1.

In the formula, R⁶² represents -Y⁶-SiR⁶⁵ⱼ₆R⁶⁶₃₋ⱼ₆.

Y⁶ each independently at each occurrence represents a divalent organic group.

In a preferred embodiment, Y⁶ is a C₁₋₆ alkylene group, -(CH₂)_{g11}-O-(CH₂)ₕ₁₁-, wherein g11 is an integer of 0 to 6, such as an integer of 1 to 6, and h11 is an integer of 0 to 6, such as an integer of 1 to 6, or -phenylene-(CH₂)ᵢ₁₁-, wherein i11 is an integer of 0 to 6. These groups are optionally substituted with one or more substituents selected from, for example, a fluorine atom, a C₁₋₆ alkyl group, a C₂₋₆ alkenyl group, and a C₂₋₆ alkynyl group.

In one embodiment, Y⁶ may be a C₁₋₆ alkylene group or -phenylene-(CH₂)ᵢ₁₁-. In the case where Y is any of the above groups, light resistance, in particular, ultraviolet resistance can be more enhanced.

R⁶⁵ each independently at each occurrence represents a hydroxyl group or a hydrolyzable group. Examples of the "hydrolyzable group" are the same as those described above.

Preferably, R⁶⁵ is -OR (wherein R represents a substituted or unsubstituted C₁₋₃ alkyl group, more preferably an ethyl group or a methyl group, and particularly a methyl group).

R⁶⁶ each independently at each occurrence represents a hydrogen atom or a lower alkyl group. The lower alkyl group is preferably an alkyl group having 1 to 20 carbon atoms, more preferably an alkyl group having 1 to 6 carbon atoms, and still more preferably a methyl group.

j6 independently represents an integer of 1 to 3 in each (-Y-SiR⁶⁵ⱼ₆R⁶⁶₃₋ⱼ₆) unit, preferably an integer of 2 or 3, and more preferably 3.

R⁶³ each independently at each occurrence represents a hydrogen atom or a lower alkyl group. The lower alkyl group is preferably an alkyl group having 1 to 20 carbon atoms, more preferably an alkyl group having 1 to 6 carbon atoms, and still more preferably a methyl group.

In the formula, p6 is each independently at each occurrence an integer of 0 to 3, q6 is each independently at each occurrence an integer of 0 to 3, and r6 is each independently at each occurrence an integer of 0 to 3, provided that the sum of p6, q6, and r6 is 3.

In a preferred embodiment, q6 in R^{d6}, (R^{d6} itself in the case where no R^{d6}' is present) at an end of R^{d6} is preferably 2 or more, such as 2 or 3, and is more preferably 3.

In one embodiment, X¹ group is a group represented by

-L²⁻{Si(R^{a})ₛ₁₀(R^{b})ₜ₁₀(R^{c})ᵤ₁₀(R^{d})ᵥ₁₀}ₙ₁₀, or

-L⁶-{C(R^{a6})ₛ₆(R^{b6})ₜ₆(R^{c6})ᵤ₆(R^{d6})ᵥ₆}ₙ₆,

wherein individual reference symbols have the same definition as described above.

In one embodiment, X² may be independently a monovalent organic group containing the above polyether chain. Preferred groups of the organic group are the same as those of R¹.

In another embodiment, X² may be independently the above silane-containing reactive crosslinking group.

In another embodiment, X² may be independently at least one group selected from the group consisting of a silicone residue, a silsesquioxane residue, and a silazane group.

Examples of the silicone residue include the following groups.

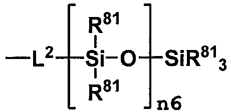

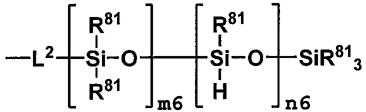

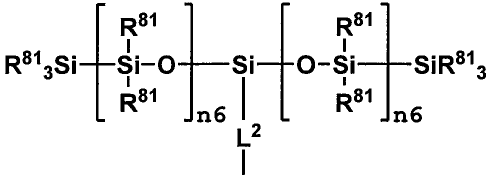

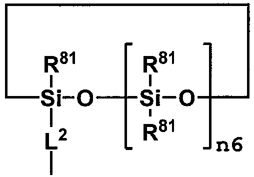

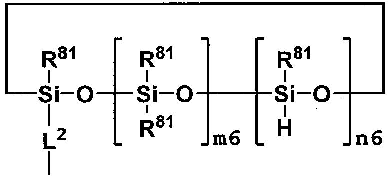

In each formula, L² is a single bond or a divalent linking group, n6 is an integer of 1 to 20, m6 is an integer of 0 to 10, R⁸¹ is each independently a monovalent group, and among R⁸¹ of each group, at least one is a reactive group.

A plurality of R⁸¹ contained in each group are independently a monovalent group, and may be the above reactive group or may be a group different from the above reactive group, provided that at least one of the plurality of R⁸¹ contained in each group is the above reactive group.

The reactive group is preferably H, a halogen atom, or at least one selected from the group consisting of -OR⁸² (R⁸² is an alkyl group having 1 to 4 carbon atoms or an aryl group having 6 to 20 carbon atoms), -L³-SiR⁵₃ (L³ is a single bond or an alkylene group having 1 to 10 carbon atoms, and R⁵ is a halogen atom), -L³-Si(OR⁶⁰)₃ (L³ is as described above, and R⁶⁰ is independently an alkyl group having 1 to 4 carbon atoms), -L³-Si(NR⁶⁰₂)₃ (L³ and R⁶⁰ are as described above), -L³-Si(OCOR⁶⁰)₃ (L³ and R⁶⁰ are as described above), and a group containing any of these groups.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, -CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L² is a single bond or a divalent linking group directly bonded to the ring of the formula (1b) or formula (2b). Suitable examples of L² are as described above.

Examples of the silicone residue also include the following groups.

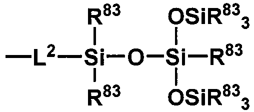

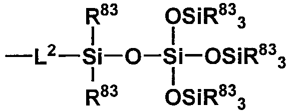

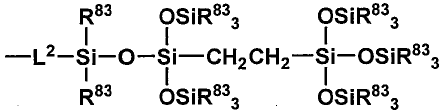

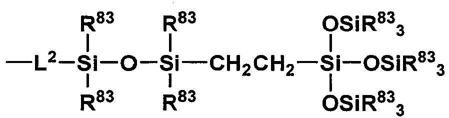

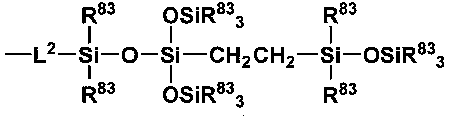

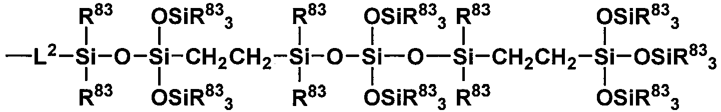

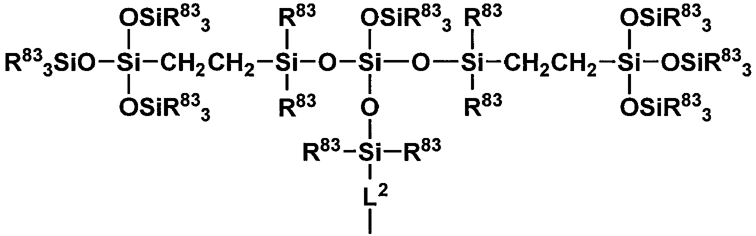

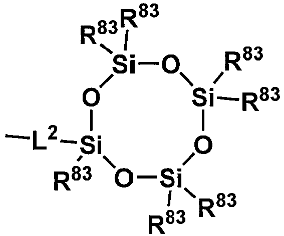

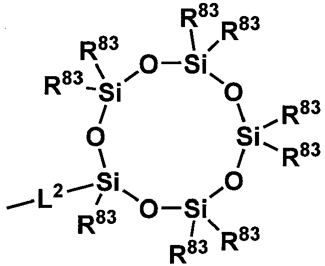

In each formula, L² is a single bond or a divalent linking group, R⁸³ is each independently a monovalent group, and among R⁸³ of each group, at least one is a reactive group.

A plurality of R⁸³ contained in each group are independently a monovalent group, and may be the above reactive group or may be a group different from the above reactive group, provided that at least one of the plurality of R⁸³ contained in each group is the above reactive group.

The reactive group is preferably at least one selected from the group consisting of - H, -OR⁸⁴ (R⁸⁴ is an alkyl group having 1 to 4 carbon atoms), a halogen atom, -OH, -O-CR⁸⁴=CH₂ (R⁸⁴ is as described above), -OCOR⁸⁴ (R⁸⁴ is as described above), -OCOOR^{j2} (R^{j2} is an alkyl group or a halogenated alkyl group), -NR⁸⁴₂ (R⁸⁴ is as described above), and a group containing any of these groups.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, -CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L² is a single bond or a divalent linking group directly bonded to the ring of the formula (α1) or the formula (α2). Suitable examples of L² are as described above.

Examples of the silsesquioxane residue include the following groups.

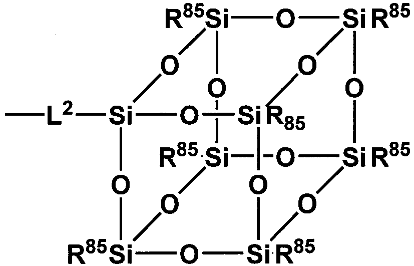

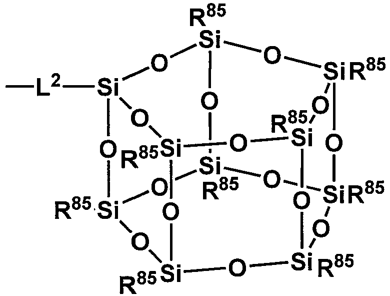

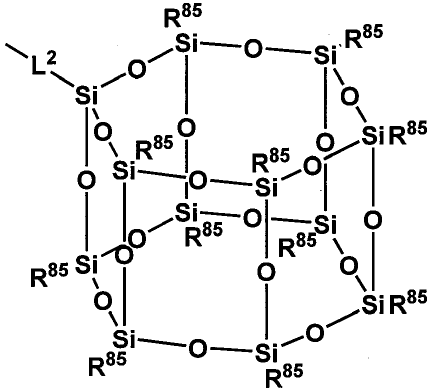

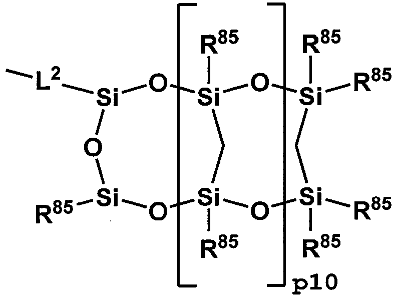

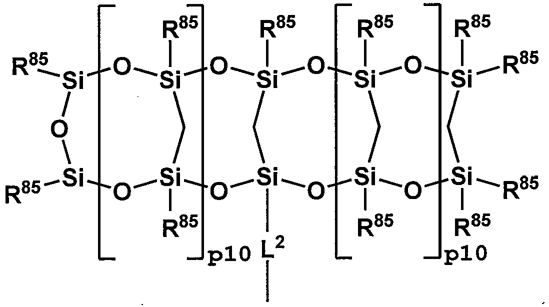

In each formula, L² is a single bond or a divalent linking group; R⁸⁵ is each independently a monovalent group; among R⁸⁵ of each group, at least one is a reactive group; and p10 is independently an integer of 0 to 5000.

A plurality of R⁸⁵ contained in each group are independently a monovalent group, and may be the above reactive group or may be a group different from the above reactive group, provided that at least one of the plurality of R⁸⁵ contained in each group is the above reactive group.

The reactive group is preferably at least one selected from the group consisting of - H, -OR⁸⁴ (R⁸⁴ is an alkyl group having 1 to 4 carbon atoms), a halogen atom, -OH, -O-CR⁸⁴=CH₂ (R⁸⁴ is as described above), -OCOR⁸⁴ (R⁸⁴ is as described above), -OCOOR^{j2} (R^{j2} is an alkyl group or a halogenated alkyl group), -NR⁸⁴₂ (R⁸⁴ is as described above), and a group containing any of these groups.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, -CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L² is a single bond or a divalent linking group directly bonded to the ring of the formula (1b) or the formula (2b). Suitable examples of L² are as described above.

X² may be a group different from the monovalent organic group containing a polyether chain, the silane-containing reactive crosslinking group, the silicone residue, the silsesquioxane residue, and the silazane group described above.

That is to say, X² may be at least one selected from the group consisting of H, an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, -OCOOR^{j2} (R^{j2} is an alkyl group or a halogenated alkyl group), -CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, a halogenated aryl group, a silicone residue (excluding those having a reactive group), and a silsesquioxane residue (excluding those having a reactive group).

Examples of the silicone residue (excluding those having a reactive group) include the following groups. The reactive group is what is exemplified as a reactive group that can constitute R⁸⁵.

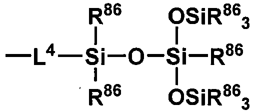

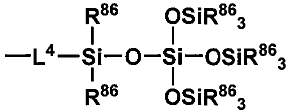

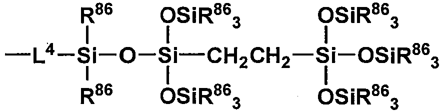

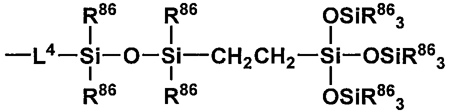

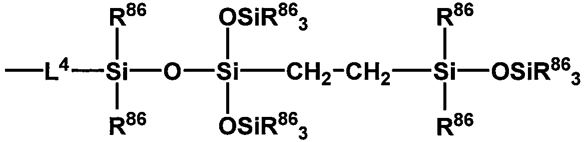

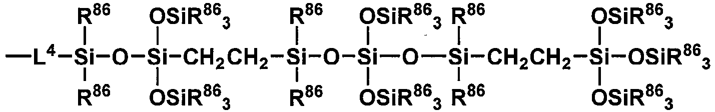

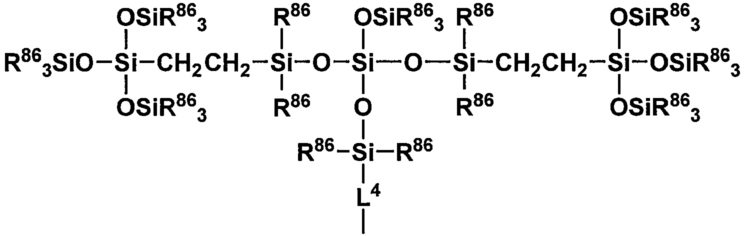

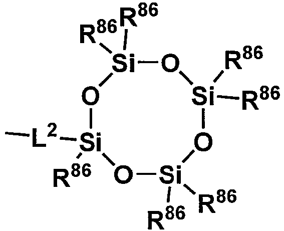

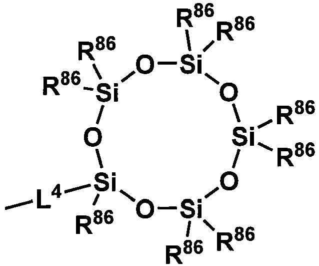

In each formula, L⁴ is a single bond or a divalent linking group, and R⁸⁶ is each independently a group different from a monovalent reactive group.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, -CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L⁴ is a single bond or a divalent linking group directly bonded to the ring of the formula (1b) or the formula (2b). L⁴ is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

Specific examples of L⁴ include -C₂H₄-, -C₃H₆-, -C₄H₈-O-CH₂-, and -CO-O-CH₂-CH(OH)-CH₂-.

Examples of the silsesquioxane residue (excluding those having a reactive group) include the following groups. The reactive group is what is exemplified as a reactive group that can constitute R⁸⁵.

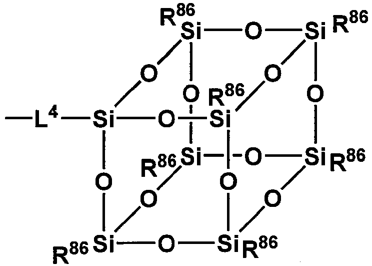

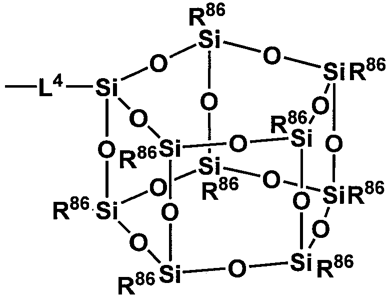

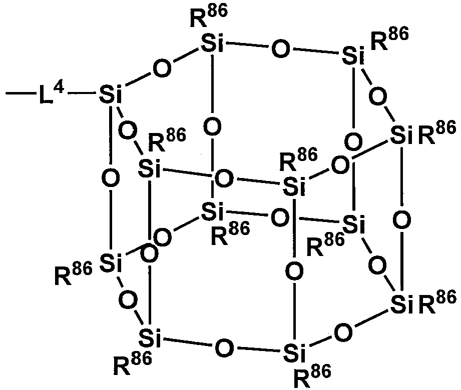

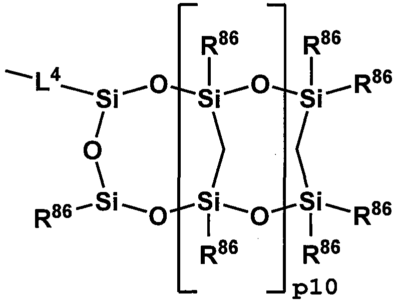

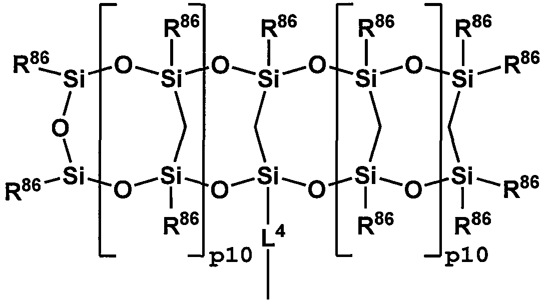

In each formula, L⁴ is a single bond or a divalent linking group, R⁸⁶ is each independently a group different from the monovalent reactive group, and p10 is independently an integer of 0 to 5000.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, -CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L⁴ is a single bond or a divalent linking group directly bonded to the ring of the formula (α1) or the formula (α2). Suitable examples of L⁴ are as described above.

Examples of the silazane group include the following groups.

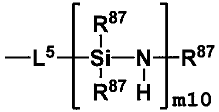

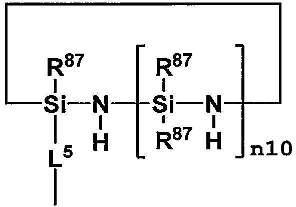

In each formula, L⁵ is a single bond or a divalent linking group; m is an integer of 2 to 100; n is an integer of 100 or less; R⁸⁷ is each independently H, an alkyl group having 1 to 10 carbon atoms, an alkenyl group, a cycloalkyl group having 5 to 12 carbon atoms, an aryl group having 6 to 10 carbon atoms, an alkylsilyl group, an alkylcyano group, or an alkoxy group having 1 to 4 carbon atoms.

L⁵ is a single bond or a divalent linking group directly bonded to the ring of the formula (α1) or the formula (α2). L⁵ is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

Specific examples of L⁵ include -C₂H₄-, -C₃H₆-, -C₄H₈-O-CH₂-, and -CO-O-CH₂-CH(OH)-CH₂-.

Specific examples of the silazane group include the following groups.

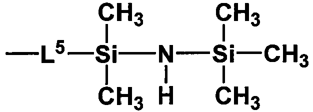

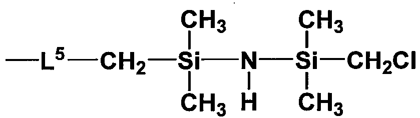

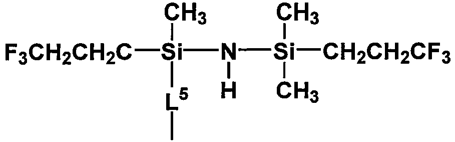

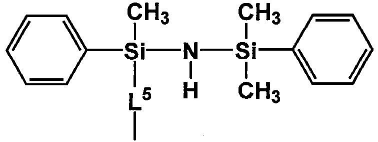

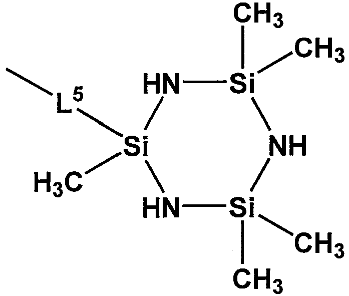

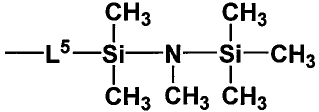

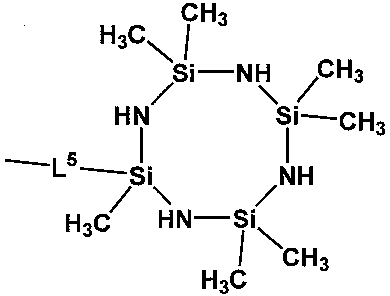

In the above compound, the average molecular weight of R¹ is not limited, and is 500 to 30,000, preferably 1,500 to 30,000, and more preferably 2,000 to 10,000.

The compound may have an average molecular weight of, although the average molecular weight is not limited, 5 × 10² to 1 × 10⁵. In particular, the compound preferably has an average molecular weight of 2,000 to 30,000, and more preferably 2,500 to 12,000, from the viewpoint of UV resistance and friction durability. In the present disclosure, the "average molecular weight" refers to a number average molecular weight, and the "average molecular weight" is a value obtained by ¹⁹F-NMR measurement.

In one embodiment, the compound (A1) may be preferably a compound represented by the formula (1), more preferably a compound represented by the formula (1a), and still more preferably a compound represented by the formula (1b), and in another embodiment, the compound (A1) may be preferably a compound represented by the formula (2), more preferably a compound represented by the formula (2a), and still more preferably a compound represented by the formula (2b).

The average molecular weight of the fluoropolyether group-containing silane compound represented by the formula (1) or the formula (2) may be, but is not limited to, 5 × 10² to 1 × 10⁵. In this range, the average molecular weight is preferably 2,000 to 32,000 and more preferably 2,500 to 12,000 from the viewpoint of abrasion durability. The "average molecular weight" refers to a number average molecular weight, and the "average molecular weight" is a value obtained by ¹⁹F-NMR measurement.

In the compound (A1), the total content of compounds represented by the formula (1) or the formula (2) may be preferably 80% by mass or more and 100% by mass or less, more preferably 90% by mass or more and 100% by mass or less, and still more preferably 95% by mass or more and 100% by mass or less.

The epoxy group-containing silicone compound (A2) preferably comprises a compound represented by formula (3):

**Mₐ₁D_{b1}T_{c1}Q_{d1}** (3)

wherein
M is a monovalent group represented by (R^{s1}₃SiO_{1/2});
D is a divalent group represented by (R^{s1}₂SiO_{2/2});
T is a trivalent group represented by (R^{s1}SiO_{3/2})
Q is a tetravalent group represented by (SiO_{4/2});
R^{s1} is each independently at each occurrence a hydrogen atom, a hydroxyl group, a hydrolyzable group, -X^{s1}-NR^{s2}₂, -X^{s1}-COOH, a group having an epoxy ring, a monovalent organic group, or -X^{s1}-SiR^{s3}ₙ₁₁R^{s4}₃₋ₙ₁₁;
R^{s2} is a hydrogen atom or a C₁₋₂₀ alkyl group;
R^{s3} is a hydroxyl group or a hydrolyzable group;
R^{s4} is a C₁₋₂₀ alkyl group;
X^{s1} is a divalent organic group;
n11 is an integer of 1 to 3;
a1 is an integer of 3 to 60;
b1 is an integer of 10 to 1,100;
c1 is an integer of 0 to 30;
d1 is an integer of 0 to 15; and
c1 + d1 is 1 or more,
provided that at least one R^{s1} contains an epoxy ring and at least one other R^{s1} is a hydroxyl group or a hydrolyzable group.

Examples of the group having an epoxy ring include an epoxy group (monocyclic epoxy group); and a polycyclic epoxy group such as an epoxycyclohexyl group and an epoxynorbornyl group.

Examples of the hydrolyzable group include -OR^{j}, -OCOR^{j}, -O-N=CR^{j}₂, -NR^{j}₂, - NHR^{j}, -NCO, or halogen (in these formulae, R^{j} represents a substituted or unsubstituted C₁₋₄ alkyl group), and it is more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

SiO_{1/2} indicates that an O atom is bonded to a Si atom, and the Si atom shares the O atom with the other atom bonded via the O atom. SiO_{1/2}, SiO_{2/2}, and SiO_{3/2} mean that the Si atom has one, two, or three of such O atoms, respectively.

In the formula (3), R^{s1} is each independently at each occurrence a hydrogen atom, a hydroxyl group, -X^{s1}-COOH, a group having an epoxy ring, a hydrolyzable group, a monovalent organic group, -X^{s1}-NR^{s2}₂, or -X^{s1}-SiR^{s3}ₙ₁₁R^{s4}₃₋ₙ₁₁, provided that R^{s2} is each independently at each occurrence a hydrogen atom or a C₁₋₂₀ alkyl group; R^{s3} is each independently at each occurrence a hydroxyl group or a hydrolyzable group; R^{s4} is each independently at each occurrence a C₁₋₂₀ alkyl group; and X^{s1} is each independently at each occurrence a divalent organic group.

Examples of the hydrolyzable group include -OR^{j}, -OCOR^{j}, -O-N=CR^{j}₂, -NR^{j}₂, - NHR^{j}, -NCO or halogen (in these formulae, R^{j} represents a substituted or unsubstituted C₁₋₄ alkyl group), and it is more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

In R^{s1}, the monovalent organic group is preferably a C₁₋₄₀₀ hydrocarbon group, and more preferably a C₁₋₄₀₀ aliphatic hydrocarbon group. -CH₂- contained in the hydrocarbon group (preferably aliphatic hydrocarbon group) may be replaced by -O-, -CO-, -NR^{j3}- (R^{j3} represents a hydrogen atom; or a substituted or unsubstituted C₁₋₄ alkyl group), and hydrogen atoms in such a hydrocarbon group (preferably aliphatic hydrocarbon group) may be replaced by a hydroxyl group, a carboxy group, a group having an epoxy ring. The hydrocarbon group (preferably aliphatic hydrocarbon group) may be either linear, branched, or cyclic, and may be either saturated or unsaturated. The hydrocarbon group (preferably aliphatic hydrocarbon group) may also contain one or more ring structures. The group having an epoxy ring has the same definition as described above.

In one embodiment, the C₁₋₄₀₀ hydrocarbon group may be a C₁₋₃₀ aliphatic hydrocarbon group or may be a C₁₋₂₅ aliphatic hydrocarbon group. In another embodiment, the C₁₋₄₀₀ hydrocarbon group may be a C₁₋₃₀₀ aliphatic hydrocarbon group, may be a C₁₀₋₁₅₀ aliphatic hydrocarbon group, or may be a C₁₅₋₁₂₀ aliphatic hydrocarbon group. In still another embodiment, the C₁₋₄₀₀ hydrocarbon group may be a C₁₀₋₅₀ aliphatic hydrocarbon group or may be a C₁₅₋₄₀ aliphatic hydrocarbon group.

In the formula, X^{s1} is preferably, each independently at each occurrence, -R^{s8}-Oₓ₁₀-R^{s9}- (wherein R^{s8} and R^{s9} are each independently at each occurrence a single bond or a C₁₋₂₀ alkylene group, and x10 is 0 or 1). Such a C₁₋₂₀ alkylene group may be linear or branched, and is preferably linear. Such a C₁₋₂₀ alkylene group is preferably a C₁₋₁₀ alkylene group, more preferably a C₁₋₆ alkylene group, and still more preferably a C₁₋₃ alkylene group.

In the formula, R^{s2} is each independently at each occurrence a hydrogen atom or a C₁₋₂₀ alkyl group. Such a C₁₋₂₀ alkyl group may be linear or branched, and is preferably a linear or branched C₁₋₁₆ alkyl group, furthermore linear or branched C₁₋₆ alkyl group, and in particular linear or branched C₁₋₃ alkyl group, and is preferably a linear C₁₋₆ alkyl group, and in particular linear C₁₋₃ alkyl group.

In the formula, R^{s3} is each independently at each occurrence a hydroxyl group or a hydrolyzable group. Examples of such a hydrolyzable group include -OR^{j}, -OCOR^{j}, -ON=CR^{j}₂, -NR^{j}₂, -NHR^{j}, -NCO or halogen (in these formulae, R^{j} represents a substituted or unsubstituted C₁₋₄ alkyl group), and it is more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

In the formula, R^{s4} is each independently at each occurrence a C₁₋₂₀ alkyl group. Such a C₁₋₂₀ alkyl group may be linear or branched, and is preferably a linear or branched C₁₋₁₆ alkyl group, furthermore linear or branched C₁₋₆ alkyl group, and in particular linear or branched C₁₋₃ alkyl group, and is preferably a linear C₁₋₆ alkyl group, and in particular linear C₁₋₃ alkyl group.

The above -X^{s1}-NR^{s2}₂, monovalent organic group, or -X^{s1}-SiR^{s3}ₙ₁₁R^{s4}₃₋ₙ₁₁ is optionally substituted with one or more substituents. Examples of such substituents include a halogen atom; and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group, each of which is optionally substituted with one or more halogen atoms; a hydroxyl group, hydrolyzability, and an epoxy group. Examples of such a hydrolyzable group include -OR^{j}, -OCOR^{j}, -O-N=CR^{j}₂, -NR^{j}₂, -NHR^{j}, -NCO, or halogen (in these formulae, R^{j} represents a substituted or unsubstituted C₁₋₄ alkyl group), and it is more preferably -OR^{j} (that is, an alkoxy group). Examples of R^{j} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j} is a methyl group, and in another embodiment, R^{j} is an ethyl group.

Examples of R^{s1} include groups represented by the following formulae.

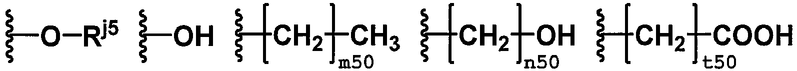

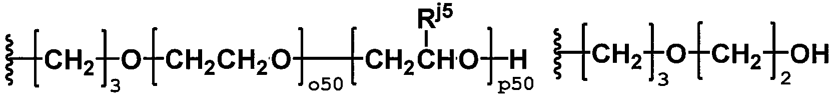

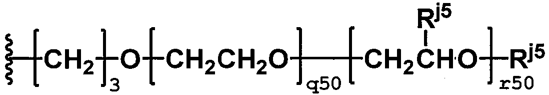

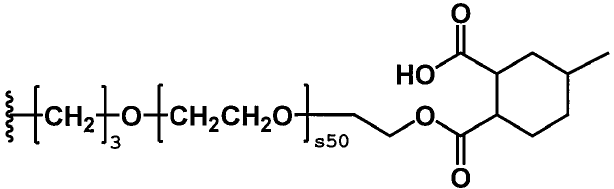

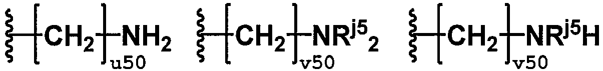

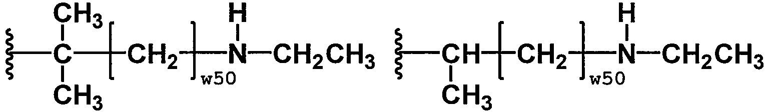

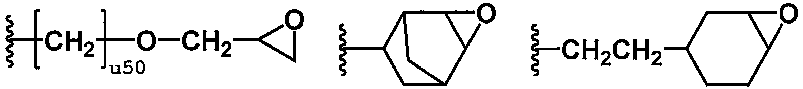

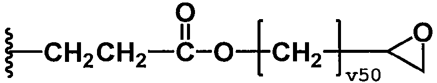

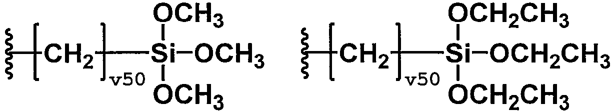

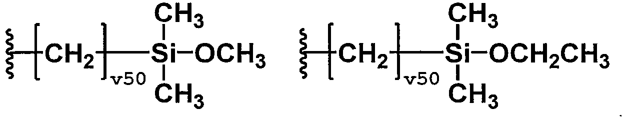

In the formulae, R^{j5} represents a substituted or unsubstituted C₁₋₄ alkyl group. Examples of R^{j5} include unsubstituted alkyl groups such as a methyl group, an ethyl group, a propyl group, an isopropyl group, an n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{j5} is a methyl group, and in another embodiment, R^{j5} is an ethyl group.

m50 represents an integer of 6 to 20, and preferably represents an integer of 8 to 18. n50 represents an integer of 2 to 18, and preferably represents an integer of 4 to 8. o50 represents an integer of 0 to 30, and preferably represents an integer of 2 to 20, in particular an integer of 5 to 15. p50 represents an integer of 0 to 30, and preferably represents an integer of 0 to 10. q50 represents an integer of 0 to 30, and preferably represents an integer of 2 to 20, in particular an integer of 5 to 15. r50 represents an integer of 0 to 30, and preferably represents an integer of 0 to 10. s50 represents an integer of 0 to 10, and preferably represents an integer of 1 to 5. t50 represents an integer of 1 to 20, and preferably represents an integer of 1 to 10. u50 represents an integer of 1 to 10, and preferably represents an integer of 2 to 4. v50 represents an integer of 1 to 10, and preferably represents an integer of 2 to 5. w50 represents an integer of 1 to 6, and preferably represents an integer of 1 to 3.

In the formula (3), at least one R^{s1} contains an epoxy ring and at least one other R^{s1} is a hydroxyl group or a hydrolyzable group. The epoxy ring may be a monocyclic epoxy ring, or may be a polycyclic epoxy ring, such as an epoxycyclodecane ring or an epoxynorbomane ring. The epoxy ring-containing group in R^{s1} includes any of the following cases: when R^{s1} is an epoxy group; when a substituent of -X^{s1}-NR^{s2}₂, a monovalent organic group, or -X^{s1}-SiR^{s3}ₙ₁₁R^{s4}₃₋ₙ₁₁ represented by R^{s1} is an epoxy group; and when -CH₂-contained in R^{s1} is replaced by -O-, thereby forming an epoxy group.

The epoxy equivalent in the epoxy group-containing silicone compound (A2) (molecular weight of the epoxy group-containing silicone compound (A2)/number of epoxy rings contained in one molecule of the epoxy group-containing silicone compound (A2)) is, for example, 50 g/eq or more and 1,000 g/eq or less, more preferably 100 g/eq or more and 800 g/eq or less, and still more preferably 200 g/eq or more and 600 g/eq or less.

In the formula (3), still other at least one R^{s1} preferably has a group selected from the group consisting of an organic group having a hydroxyl group as a substituent, a carboxylate group, a hydroxyethylpropyl group, an alkoxysilylalkyl, a dodecyl group, or an aminoalkyl group.

a1 represents an integer of 3 to 60, preferably an integer of 3 to 40, and more preferably an integer of 3 to 24. b1 represents an integer of 10 to 1,100, preferably an integer of 30 to 920, and more preferably 50 to 820. c1 represents an integer of 0 to 30, and preferably represents an integer of 0 to 20. d1 represents an integer of 0 to 15, and preferably represents an integer of 0 to 12. Note that the total of c1 and d1 is 1 or more. Since the total of c1 + d1 is 1 or more, the epoxy group-containing silicone compound (A2) contains a branched structure.

It can be understood that a1, b1, c1, and d1 are average values in the epoxy group-containing silicone compound (A2) contained in the composition described above.

In the formula (3), the bonding order of M, D, T, and Q is not limited. In one embodiment, M, D, T, and Q may be randomly distributed. For example, individual M, D, T, and Q may be randomly bonded, individual M, D, T, and Q may be alternately arranged, or blocks containing an arbitrary number of M, D, T, or Q may be arbitrarily contiguous. Alternatively, M, D, T, and Q may form a distribution gradient in the formula (3), and in particular, may form any mixed form.

The epoxy group-containing silicone compound (A2) may include both a side chain-modified siloxane and an α,ω-modified siloxane. It can also be said that since the epoxy group-containing silicone compound (A2) contains a branched structure, it has more substitution possibilities and may have a higher degree of modification compared to a pure linear structure. This results in a structure having a long, continuous siloxane main chain. When the number of functional groups in the siloxane is larger, the crosslink density in the resulting film (surface-treating layer) may be higher, the resistance (strength) of the film (surface-treating layer) may be further improved, and a significant anti-adhesion effect can be expected.

The epoxy group-containing silicone compound (A2) is preferably an organo-modified siloxane that is mono-branched (so-called mono-T structure or mono-Q structure) or multi-branched (so-called multi-T structure or multi-Q structure) in the siloxane moiety.

The epoxy group-containing silicone compound (A2) is described in, for example, WO 2011/088937 A, EP 2176319 B, and EP 2159248 B, and can be used.

The average degree of branching of the epoxy group-containing silicone compound (A2) is preferably more than 1, and more preferably more than 1.25.

The average degree of branching K is understood in the scope of the present disclosure to be the ratio of the number of M units (a1) to the total of the number of T units (c1) and the number of Q units (d1) (a1/(c1 + d1)). The names of the units correspond to internationally recognized nomenclature, and their names can also be found in, for example, the Thieme Roempp Online, Georg Thieme Verlag, 2008. The degree of branching is determined by specifying the ratio of the area integrals of the peaks in the ²⁹Si NMR spectrum assigned to the respective units.

The average number of directly contiguous D units, F1, in the epoxy group-containing silicone compound (A2) is preferably 5 or more, and more preferably 10 or more.

The above coefficient F1 is understood in the scope of the present disclosure to mean the average number of directly contiguous D units and to be calculated as b1/(1 + 2 × c1 + 3 × d1) based on the number of D units (b1), the number of T units (c1), and the number of Q units (d1). The coefficient F1 represents the silicone characteristics of the epoxy group-containing silicone compound (A2). The F1 is determined by forming the ratio of the area integrals of the peaks in the ²⁹Si NMR spectrum assigned to the respective units.

The weight average molecular weight of the epoxy group-containing silicone compound (A2) is preferably 1,000 to 70,000, more preferably 1,500 to 50,000, and still more preferably 2,000 to 35,000.

The viscosity of the epoxy group-containing silicone compound (A2) is preferably 50 mPa·s or more and 5,000 mPa·s or less, more preferably 100 mPa·s or more and 3,500 mPa·s or less, and still more preferably 150 mPa·s or more and 2,000 mPa·s or less. The viscosity of the silicone compound represented by the formula (3) can be measured at 25°C in accordance with DIN 53015.

The above reaction product (A3) can be produced by allowing the compounds (A1) and (A2) to react with each other. Such a reaction may be carried out in the presence of a reaction solvent or in the absence of a solvent. In one embodiment, the reaction temperature may be preferably 20°C or higher and 150°C or lower, and more preferably 50°C or higher and 130°C or lower, and the reaction time may be preferably 10 minutes or longer and 50 hours or shorter. As the reaction solvent, the following may be used: fluorinated solvents such as 1,3-bistrifluoromethylbenzene, methyl nonafluorobutyl ether, methyl nonafluoroisobutyl ether, ethyl nonafluorobutyl ether, ethyl nonafluoroisobutyl ether, 1,1,1,2,2,3,4,5,5,5-decafluoro-3-methoxy-4-(trifluoromethyl)-pentane, perfluorohexane, 1,1,1,2,2,3,3,4,4,5,5,6,6-tridecafluorooctane; carboxylic acid esters such as ethyl acetate, n-butyl acetate, tert-butyl acetate, diethyl oxalate, ethyl pyruvate, ethyl 2-hydroxybutyrate, ethyl acetoacetate, amyl acetate, ethyl butyrate, butyl butyrate, methyl lactate, ethyl lactate, methyl 3-methoxypropionate, ethyl 3-methoxypropionate, methyl 2-hydroxyisobutyrate, ethyl 2-hydroxyisobutyrate, and diethyl acetate; carbonic acid esters such as dimethyl carbonate and ethylene carbonate; ester solvents such as γ-butyrolactone and other cyclic esters; aliphatic hydrocarbon solvents such as alkanes, alkenes, alkynes, and cycloalkanes; aromatic hydrocarbon solvents such as benzene, toluene, and naphtha cut.

In the organic silane compound (A), the content of the reaction product (A3) between the fluoropolyether group-containing silane compound (A1) and the epoxy ring-containing silicone compound (A2) can be preferably 1% by mass or more and 50% by mass or less, more preferably 2% by mass or more and 35% by mass or less, and still more preferably 3% by mass or more and 20% by mass or less.

The content of the organic silane compound (A) in the non-volatile components in the composition of the present disclosure can be preferably 60% by mass or more and 99% by mass or less, and more preferably 70% by mass or more and 95% by mass or less.

In the composition of the present disclosure, the non-volatile components may be the portion obtained by excluding the solvent (D) from the entire composition.

### <Cross-linking agent (B)>

The composition of the present disclosure may further comprise a cross-linking agent (B). This allows the organic silane compound (A) to be cured. In one embodiment, such a cross-linking agent preferably comprises a compound (B1) having two or more groups capable of reacting with at least one of an epoxy group and a hydrolyzable silyl group.

As the groups capable of reacting with at least one of an epoxy group and a hydrolyzable silyl group, at least one selected from the group consisting of -OR^{b5}, a carboxy group, an epoxy group, -NR^{b5}₂, and -SiR^{b6}ₙ₆R^{b7}₃₋ₙ₆, is preferred. Note that R^{b5} is each independently at each occurrence a hydrogen atom or a C₁₋₂₀ alkyl group; R^{b6} is each independently at each occurrence a hydroxyl group or a hydrolyzable group; R^{b7} is each independently at each occurrence a C₁₋₂₀ alkyl group; and n6 may be an integer of 1 to 3.

In the cross-linking agent (B), the number of groups capable of reacting with at least one of an epoxy group and a hydrolyzable silyl group is 2 or more in one molecule, and for example, it may be 6 or less, and further 4 or less.

Examples of the cross-linking agent (B) may include:
· an organic silicon compound having at least two silanol groups in one molecule, and
· an organic silicon compound represented by any of the formulae (B3) to (B5) described later.

Organic silicon compound having at least two silanol groups in one molecule:
In the organic silicon compound, the two silanol groups are preferably present at both terminals of the molecular backbone. The molecular backbone here represents a relatively longest binding chain in a molecule of the organic silicon compound.

Examples of the compound having silanol groups at both terminals of the molecular backbone may include a compound represented by the following formula (B1) or (B2).

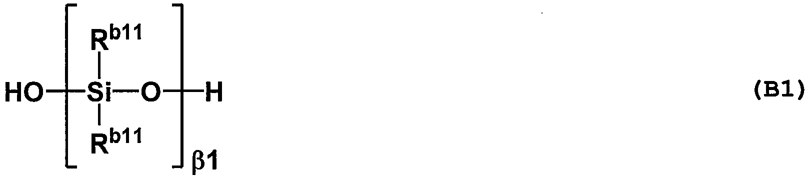

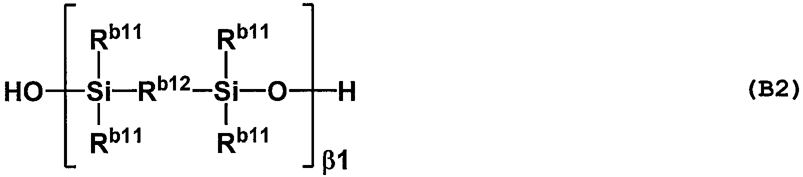

In the formula (B1) or (B2), R^{b11} is each independently at each occurrence a substituted or unsubstituted monovalent hydrocarbon group having 1 to 8 carbon atoms. Specific examples of R^{b11} include alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, and a decyl group; cycloalkyl groups such as a cyclopentyl group, a cyclohexyl group, and a cycloheptyl group; alkenyl groups such as a vinyl group, an allyl group, a propenyl group, an isopropenyl group, a butenyl group, an isobutenyl group, a hexenyl group, and a cyclohexenyl group; aryl groups such as a phenyl group, a tolyl group, a xylyl group, and a naphthyl group; aralkyl groups such as a benzyl group, a phenylethyl group, and a phenylpropyl group; groups in which some or all of the hydrogen atoms of these groups are replaced by halogen atoms (for example, a chloromethyl group, a bromoethyl group, a chloropropyl group, a trifluoropropyl group, and a nonafluorohexyl group).

Examples of the substituent for the hydrocarbon group include at least one selected from the group consisting of -OR^{b5}, a carboxy group, an epoxy group, -NR^{b5}₂, and - SiR^{b6}ₙ₆R^{b7}₃₋ₙ₆. R^{b5}, R^{b6}, and R^{b7} have the same definition as described above.

In the formula (B1) or (B2), R^{b12} is each independently at each occurrence a substituted or unsubstituted divalent hydrocarbon group having 1 to 20 carbon atoms, preferably 2 to 10 carbon atoms. As R^{b12}, specifically, the following are exemplified: alkylene groups such as a methylene group, an ethylene group, a propylene group, a methylethylene group, a butylene group, and a hexamethylene group; cycloalkylene groups such as a cyclohexylene group; arylene groups such as a phenylene group, a tolylene group, a xylylene group, a naphthylene group, and a biphenylene group; groups in which some or all of the hydrogen atoms of these groups are replaced by halogen atoms or the like; and combinations of these substituted or unsubstituted alkylene groups and arylene groups. Among these, as R^{b12}, a methylene group, an ethylene group, a propylene group, a butylene group, a hexamethylene group, a cyclohexylene group, and a phenylene group are preferred, and in particular, an ethylene group, a propylene group, a butylene group, and a phenylene group are preferred. Examples of the compound having silanol groups in the molecule include a resinous compound constituted by bonds between one of or a combination of two or more of R^{b11}₃SiO_{1/2}, R^{b11}₂SiO_{2/2}, R^{b11}SiO_{3/2}, and SiO₂ units and silanol groups. The constituent units in the resinous compound may be directly bonded to each other or may be bonded via a divalent or higher hydrocarbon group.

Examples of the substituent for the hydrocarbon group include at least one selected from the group consisting of -OR^{b5}, a carboxy group, an epoxy group, -NR^{b5}₂ and - SiR^{b6}ₙ₆R^{b7}₃₋ₙ₆. R^{b5}, R^{b6} and R^{b7} have the same definition as described above.

In the formula (B1) or (B2), β1 is each independently at each occurrence an integer of 1 or more. β1 is preferably 2 or more, more preferably 5 or more, and is preferably 50 or less, more preferably 20 or less.

The organic silicon compound having at least two silanol groups in one molecule (specifically, the compound represented by the formula (B1) or (B2)) is preferably free from a PFPE structure in the molecular structure.

Organic silicon compound represented by formula (B3), (B4), or (B5):

**(R^{b13}-O)_{β2}-Si-R^{b14}_{4-β2}** **(B3)**

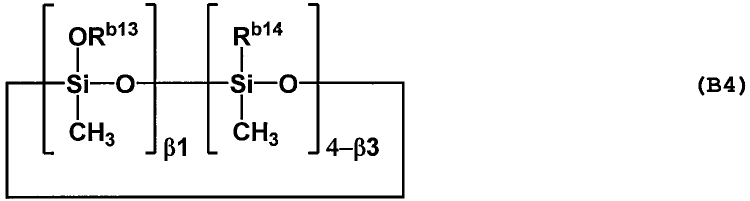

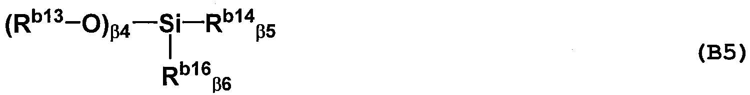

In the formulae (B3) and (B4), R^{b13} is a hydrogen atom or a monovalent organic group. R^{b13} is the moiety capable of reacting with a hydrolyzable silyl group.

R^{b13} is preferably a monovalent organic group.

R^{b13}- is more preferably, each independently at each occurrence, CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or

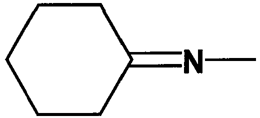

In the formulae (B3) and (B4), R^{b14} is each independently at each occurrence a monovalent organic group. R^{b14} is preferably a substituted or unsubstituted monovalent hydrocarbon group, and more preferably a substituted or unsubstituted monovalent C₁₋₁₂ hydrocarbon group. Specific examples of R^{b14} may include alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, and a decyl group; cycloalkyl groups such as a cyclopentyl group, a cyclohexyl group, and a cycloheptyl group; aryl groups such as a phenyl group, a tolyl group, a xylyl group, and a naphthyl group; aralkyl groups such as a benzyl group, a phenylethyl group, and a phenylpropyl group; alkenyl groups such as a vinyl group, an allyl group, a propenyl group, and a butenyl group; and groups in which some or all of the hydrogen atoms of these groups are replaced by halogen atoms such as fluorine, chlorine, and bromine, or the like (for example, a chloromethyl group, a bromoethyl group, a chloropropyl group, a trifluoropropyl group, and a 3,3,4,4,5,5,6,6,6-nonafluorohexyl group).

Examples of the substituent for the above hydrocarbon group include at least one selected from the group consisting of -OR^{b5}, a carboxy group, an epoxy group, -NR^{b5}₂, and - SiR^{b6}ₙ₆R^{b7}₃₋ₙ₆. R^{b5}, R^{b6}, and R^{b7} have the same definition as described above.

In one embodiment, R^{b14} may be a group represented by the following general formula.

Rf¹-R^{b15}-

In the formula, Rf¹ is a monovalent fluorinated polyether group. As Rf¹, those with a structure in which CF₃O-, CF₃CF₂O-, CF₃CF₂CF₂O-, (CF₃)₂CFO-, CF₃CF₂CF₂CF₂O-, or the like is bonded to the CF₂ terminal of the PFPE are exemplified.

R^{b15} is a divalent organic group. The divalent organic group has the same definition as described above.

R^{b15} may be, for example, a substituted or unsubstituted divalent hydrocarbon group that may contain one of or two or more of an oxygen atom, a nitrogen atom, a silicon atom, and a sulfur atom, and may contain an amide bond or a sulfonamide bond. The divalent hydrocarbon group preferably has 2 to 20 carbon atoms. Here, specific examples of the substituted or unsubstituted divalent hydrocarbon group in which no oxygen atom, nitrogen atom, silicon atom, or sulfur atom intervenes and that does not contain an amide bond or a sulfonamide bond include the following: alkylene groups such as an ethylene group, a propylene group, a methylethylene group, a butylene group, and a hexamethylene group; cycloalkylene groups such as a cyclohexylene group; arylene groups such as a phenylene group, a tolylene group, a xylylene group, a naphthylene group, and a biphenylene group; combinations of these alkylene groups and arylene groups; and groups in which some or all of the hydrogen atoms of these alkylene groups and arylene groups are replaced by halogen atoms.

In the divalent hydrocarbon group, an oxygen atom may be contained as -O-, a nitrogen atom may be contained as -NR^{b51}- (R^{b51} is a hydrogen atom, a C₁₋₁₀ alkyl group, or a C₁₋₁₀ aryl group) or as -N=, a silicon atom may be contained as -SiR^{b52}R^{b53}- (R^{b52} and R^{b53} are each independently at each occurrence an alkyl group or aryl group having 1 to 10 carbon atoms), and a sulfur atom may be contained as -S-. Also, in the divalent hydrocarbon group, an amide bond may be contained as -C(=O)NR^{b51}- (R^{b51} is the same as described above), and a sulfonamide bond may be contained as -SO₂NR^{b51}- (R^{b51} is the same as described above). Specific examples of such a divalent hydrocarbon group include the following. Note that in the following formulae, Me represents a methyl group and Ph represents a phenyl group, and in each of the following formulae, the Rf¹ group is bonded to the left side (J in each formula).

Examples of the substituent for the above hydrocarbon group include at least one selected from the group consisting of -OR^{b5}, a carboxy group, an epoxy group, -NR^{b5}₂ and - SiR^{b6}ₙ₆R^{b7}₃₋ₙ₆. R^{b5}, R^{b6} and R^{b7} have the same definition as described above.

**J-CH₂CH₂-O-CH₂CH₂CH₂- J-CH₂-O-CH₂CH₂CH₂-**

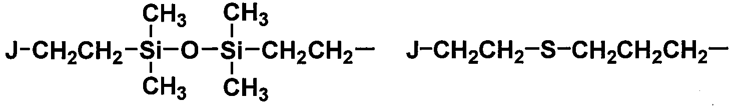

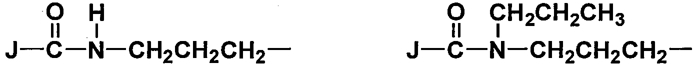

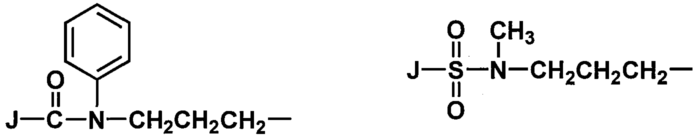

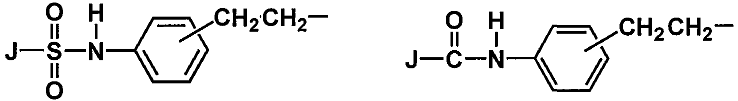

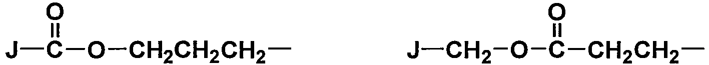

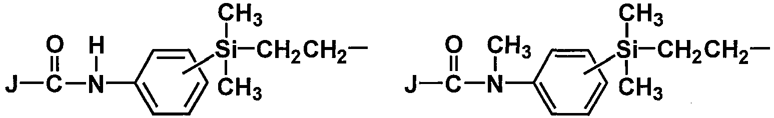

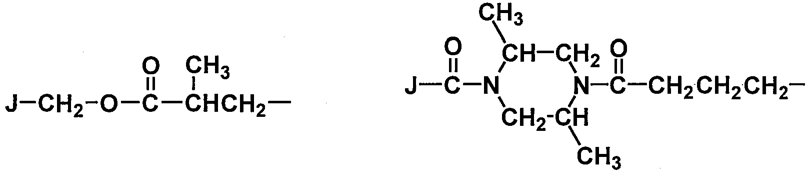

wherein J represents a bonding site.

In the formulae (B3) and (B4), β2 is each independently at each occurrence 2 or 3, and β3 is each independently at each occurrence 2 or 3.

In the formula (B5), R^{b13} and R^{b14} have the same definition as described above. In the formula (B5), R^{b16}- each independently at each occurrence represents R^{b18}-R^{b17}-.

R^{b17} each independently at each occurrence represents a single bond, an oxygen atom, or a divalent organic group. The divalent organic group is as described above.

R^{b17} is preferably a C₁₋₁₀ alkylene group, or a group having 1 to 10 carbon atoms and containing a nitrogen atom or an oxygen atom in the main chain.

R^{b17} is more preferably
a C₁₋₃ alkylene group,
CH₂CH₂-NH-CH₂CH₂CH₂, or
CH₂-O-CH₂CH₂CH₂.

R^{b18} is a reactive functional group. R^{b18} is preferably, each independently at each occurrence, an amino group, an epoxy group, a methacrylic group, a vinyl group, or a mercapto group, and is more preferably an amino group.

In the formula (B5), β4 is an integer of 2 or more, preferably 2 or 3, and more preferably 3. In the formula (B5), β5 is an integer of 0 or more, and preferably 0 or 1. In the formula (B5), β6 is 1 or 2, and preferably 1. Note that the sum of β4, β5, and β6 is 4.

In the formula (B5), preferably, β4 is 2 or 3, β5 is 0 or 1, and β6 is 1 or 2, and more preferably, β4 is 3, β5 is 0, and β6 is 1.

Preferably, the cross-linking agent (B) is a compound represented by the formula (B3) or the formula (B5), in one embodiment, more preferably a compound represented by the formula (B5), and in another embodiment, more preferably a compound represented by the formula (B3).

In one embodiment, the cross-linking agent (B) is free from a group represented by PFPE in the molecular chain.

In one embodiment, the molecular weight of the cross-linking agent (B) is 1,000 or less, preferably 600 or less, and more preferably 400 or less. The lower limit value of the molecular weight of the cross-linking agent may be 50 or more, or may be 100 or more.

In a preferred embodiment, the cross-linking agent (B) is at least one selected from the group consisting of tetraethoxysilane, tetratrimethoxysilane, methyltriethoxysilane, methyltrimethoxysilane, dimethyldimethoxysilane, dimethyltrimethoxysilane, aminopropyltriethoxysilane, aminopropyltrimethoxysilane, 3-glycidyloxypropyltriethoxysilane, 3-glycidyloxypropyltrimethoxysilane, tridecafluoro-n-octyltriethoxysilane, and tridecafluoro-n-octyltrimethoxysilane.

It is preferable to use the cross-linking agent (B) together with the organic silane compound (A). In this case, -O-R^{b13} bonded to a Si atom of the cross-linking agent (B) and a hydrolyzable silyl group contained in the organic silane compound (A) can undergo a crosslinking reaction (condensation reaction).

In the cross-linking agent (B), the total content of compounds represented by the formula (B1), (B2), (B3), (B4) or (B5) may be, for example, 50% by mass or more and 100% by mass or less, and preferably 70% by mass or more and 100% by mass or less.

The cross-linking agent (B) may comprise an amine cross-linking agent (B6) or an epoxy cross-linking agent (B7). In one embodiment, the cross-linking agent (B) may comprise an amine cross-linking agent (B6) or an epoxy cross-linking agent (B7), in addition to the compounds represented by the formula (B1), (B2), (B3), (B4), or (B5).

The amine cross-linking agent (B6) is typically a polyfunctional amine compound having two or more amino groups in one molecule, and may be any of an aliphatic polyfunctional amine compound, an aromatic polyfunctional amine compound, an alicyclic polyfunctional amine compound, and a cyclic polyfunctional amine compound. The polyfunctional amine compound includes a condensation product between at least one selected from the group consisting of an aliphatic polyfunctional amine compound, an aromatic polyfunctional amine compound, and an alicyclic polyfunctional amine compound, and a dimeric acid; an adduct of at least one selected from the group consisting of an aliphatic polyfunctional amine compound, an aromatic polyfunctional amine compound, and an alicyclic polyfunctional amine compound; and a reaction product (ketimine) between at least one selected from the group consisting of an aliphatic polyfunctional amine compound, an aromatic polyfunctional amine compound, and an alicyclic polyfunctional amine compound, and a ketone, as well.

Examples of the aliphatic polyfunctional amine compound include diethylenetriamine, triethylenetetetramine, tetraethylenepentamine, dipropylenediamine, diethylaminopropylamine, and hexamethylenediamine.

Examples of the aromatic polyfunctional amine compound include meta-xylylenediamine, xylylenediamine, 2-(dimethylaminomethyl)phenol, 2,4,6-tris(dimethylaminomethyl)phenol, benzylmethylamine, xylylenediamine trimer, xylylenediamine derivatives, meta-phenylenediamine, diaminodiphenylmethane, and diaminodiphenylsulfone.

Examples of the alicyclic polyfunctional amine compound include N-aminoethylpiperazine, bis(4-amino-3-methylcyclohexyl)methane, menthenediamine, isophoronediamine, bis(4-aminocyclohexyl)methane, and 1,3-bis(aminomethyl)cyclohexane.

Examples of the cyclic polyfunctional amine compound include piperidine, N,N-dimethylpiperazine, 2-methylimidazole, 2-ethyl-4-methylimidazole, and 1-cyanoethyl-2-undecylimidazolium trimellitate.

Examples of the adduct include an adduct with a polyfunctional epoxy compound such as bisphenol A diglycidyl ether. Examples of the dimer acid include a dimerized product of an unsaturated fatty acid such as oleic acid, linolic acid, linolenic acid, and erucic acid, as well as a hydrogenated product thereof. Examples of the ketone include methyl ethyl ketone and methyl isobutyl ketone.

The number of amino groups contained in the amine cross-linking agent (B6) may be 2 to 3.

The epoxy cross-linking agent (B7) can typically be a polyfunctional epoxy compound having two or more epoxy groups in one molecule, and may be any of an aliphatic polyfunctional epoxy compound, an aromatic polyfunctional epoxy compound, and an alicyclic polyfunctional epoxy compound.

Examples of the aliphatic polyfunctional epoxy compound include 1,4-butanediol diglycidyl, neopentyl glycol diglycidyl ether, glycerol triglycidyl ether, and trimethylolpropane triglycidyl ether.

Examples of the aromatic polyfunctional epoxy compound include bisphenol A diglycidyl ether, bisphenol F diglycidyl ether, and biphenyl diglycidyl ether.

Examples of the alicyclic polyfunctional epoxy compound include 2,2'-bis(4-glycidyloxycyclohexyl)propane, 3,4-epoxycyclohexylmethyl-3,4-epoxycyclohexane carboxylate, vinylcyclohexenedioxide, 2-(3,4-epoxycyclohexyl)-5,5-spiro-(3,4-epoxycyclohexane)-1,3-dioxane, bis(3,4-epoxycyclohexyl) adipate, 1,2-cyclopropanedicarboxylic acid bisglycidyl ester, 3',4'-epoxycyclohexylmethyl-3,4-epoxycyclohexane carboxylate, an ε-caprolactone-modified product of 3',4'-epoxycyclohexylmethyl-3,4-epoxycyclohexane carboxylate, 1,2-epoxy-4-(2-oxiranyl)cyclohexane adduct of 2,2-bis(hydroxymethyl)-1-butanol, and triglycidyl isocyanurate.

The following can be used: a hydrogenated epoxy resin, an alicyclic epoxy resin, an isocyanurate ring-containing epoxy resin, a bisphenol A type epoxy resin, a bisphenol F type epoxy resin, a phenol novolac type epoxy resin, a cresol novolac type epoxy resin, a naphthalene type epoxy resin, a biphenyl type epoxy resin, a phenol aralkyl type epoxy resin, a biphenyl aralkyl type epoxy resin, a hydrogenated epoxy resin obtained by hydrogenating aromatic rings of the various epoxy resins, and a dicyclopentadiene type epoxy resin.

The number of epoxy groups contained in the epoxy cross-linking agent (B7) may be 2 to 3.

Commercially available products may be used as the epoxy cross-linking agent (B7), and specific examples thereof include Celloxide (R) 2021P, 2081, and EHPE (R) 3150 (these are manufactured by Daicel Corporation), and Epodil (R) 733, 749, 750, and 762 (these are manufactured by Evonik Industries AG).

The cross-linking agent (B) can be contained in the composition of the present embodiment in an amount of preferably 5 parts by mass or more and 60 parts by mass or less, more preferably 10 parts by mass or more and 45 parts by mass or less, and still more preferably 15 parts by mass or more and 35 parts by mass or less, with respect to 100 parts by mass of the organic silane compound (A).

The cross-linking agent (B) can be contained in an amount in the range of 5 to 60 parts by mass, for example, and specifically in the range of 10 to 45 parts by mass, in 100 parts by mass of the composition of the present embodiment.

### <Catalyst (C)>

The composition of the present disclosure may further comprise a catalyst (hereinafter, sometimes referred to as "catalyst (C)"). The catalyst promotes the condensation reaction between the organic silane compound (A) and the cross-linking agent.

As the catalyst, a metal-based catalyst, an organic acid-based catalyst, an inorganic acid-based catalyst, a base-based catalyst (such as ammonia, triethylamine, and diethylamine), and others can be used.

Examples of the organic acid-based catalyst may include a compound having carboxylic acid, sulfonic acid, or phosphoric acid, and specific examples thereof may include acetic acid, trifluoroacetic acid, methanesulfonic acid, toluenesulfonic acid, and alkylphosphoric acid.

Examples of the inorganic acid-based catalyst may include hydrochloric acid and sulfuric acid.

The catalyst above is preferably a metal-based catalyst.

In one embodiment, examples of the metal atoms contained in the metal-based catalyst may include titanium, zirconium, zinc, and tin. Among these metal atoms, it is preferable to use tin, titanium, or zirconium.

In the present embodiment, it is preferable to use as the metal-based catalyst at least one selected from the group consisting of tetra-n-butyl titanate, tetraisopropyl titanate, n-butyl zirconate, n-propyl zirconate, dibutyltin dimethoxide, dioctyltin dicarboxylate, and dibutyltin dilaurate, and more preferably, the metal-based catalyst is at least one selected from the group consisting of tetraisopropyl titanate, dioctyltin dicarboxylate, and n-propyl zirconate. The use of the metal-based catalysts as described above promotes the condensation reaction between the organic silane compound (for example, the reaction product (A3), fluoropolyether group-containing silane compound (A1), and epoxy group-containing silicone compound (A2)) and the cross-linking agent. The metal-based catalysts as described above are easily dissolved or dispersed in the curable composition and can contribute to the promotion of uniform reaction. The curable composition of the present embodiment comprising the metal-based catalysts as described above can contribute to the formation of a cured product of the curable composition with low foreign matter and high transparency.

It is preferable to use the catalyst (C) of the present embodiment together with the fluoropolyether group-containing silane compound (A1).

It is preferable to use the catalyst (C) of the present embodiment together with the organic silane compound (A) and the cross-linking agent (B).

In the present embodiment, the content of the catalyst (C) in the composition is preferably 0.01 to 5.0 parts by mass, and more preferably 0.07 to 3 parts by mass, with respect to 100 parts by mass of the organic silane compound (A).

Only one of the catalysts described above may be used, or two or more may be used at the same time.

### <Solvent (D)>

The composition of the present disclosure may further comprise a solvent (D). By comprising the solvent (D), the handleability of the composition becomes good. When such a composition is used to form a layer, the layer formed can be a continuous thin film. Such a composition can also contribute to the formation of a thin film with an arbitrary thickness.

Examples of the solvent (D) include a hydrocarbon solvent; a halogenated hydrocarbon solvent; an ester solvent; an ether solvent; a ketone solvent; an amide solvent; a nitrile solvent such as acetonitrile; a urea solvent such as tetramethylurea or dimethylpropyleneurea (DMPU); a sulfoxide solvent such as dimethyl sulfoxide (DMSO); a sulfone solvent such as sulfolane; an alcohol solvent such as methanol, ethanol, n-propanol, 2-propanol, n-butanol, tert-butanol, and diacetone alcohol; a fluorinated solvent such as 1,3-bisfluoromethylbenzene, methyl nonafluorobutyl ether, methyl nonafluoroisobutyl ether, ethyl nonafluorobutyl ether, ethyl nonafluoroisobutyl ether, 1,1,1,2,2,3,4,5,5,5-decafluoro-3-methoxy-4-(trifluoromethyl)-pentane, perfluorohexane, and 1,1,1,2,2,3,3,4,4,5,5,6,6-tridecafluorooctane; an amine solvent; a carboxylic anhydride; and a nitro compound. Also, under high pressure, the solvent (D) may be carbon dioxide or the like.

Examples of the hydrocarbon solvent include an aliphatic hydrocarbon solvent such as alkane, alkene, alkyne, and cycloalkane; and an aromatic hydrocarbon solvent such as benzene, toluene, and naphtha cut.

Examples of the ester solvent include a carboxylic acid ester such as ethyl acetate, n-butyl acetate, tert-butyl acetate, diethyl oxalate, ethyl pyruvate, ethyl 2-hydroxybutyrate, ethyl acetoacetate, amyl acetate, ethyl butyrate, butyl butyrate, methyl lactate, ethyl lactate, methyl 3-methoxypropionate, ethyl 3-methoxypropionate, methyl 2-hydroxyisobutyrate, ethyl 2-hydroxyisobutyrate, and diethyl acetate; a carbonic acid ester such as dimethyl carbonate and ethylene carbonate, and a cyclic ester such as γ-butyrolactone.

Examples of the ether solvent include a chain ether such as t-butyl methyl ether, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, methyl cellosolve, ethyl cellosolve, methyl cellosolve acetate, and ethyl cellosolve acetate; and a cyclic ether such as tetrahydrofuran.

Examples of the ketone solvent include methyl ethyl ketone, methyl isobutyl ketone, acetone, 2-hexanone, cyclohexanone, methyl amino ketone, and 2-heptanone.

Examples of the amide solvent include a carboxylic acid amide such as formamide or dimethylformamide; and a cyclic amide such as N-methyl-2-pyrrolidone.

The content of the solvent (D) is preferably 1 to 300 parts by mass, more preferably 20 to 200 parts by mass, and still more preferably 50 to 100 parts by mass, with respect to 100 parts by mass of the total amount of the organic silicon compound (A), and the cross-linking agent (B) and catalyst (C) used as necessary.

The composition may comprise other optional components in addition to the organic silane compound (A), the cross-linking agent (B), the catalyst (C), and the solvent (D). Examples of such optional components include one or more substances selected from the group including: a stabilizer (dehydrating agent, molecular sieve, magnesium sulfate, or methyl orthoformate), a viscosity regulator, a filler, a fluorescent agent, a storage stabilizer, a filling agent, a coloring agent, a heat resistance improver, a cold resistance improver, a rust inhibitor, an adhesion improver, a liquid reinforcing agent, a plasticizer, a viscosity regulator, a flexibility imparting agent, an adhesion promoter, a co-cross-linking agent, a flame retarder, a defoaming additive, a curing accelerator for amine epoxide reactions, an antibacterial agent and a preservative, a dye, a coloring agent and a pigment, an antifreezing agent, a bactericide, and/or a reaction diluent and a complexing agent, a spray aid, a wetting agent, a fragrance, a photoprotectant, a radical scavenger, a UV absorber and a stabilizer, in particular a stabilizer against thermal and/or chemical loads and/or loads due to ultraviolet rays and visible light, such as a (non-reactive) fluoropolyether compound, preferably a perfluoro(poly)ether compound, which can be understood as a fluorine-containing oil (hereinafter, referred to as "fluorine-containing oil").

Examples of the UV absorber and stabilizer include benzophenones, benzotriazoles, hydroxyphenyltriazines, cyclic iminoesters, cyanoacrylates, hindered phenols, hindered amines, and oxalic anilides.

Examples of the benzophenones include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone, 2-hydroxy-4-methoxy-2'-carboxybenzophenone.

Examples of the benzotriazoles include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolphenyl), 2,2'-p-phenylenebis(1,3-benzoxazin-4-one), 2-[2-hydroxy-3-(3,4,5,6-tetrahydrophthalimidomethyl)-5-methylphenyl]benzotriazole, a polymer containing units derived from 2-(2'-hydroxy-5-methacryloxyethylphenyl)-2H-benzotriazole, and a polymer containing units derived from 2-(2'-hydroxy-5-acryloxyethylphenyl)-2H-benzotriazole.

Examples of the hydroxyphenyltriazines include 2-(4,6-diphenyl-1,3,5-triazin-2-yl)-5-hexyloxyphenol, 2-(4,6-bis(2,4-dimethylphenyl)-1,3,5-triazin-2-yl)-5-hexyloxyphenol, 2-(4,6-diphenyl-1,3,5-triazin-2-yl)-5-methyloxyphenol, 2-(4,6-bis(2,4-dimethylphenyl)-1,3,5-triazine-2-yl)-5-methyloxyphenol, 2-(4,6-diphenyl-1,3,5-triazin-2-yl)-5-ethyloxyphenol, 2-(4,6-bis(2,4-dimethylphenyl)-1,3,5-triazin-2-yl)-5-ethyloxyphenol, 2-(4,6-diphenyl-1,3,5-triazin-2-yl)-5-propyloxyphenol, 2-(4,6-bis(2,4-dimethylphenyl)-1,3,5-triazin-2-yl)-5-propyloxyphenol, 2-(4,6-diphenyl-1,3,5-triazin-2-yl)-5-butyloxyphenol, 2-(4,6-bis(2,4-dimethylphenyl)-1,3,5-triazin-2-yl)-5-butyloxyphenol, 2-[4-([2-hydroxy-3-dodecyloxypropyloxy]-2-hydroxyphenyl]-4,6-diphenyl-1,3,5-triazine, 2-[4-([2-hydroxy-3-dodecyloxypropyloxy]-2-hydroxyphenyl]-4,6-bis(2,4-dimethylphenyl)-1,3,5-triazine, 2-[4-([2-hydroxy-3-tridecyloxypropyloxy]-2-hydroxyphenyl]-4,6-diphenyl)-1,3,5-triazine, 2-[4-([2-hydroxy-3-tridecyloxypropyloxy]-2-hydroxyphenyl]-4,6-bis(2,4 dimethylphenyl)-1,3,5-triazine, 2-[4-[(2-hydroxy-3-(2'-ethyl)hexyl)oxy]-2-hydroxyphenyl]-4,6-diphenyl-1,3,5-triazine, and 2-[4-[(2-hydroxy-3-(2'-ethyl)hexyl)oxy]-2-hydroxyphenyl]-4,6-bis(2,4-dimethylphenyl)-1,3,5-triazine, as well as a polymer containing units derived from 2-(2'-hydroxy-5'-methacryloyloxyethylphenyl)-2H-benzotriazole and 2-(2'-hydroxy-5'-methacryloyloxyethylphenyl)-2H-benzotriazole.

Examples of the cyclic iminoesters include 2,2'-p-phenylenebis(3,1-benzoxazin-4-one), 2,2'-m-phenylenebis(3,1-benzoxazin-4-one), and 2,2'-p,p'-diphenylenebis(3,1-benzoxazin-4-one).

Examples of the cyanoacrylates include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

Examples of the hindered amines include bis(2,2,6,6-tetramethyl-4-piperidyl) sebacate, bis(1,2,2,6,6-pentamethyl-4-piperidyl) sebacate, mono(2,2,6,6-tetramethyl-4-piperidyl) sebacate, mono(1,2,2,6,6-pentamethyl-4-piperidyl) sebacate, 2,2,6,6-tetramethyl-4-methacryloyloxypiperidine, 1,2,2,6,6-pentamethyl-4-methacryloyloxypiperidine, 2,2,6,6-tetramethyl-4-piperidyl methacrylate, 2-hydroxyethylamino-4,6-bis(N-butyl-N-(2,2,6,6-tetramethyl-1-cyclohexyloxypiperidyl)amino)-1,3,5-triazine, and an oligomer of 2,2,4,4-tetramethyl-7-oxa-3,20-diazabispiro[5.1.11.2]-henicosan-21-one and epichlorohydrin.

Examples of the oxalic anilides include N-(4-dodecylphenyl)-N'-(2-ethoxyphenyl)oxalic acid and N-(2-ethylphenyl)-N'-(2-ethoxyphenyl)oxalic acid.

Commercially available products may be used as the UV absorber and stabilizer, and specific examples thereof include Tinuvin (R) 400, 405, 479, 152, and 292 (these are manufactured by BASF SE), Hostavin (R) 3400, 3206, and 3070 (these are manufactured by Clariant AG), Adekastab (R) LA-82 and 87 (these are manufactured by ADEKA Corporation), and RUVA-93 (manufactured by Otsuka Chemical Co., Ltd.).

The amounts of these optional components to be blended are arbitrary to the extent that they do not impair the objects of the present disclosure, and as long as the characteristics of the composition and the physical properties of the cured product are not impaired.

In one embodiment, the composition may be a so-called one-component curable composition containing all of the organic silane compound (A) and the cross-linking agent (B), catalyst (C), solvent (D), and other optional components used as necessary, as a single composition. In another embodiment, the composition may be a two-component curable composition containing a main agent (I) and a curing agent (II), wherein the main agent (I) may contain the organic silane compound (A) and the curing agent (II) may contain the cross-linking agent (B).

The present disclosure provides an article comprising: a substrate; and a film (hereinafter, also referred to as "surface-treating layer" or "layer") provided on the substrate (on the surface of the substrate) and formed from the composition of the present disclosure (hereinafter, also referred to as "surface-treating composition"). This article can be produced as follows, for example.

At first, a substrate is provided. The substrate usable in the present disclosure may be composed of any suitable material such as a glass, a resin (this may be a natural or synthetic resin such as a common plastic material, preferably a polycarbonate resin, a poly(meth)acrylate resin, a polyethylene terephthalate resin, a triacetyl cellulose resin, a polyimide resin, a modified (transparent) polyimide resin, a polycycloolefin resin, and a polyethylene naphthalate resin, and may be in the form of a plate, a film, or others), a metal (this may be a simple substance of a metal such as aluminum, copper, silver, or iron, or a complex such as an alloy or the like), a ceramic, a semiconductor (silicon, germanium, or the like), a fiber (a fabric, a non-woven fabric, or the like), a fur, a leather, a wood, a pottery, a stone, an architectural member, or the like.

For example, when the article to be produced is an optical member, the material constituting the surface of the substrate may be a material for an optical member, such as a glass or a transparent plastic. The substrate, according to its specific specifications or the like, may also have an insulating layer, an adhesive layer, a protecting layer, a decorated frame layer (I-CON), an atomizing film layer, a hard coating layer, a polarizing film, a phase difference film, an organic EL display module, a liquid crystal display module, or the like.

The shape of the substrate is not limited. The surface region of the substrate on which a film (surface-treating layer) is to be formed may be at least part of the substrate surface, and may be suitably determined according to the application, specific specifications, and the like of an article to be produced.

Then, a film of the surface-treating composition of the present disclosure is formed on the surface of such a substrate, and this film is post-treated as necessary, thereby forming a film (surface-treating layer) from the surface-treating composition of the present disclosure.

The film of the surface-treating composition of the present disclosure can be formed by applying the surface-treating composition to the surface of the substrate such that the composition coats the surface. The coating method is not limited. For example, a wet coating method can be used.

Examples of the wet coating method include dip coating, spin coating, flow coating, spray coating, roll coating, gravure coating, micro-gravure coating, bar coating, die coating, screen printing, and similar methods.

When using the wet coating method, the surface-treating composition of the present disclosure can be applied to the substrate surface after being diluted with a solvent. As such a solvent, the fluorine-containing organic solvents and fluorine-free organic solvents described above can be used. From the viewpoint of the stability of the surface-treating composition of the present disclosure and the volatility of the solvent, the following solvents are preferably used: C₅₋₁₂ perfluoroaliphatic hydrocarbons (for example, perfluorohexane, perfluoromethylcyclohexane, and perfluoro-1,3-dimethylcyclohexane); polyfluoroaromatic hydrocarbons (for example, bis(trifluoromethyl)benzene); polyfluoroaliphatic hydrocarbons; cellosolve solvents such as hydrofluoroether (HFE) (for example, alkyl perfluoroalkyl ethers such as perfluoropropyl methyl ether (C₃F₇OCH₃), perfluorobutyl methyl ether (C₄F₉OCH₃), perfluorobutyl ethyl ether (C₄F₉OC₂H₅), perfluorohexyl methyl ether (C₂F₅CF(OCH₃)C₃F₇)

(perfluoroalkyl group and alkyl group may be linear or branched)), hydrochlorofluorocarbon (for example, ASAHIKLIN AK-225 (trade name)), methyl cellosolve, ethyl cellosolve, methyl cellosolve acetate, and ethyl cellosolve acetate; ester solvents such as diethyl oxalate, ethyl pyruvate, ethyl-2-hydroxybutyrate, ethyl acetoacetate, ethyl acetate, butyl acetate, amyl acetate, ethyl butyrate, butyl butyrate, methyl lactate, ethyl lactate, methyl 3-methoxypropionate, ethyl 3-methoxypropionate, methyl 2-hydroxyisobutyrate, and ethyl 2-hydroxyisobutyrate; propylene glycol solvents such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, and dipropylene glycol dimethyl ether; ketone solvents such as acetone, methyl ethyl ketone, methyl isobutyl ketone, 2-hexanone, cyclohexanone, methyl amino ketone, and 2-heptanone; alcohol solvents such as methanol, ethanol, propanol, isopropanol, butanol, and diacetone alcohol; and aromatic hydrocarbons such as toluene and xylene. One of these solvents may be used singly, or two or more may be used as a mixture. Among them, hydrofluoroethers, glycol solvents, ester solvents, ketone solvents, and alcohol solvents are preferred, and perfluorobutyl methyl ether (C₄F₉OCH₃) and/or perfluorobutyl ethyl ether (C₄F₉OC₂H₅), propylene glycol monomethyl ether, ethyl acetate, butyl acetate, propylene glycol monomethyl ether acetate, methyl ethyl ketone, methyl isobutyl ketone, isopropanol, butanol, and diacetone alcohol are particularly preferred.

The film is then post-treated. This post-treatment is not limited, but is performed, for example, by irradiating with active energy rays, for example, electromagnetic waves in a wavelength region of 350 nm or less, such as ultraviolet rays, electron beams, X-rays, γ-rays, and the like. Alternatively, the post-treatment is performed by heating for a predetermined period of time. By performing such a post-treatment, curing of the curable site of the silicone copolymer having the curable site and, if present, the curable site of the matrix-forming composition is initiated, and bonds are formed between these compounds and between these compounds and the substrate.

In the above-described manner, a film (that is, a surface-treating layer) is formed from the surface-treating composition of the present disclosure on the substrate surface, and thus the article of the present disclosure is produced. The film (surface-treating layer) obtained from this can form a film that can achieve both anti-icing performance and transparency. Furthermore, such a film (surface-treating layer) can further have both high surface lubricity (or lubricity, such as wiping property for fouling including fingerprints and the like and excellent tactile sensations to the fingers) and high friction durability. Moreover, this film (surface-treating layer) may have not only high friction durability and surface lubricity but also have, depending on the formulation of the surface-treating composition used, water-repellency, oil-repellency, antifouling properties (for example, preventing fouling such as fingerprints from adhering), and the like, and may be suitably used as a functional thin film.

The water contact angle of the film (surface-treating layer) may be, for example, 90° or more, even 95° or more, preferably 100° or more, more preferably 105° or more, and still more preferably 110° or more, and it may be, for example, 140° or less, even 120° or less.

The water contact angle of the film (surface-treating layer) can be measured in accordance with JIS R3257:1999.

The haze of the film (surface-treating layer) may be, for example, 1.5 or less, even 1.2 or less, preferably 1 or less, more preferably 0.9 or less, still more preferably 0.8 or less, and it may be, for example, 0.1 or more.

The haze of the film (surface-treating layer) can be measured in accordance with JIS K7136:2000.

The icing property index of the film (surface-treating layer), as evaluated by the following method, may be, for example, 750 kPa or less, even 700 kPa or less, preferably 650 kPa or less, more preferably 600 kPa or less, and still more preferably 550 kPa or less, and it may be, for example, 10 kPa or more, even 50 kPa or more.

### <Method for evaluating icing property index>

The film is formed on a stainless steel substrate (NIRO 1.4301), and a bottomless cell with an inner base area of 110 mm² is arranged on the film such that the film and the bottom of the cell are in contact with each other. Next, 0.5 mL of water is placed in the cell, the water is brought into contact with the film, and the stainless steel substrate is cooled to -32°C to freeze the water in the cell. A load is applied to the cell in a direction parallel to the film surface, the cell is moved at a speed of 10 mm/min, and a load at which ice begins to move is used as the icing property index.

The present disclosure further relates to an optical material having the film (surface-treating layer) in the outermost layer.

The optical material preferably includes a wide variety of optical materials in addition to optical materials relating to displays and the like as exemplified below: for example, displays such as cathode ray tubes (CRTs; for example, TV, PC monitors), liquid crystal displays, plasma displays, organic EL displays, inorganic thin-film EL dot matrix displays, rear projection displays, vacuum fluorescent displays (VFDs), and field emission displays (FEDs); protective plates for such displays; and those obtained by performing an antireflection film treatment on films or their surfaces.

In one embodiment, the article having a film (surface-treating layer) obtained according to the present disclosure may be, but is not limited to, an optical member. Examples of the optical member include lenses of glasses or the like; front surface protective plates, anti-scattering films, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; and optical fibers.

In one embodiment, examples of the article having a film (surface-treating layer) obtained according to the present disclosure include LiDAR (a light detection and ranging) cover member, a sensor member, a head lamp member, a sunroof member, an emblem member, a bumper member, a windshield, a side glass, a rear glass, an instrument panel cover member, an automobile interior member, and the like, and in particular, these members for automobiles.

The thickness of the film (surface-treating layer) is not limited. The thickness of the film (surface-treating layer) in the case of an optical member is in the range of 0.1 to 50 µm, preferably 0.5 to 30 µm, from the viewpoint of optical performance, surface lubricity, friction durability, and antifouling property.

The article obtained by using the surface-treating composition of the present disclosure has been described in detail above. The application of the surface-treating agent of the present disclosure, the method of use thereof, the method of producing the article, and the like are not limited to those exemplified above.

### Examples

The present invention will be further specifically described by the following Examples, but the present invention is not limited to them. Note that, in the present Examples, all the chemical formulae shown below represent average compositional features.

### (Synthetic Example 1)

0.44 g of Optool UD120 (manufactured by Daikin Industries, Ltd.) as the silane compound (A1) was dissolved in 5.41 g of 1,3-bis-trifluoromethylbenzene and 0.31 g of Silikopon EF (manufactured by Evonik Industries AG) as the silicone compound (A2) was added. After stirring for 5 minutes, 0.14 g of dioctyltin dicarboxylate was added, and the mixture was stirred at room temperature for 12 hours and then stirred at 100°C for 30 minutes to obtain the reaction product (A3). After cooling to room temperature, 13.40 g of Silikopon EF as the silicone compound (A2) was added. 0.15 g of Tinuvin 292 (manufactured by BASF SE), 0.3 g of Tinuvin 400 (manufactured by BASF SE), and 3.05 g of (3-aminopropyl)triethoxysilane dissolved in 3.61 g of butyl acetate were added, and the mixture was stirred for 2 hours to obtain the composition.

### (Synthetic Example 2)

The composition was obtained in the same manner as in Synthetic Example 1, except that the amounts of Optool UD120, Silikopon EF added for the first time, and Silikopon EF added for the second time were changed to 0.88 g, 0.62 g, and 13.09 g, respectively.

### (Synthetic Example 3)

The composition was obtained in the same manner as in Synthetic Example 1, except that the amounts of Optool UD120, Silikopon EF added for the first time, and Silikopon EF added for the second time were changed to 1.15 g, 0.81 g, and 12.90 g, respectively.

### (Synthetic Example 4)

The composition was obtained in the same manner as in Synthetic Example 1, except that the amounts of Optool UD120, Silikopon EF added for the first time, and Silikopon EF added for the second time were changed to 1.59 g, 1.12 g, and 12.59 g, respectively.

### (Synthetic Example 5)

The composition was obtained in the same manner as in Synthetic Example 1, except that the amounts of Optool UD120, Silikopon EF added for the first time, and Silikopon EF added for the second time were changed to 2.22 g, 1.57 g, and 12.14 g, respectively.

### (Comparative Synthetic Example 1)

13.71 g of Silikopon EF was dissolved in 9.94 g of butyl acetate, 0.14 g of dioctyltin dicarboxylate, 0.15 g of Tinuvin 292, 0.3 g of Tinuvin 400, and 3.05 g of (3-aminopropyl)triethoxysilane were added, and the mixture was stirred for 2 hours to obtain the composition.

### (Examples 1 to 4 and Comparative Example 1)

The compositions obtained in Synthetic Examples 1 to 4 and Comparative Synthetic Example 1 were applied onto a stainless steel substrate (NIRO 1.4301) using a 100 micrometer bar coater, left at room temperature for 30 minutes, and then heated at 120°C for 30 minutes to form films (surface-treating layers).

### (Evaluation of anti-icing performance)

The film was formed on a stainless steel substrate (NIRO 1.4301), and a bottomless cell with an inner base area of 110 mm² was arranged on the film such that the film and the bottom of the cell were in contact with each other. Next, 0.5 mL of water was placed in the cell, the water was brought into contact with the film, and the stainless steel substrate was cooled to -32°C to freeze the water in the cell. A load was applied to the cell in a direction parallel to the film surface, the cell was moved at a speed of 10 mm/min, and a load at which ice began to move was used as the icing property index.

### (Measurement of water contact angle)

For the films (surface-treating layers), the water contact angle was measured in accordance with JIS R3257:1999.

**<Table 1>**

| | | Water contact angle (°) | Icing property index (kPa) |
|---|---|---|---|
| Example 1 | Synthetic Example 1 | 112 | 543 |
| Example 2 | Synthetic Example 2 | 114 | 450 |
| Example 3 | Synthetic Example 3 | 116 | 172 |
| Example 4 | Synthetic Example 4 | 116 | 350 |
| Comparative Example 1 | Comparative Synthetic Example 1 | 93 | 760 |

### (Examples 5 and 6)

The compositions obtained in Synthetic Examples 2 and 3 were applied onto polycarbonate or soda-lime glass (SGG Planiclear, manufactured by Saint-Gobain Glass UK Ltd.) using a 100 micrometer bar coater, left at room temperature for 10 minutes, and then heated at 120°C for 30 minutes to obtain films (surface-treating layers).

### (Comparative Example 2)

The composition obtained in Comparative Synthetic Example 1 was applied onto polycarbonate (Makrolon GP farblos 099, manufactured by Covestro AG) or soda-lime glass (SGG Planiclear, manufactured by Saint-Gobain Glass UK Ltd.) using a 100 micrometer bar coater, left at room temperature for 10 minutes, and then heated at 120°C for 30 minutes to obtain a film (surface-treating layer).

### (Example 7)

The composition obtained in Synthetic Example 5 was applied onto polycarbonate or soda-lime glass (SGG Planiclear, manufactured by Saint-Gobain Glass UK Ltd.) using a 100 micrometer bar coater, left at room temperature for 10 minutes, and then heated at 120°C for 30 minutes to obtain a film (surface-treating layer). In Table 2, "PC" indicates that the composition was applied onto polycarbonate, and "Glass" indicates that the composition was applied onto the soda-lime glass.

### (Comparative Example 3)

0.44 g of Optool UD120 was dissolved in 5.41 g of 1,3-bis-trifluoromethylbenzene, and 13.71 g of Silikopon EF was added. After stirring for 5 minutes, 0.14 g of dioctyltin dicarboxylate, 0.15 g of Tinuvin 292, 0.3 g of Tinuvin 400, and 3.05 g of (3-aminopropyl)triethoxysilane dissolved in 3.61 g of butyl acetate were added, and the mixture was stirred for 2 hours to obtain the composition.

The composition was applied onto polycarbonate or soda-lime glass (SGG Planiclear, manufactured by Saint-Gobain Glass UK Ltd.) using a 100 micrometer bar coater, left at room temperature for 10 minutes, and then heated at 120°C for 30 minutes to obtain a film (surface-treating layer).

### (Measurement of water contact angle)

For the films (surface-treating layers), the water contact angle (°) was measured in accordance with JIS R3257:1999.

### (Measurement of haze)

For the films (surface-treating layers), the haze (%) was measured in accordance with JIS K7135:2000.

### (Scratch hardness test)

The measurement was performed with the model 413 manufactured by Erichsen GmbH & Co. KG using a Bosch tip (φ 0.75 mm).

**<Table 2>**

| | Example 5 | | Example 6 | | Example 7 | | Comparative Example 1 | | Comparative Example 3 | |
|---|---|---|---|---|---|---|---|---|---|---|
| | Synthetic Example 2 | | Synthetic Example 3 | | Synthetic Example 5 | | Comparative Example 3 | | | |
| | PC | Glass | PC | Glass | PC | Glass | PC | Glass | PC | Glass |
| Water contact angle (°) | 112.6 | 112.9 | 114.5 | 114.8 | 114.9 | 115.0 | 93.3 | 92.7 | 115.1 | 115.3 |
| Haze (%) | 0.61 | 0.55 | 0.52 | 0.42 | 10.56 | 12.28 | 0.53 | 0.20 | 20.68 | 28.50 |
| Scratch hardness test | 3N | 3N | 3N | 3N | 3N | 3N | 2N | 2N | 3N | 3N |

In Comparative Example 3, the haze value of the film (surface-treating layer) is high, suggesting that Optool UD120 and Silikopon EF are not miscible and no reaction product between Optool UD120 and Silikopon EF are produced.

### (Example 8)

The treated substrate obtained in Example 6 was used to perform a xenon test.

### (Example 9)

The treated substrate obtained in Example 7 was used to perform a xenon test.

### (Xenon test)

An accelerated weathering test was performed in accordance with DIN EN ISO 16474-2, and the water contact angle (°) was measured after a certain period of time.

**<Table 3>**

| | Example 8 | | Example 9 | |
|---|---|---|---|---|
| | PC | Glass | PC | Glass |
| 200 hours | 111.3 | 111.0 | 88.0 | 75.6 |
| 600 hours | 110.8 | 111.0 | 74.3 | 69.0 |
| 1000 hours | 104.9 | 108.2 | - | - |

In Example 9, peeling of the coating film was observed after 600 hours, and the test was discontinued.

## Claims

1. A composition comprising an organic silane compound (A) comprising a reaction product (A3) between a silane compound (A1) having a fluoropolyether group and a hydrolyzable silyl group and a silicone compound (A2) having an epoxy ring and a hydrolyzable silyl group; wherein the silane compound (A1) differs from the silicone compound (A2).

2. The composition of claim 1, wherein the organic silane compound (A) further comprises the silicone compound (A2).

3. The composition of claim 1 or 2, wherein the silane compound (A1) comprises at least one compound of formula (1) or (2):
R^{F1}_{α}-X^{A}-R^{Si}_{β} (1)
R^{Si}_{γ}-X^{A}-R^{F2}-X^{A}-R^{Si}_{γ} (2)
wherein, each independently at each occurrence,
R^{F1} is Rf¹-R^{F}-O_{Q}-;
R^{F2} is -Rf²ₚ-R^{F}-O_{q}-;
Rf¹ is C₁₋₁₆-alkyl optionally substituted with one or more F;
Rf² is C₁₋₆-alkylene optionally substituted with one or more F;
R^{F} is a divalent fluoropolyether group;
p is 0 or 1;
q is 0 or 1;
R^{Si} is a monovalent group containing a Si atom to which H, OH, a hydrolyzable group, or a monovalent organic group is bonded;
in each of the formulae (1) or (2), at least one R^{Si} is a monovalent group containing Si to which OH or a hydrolyzable group is bonded;
X^{A} is a single bond or a di- to decavalent organic group;
α is an integer of 1-9;
β is an integer of 1-9; and
γ is an integer of 1-9.

4. The composition of any of claims 1-3, wherein the silane compound (A1) comprises a compound of formula (1b) or (2b): 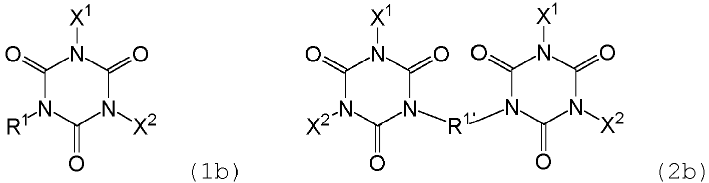
wherein, each independently at each occurrence,
R¹ is a monovalent organic group containing a fluoropolyether group;
R^{1'} is a divalent organic group containing a fluoropolyether group represented by
-(OC₆F₁₂)ₘ₃₁-(OC₅F₁₀)ₘ₃₂-(OC₄F₈)ₘ₃₃-(OC₃X¹⁰₆)ₘ₃₄- (OC₂F₄)ₘ₃₅- (OCF₂)ₘ₃₆-
wherein
m31-m36 are an integer of 0 or 1 or more;
X¹⁰ is H, F, or Cl; and
the order of the repeating units is not limited;
X¹ is a silane-containing reactive crosslinking group;
X² is a monovalent group; and
in each of the formulae (1b) or (2b), at least one of X¹ and X² is a monovalent group containing Si to which OH or a hydrolyzable group is bonded.

5. The composition of any of claims 1-4, wherein the content of units derived from the silane compound (A1) in the organic silane compound (A) is ≥ 0.1 mass%.

6. The composition of any of claims 1-5, wherein the silicone compound (A2) comprises a compound of formula (3):
Mₐ₁D_{b1}T_{c1}Q_{d1} (3)
wherein, each independently at each occurrence,
M is a monovalent group represented by (R^{s1}₃SiO_{1/2});
D is a divalent group represented by (R^{s1}₂SiO_{2/2});
T is a trivalent group represented by (R^{s1}SiO3_{/2});
Q is a tetravalent group represented by (SiO_{4/2});
R^{s1} is H, OH, a hydrolyzable group, -X^{s1}-NR^{s2}₂, -X^{s1}-COOH, a group having an epoxy ring, a monovalent organic group, or -X^{s1}-SiR^{s3}ₙ₁₁R^{s4}₃₋ₙ₁₁;
R^{s2} is H or C₁₋₂₀-alkyl;
R^{s3} is OH or a hydrolyzable group;
R^{s4} is C₁₋₂₀-alkyl;
X^{s1} is a divalent organic group;
n11 is an integer of 1-3;
a1 is an integer of 3-60;
b1 is an integer of 10-1,100;
c1 is an integer of 0-30;
d1 is an integer of 0-15; and
(c1+d1) is ≥ 1,
provided that at least one R^{s1} contains an epoxy ring and at least one other R^{s1} is OH or a hydrolyzable group.

7. The composition of any of claims 1-6, wherein the composition further comprises a crosslinking agent (B) comprises a compound having two or more groups capable of reacting with at least one of an epoxy group and a hydrolyzable silyl group.

8. The composition of claim 7, wherein in the cross-linking agent (B), the groups capable of reacting with at least one of an epoxy group and a hydrolyzable silyl group are at least one selected from -OR^{b5}, a carboxy group, -NR^{b5}₂, and -SiR^{b6}ₙ₆R^{b7}₃₋ₙ₆, wherein, each independently at each occurrence,
R^{b5} is H or C₁₋₂₀-alkyl;
R^{b6} is OH or a hydrolyzable group;
R^{b7} is C₁₋₂₀-alkyl group; and
n6 is an integer of 1-3.

9. The composition of claim 7 or 8, wherein the cross-linking agent (B) is 0.1-30 parts by mass with respect to 100 parts by mass of the organic silane compound (A).

10. The composition of any of claims 1-9, further comprising a catalyst (C).

11. The composition of any of claims 7-9, wherein the composition is a two-component curable composition comprising
- a main agent (I) comprising the organic silane compound (A), and
- a curing agent (II) comprising the cross-linking agent (B).

12. An article comprising a substrate and, provided on the substrate, a film formed from the composition of any of claims 1-11.

13. The article of claim 12, wherein the water contact angle of the film, measured in accordance with JIS R3257:1999, is ≥ 100°.

14. The article of claim 12 or 13, wherein the haze of the film, measured in accordance with JIS K7135:2000, is ≤ 1.

15. The article of any of claims 12-14, wherein an icing property index of the film is ≤ 650 kPa, determined by the method defined in the description.

## Patentansprüche

1. Zusammensetzung, umfassend eine organische Silanverbindung (A), die ein Reaktionsprodukt (A3) zwischen einer Silanverbindung (A1) mit einer Fluorpolyethergruppe und einer hydrolysierbaren Silylgruppe und einer Silikonverbindung (A2) mit einem Epoxidring und einer hydrolysierbaren Silylgruppe umfasst; wobei sich die Silanverbindung (A1) von der Silikonverbindung (A2) unterscheidet.

2. Zusammensetzung nach Anspruch 1, wobei die organische Silanverbindung (A) ferner die Silikonverbindung (A2) umfasst.

3. Zusammensetzung nach Anspruch 1 oder 2, wobei die Silanverbindung (A1) mindestens eine Verbindung der Formel (1) oder (2) umfasst:
R^{F1}_{α}-X^{A}-R^{Si}_{β} (1)
R^{Si}_{γ}-X^{A}-R^{F2}-X^{A}-R^{Si}_{γ} (2)
worin, jeweils unabhängig bei jedem Vorkommen,
R^{F1} ist Rf¹-R^{F}-O_{q}-;
R^{F2} ist -Rf² ₚ-R^{F}-O_{q}-;
Rf¹ ist C₁₋₁₆-Alkyl, das optional mit einem oder mehreren F substituiert ist;
Rf² ist C₁₋₆-Alkylen, das optional mit einem oder mehreren F substituiert ist;
R^{F} ist eine zweiwertige Fluorpolyethergruppe;
p ist 0 oder 1;
q ist 0 oder 1;
R^{Si} ist eine einwertige Gruppe, die ein Si-Atom enthält, an das H, OH, eine hydrolysierbare Gruppe oder eine einwertige organische Gruppe gebunden ist;
in jeder der Formeln (1) oder (2) ist mindestens ein R^{Si} eine einwertige Gruppe, die Si enthält, an das OH oder eine hydrolysierbare Gruppe gebunden ist;
X^{A} ist eine Einfachbindung oder eine zwei- bis zehnvalente organische Gruppe;
α ist eine ganze Zahl von 1 bis 9;
β ist eine ganze Zahl von 1 bis 9; und
γ ist eine ganze Zahl von 1 bis 9.

4. Zusammensetzung nach mindestens einem der Ansprüche 1 bis 3, wobei die Silanverbindung (A1) eine Verbindung der Formel (1b) oder (2b) umfasst: 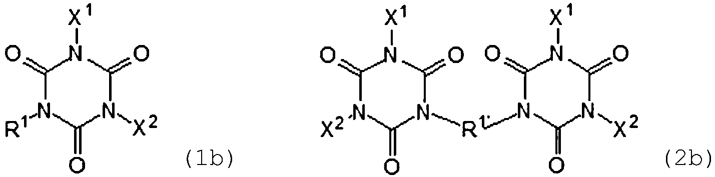
worin, jeweils unabhängig bei jedem Vorkommen,
R¹ ist eine einwertige organische Gruppe, die eine Fluorpolyethergruppe enthält;
R^{1'} ist eine zweiwertige organische Gruppe, die eine Fluorpolyethergruppe enthält, dargestellt durch
-(OC₆F₁₂)ₘ₃₁-(OC₅F₁₀)ₘ₃₂-(OC₄F₈)ₘ₃₃-(OC₃X¹⁰₆)ₘ₃₄- (OC₂F₄)ₘ₃₅- (OCF₂)ₘ₃₆-
worin
m31-m36 sind eine ganze Zahl von 0 oder 1 oder mehr; X¹⁰ ist H, F oder Cl; und
die Reihenfolge der Wiederholungseinheiten ist nicht beschränkt;
X¹ ist eine silanhaltige reaktive Vernetzungsgruppe;
X² ist eine einwertige Gruppe; und
in jeder der Formeln (1b) oder (2b) ist mindestens eines aus X¹ und X² eine einwertige, Si-haltige Gruppe, an die OH oder eine hydrolysierbare Gruppe gebunden ist.

5. Zusammensetzung nach mindestens einem der Ansprüche 1 bis 4, wobei der Gehalt an Einheiten, die von der Silanverbindung (A1) abgeleitet sind, in der organischen Silanverbindung (A) ≥ 0,1 Massenprozent beträgt.

6. Zusammensetzung nach mindestens einem der Ansprüche 1 bis 5, wobei die Silikonverbindung (A2) eine Verbindung der Formel (3) umfasst:
Mₐ₁D_{b1}T_{c1}Q_{d1} (3)
worin, jeweils unabhängig bei jedem Vorkommen,
M ist eine einwertige Gruppe, die durch (R^{s1}₃SiO_{1/2}) dargestellt ist;
D ist eine zweiwertige Gruppe, die durch (R^{s1}₂SiO_{2/2}) dargestellt ist;
T ist eine dreiwertige Gruppe, die durch (R^{s1}SiO_{3/2}) dargestellt ist;
Q ist eine vierwertige Gruppe, die durch (SiO_{4/2}) dargestellt ist;
R^{s1} ist H, OH, eine hydrolysierbare Gruppe, -X^{s1}-NR^{s2}₂, -X^{s1}-COOH, eine Gruppe mit einem Epoxidring, eine einwertige organische Gruppe oder -X^{s1}-SiR^{s3}ₙ₁₁R^{s4}₃₋ₙ₁₁;
R^{s2} ist H oder C₁₋₂₀-Alkyl;
R^{s3} ist OH oder eine hydrolysierbare Gruppe;
R^{s4} ist C₁₋₂₀-Alkyl;
X^{s1} ist eine zweiwertige organische Gruppe;
n11 ist eine ganze Zahl von 1 bis 3;
a1 ist eine ganze Zahl von 3 bis 60;
b1 ist eine ganze Zahl von 10 bis 1.100;
c1 ist eine ganze Zahl von 0 bis 30;
d1 ist eine ganze Zahl von 0 bis 15; und
(c1+d1) ist ≥ 1,
mit der Maßgabe, dass mindestens ein R^{s1} einen Epoxidring enthält und mindestens ein weiteres R^{s1} OH oder eine hydrolysierbare Gruppe ist.

7. Zusammensetzung nach mindestens einem der Ansprüche 1-6, wobei die Zusammensetzung ferner ein Vernetzungsmittel (B) umfasst, das eine Verbindung mit zwei oder mehr Gruppen, die mit mindestens einer Epoxidgruppe und/oder einer hydrolysierbaren Silylgruppe reagieren können, umfasst.

8. Zusammensetzung nach Anspruch 7, wobei in dem Vernetzungsmittel (B) die Gruppen, die mit mindestens einer Epoxygruppe und/oder einer hydrolysierbaren Silylgruppe reagieren können, mindestens eine Gruppe sind, ausgewählt aus -OR^{b5}, einer Carboxygruppe, -NR^{b5}₂ und -SiR^{b6}ₙ₆R^{b7}₃₋ₙ₆, worin, jeweils unabhängig bei jedem Vorkommen,
R^{b5} ist H oder eine C₁₋₂₀-Alkylgruppe;
R^{b6} ist OH oder eine hydrolysierbare Gruppe;
R^{b7} ist eine C₁₋₂₀-Alkylgruppe; und
n6 ist eine ganze Zahl von 1 bis 3.

9. Zusammensetzung nach Anspruch 7 oder 8, wobei das Vernetzungsmittel (B) 0,1 bis 30 Masseteile, bezogen auf 100 Masseteile der organischen Silanverbindung (A), ausmacht.

10. Zusammensetzung nach mindestens einem der Ansprüche 1 bis 9, die ferner einen Katalysator (C) enthält.

11. Zusammensetzung nach mindestens einem der Ansprüche 7 bis 9, wobei die Zusammensetzung eine zweikomponentige, härtbare Zusammensetzung ist, die folgendes umfasst:
- ein Hauptmittel (I), das die organische Silanverbindung (A) umfasst, und
- ein Härtungsmittel (II), das das Vernetzungsmittel (B) umfasst.

12. Artikel, umfassend ein Substrat und, auf dem Substrat aufgebracht, einen Film, der aus der Zusammensetzung nach mindestens einem der Ansprüche 1 bis 11 gebildet ist.

13. Artikel nach Anspruch 12, wobei der Wasserkontaktwinkel des Films, gemessen gemäß JIS R3257:1999, ≥ 100° beträgt.

14. Artikel nach Anspruch 12 oder 13, wobei die Trübung des Films, gemessen gemäß JIS K7135:2000, ≤ 1 beträgt.

15. Artikel nach mindestens einem der Ansprüche 12 bis 14, wobei ein Vereisungseigenschaftsindex des Films ≤ 650 kPa beträgt, bestimmt nach dem in der Beschreibung definierten Verfahren.

## Revendications

1. Composition comprenant un composé silane organique (A) comprenant un produit de réaction (A3) entre un composé silane (A1) présentant un groupe fluoropolyéther et un groupe silyle hydrolysable et un composé silicone (A2) présentant un cycle époxy et un groupe silyle hydrolysable ; dans laquelle le composé silane (A1) diffère du composé silicone (A2).

2. Composition selon la revendication 1, dans laquelle le composé silane organique (A) comprend en outre le composé silicone (A2).

3. Composition selon la revendication 1 ou la revendication 2, dans laquelle le composé silane (A1) comprend au moins un composé de formule (1) ou (2) :
R^{F1}_{α}-X^{A}-R^{Si}_{β} (1)
R^{Si}_{γ}-X^{A}-R^{F2}-X^{A}-R^{Si}_{γ} (2)
dans laquelle, chacun indépendamment à chaque occurrence,
R^{F1} est Rf¹-R^{F}-O_{q}- ;
R^{F2} est -Rf²ₚ-R^{F}-O_{q}- ;
Rf¹ est un C₁₋₁₆-alkyle facultativement substitué par un ou plusieurs F ;
Rf² est un C₁₋₆-alkylène facultativement substitué par un ou plusieurs F ;
R^{F} est un groupe fluoropolyéther divalent ;
p vaut 0 ou 1 ;
q vaut 0 ou 1 ;
R^{Si} est un groupe monovalent contenant un atome de Si auquel sont liés H, OH, un groupe hydrolysable ou un groupe organique monovalent ;
dans chacune des formules (1) ou (2), au moins un R^{Si} est un groupe monovalent contenant du Si auquel sont liés OH ou un groupe hydrolysable ;
X^{A} est une liaison simple ou un groupe organique di- à décavalent ;
α est un nombre entier de 1 à 9 ;
β est un nombre entier de 1 à 9 ; et
γ est un nombre entier de 1 à 9.

4. Composition selon l'une quelconque des revendications 1 à 3, dans laquelle le composé silane (A1) comprend un composé de formule (1b) ou (2b) : 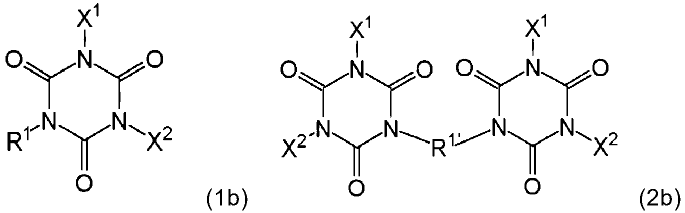
dans laquelle, chacun indépendamment à chaque occurrence,
R¹ est un groupe organique monovalent contenant un groupe fluoropolyéther ;
R^{1'} est un groupe organique divalent contenant un groupe fluoropolyéther représenté par -(OC₆F₁₂)ₘ₃₁-(OC₅F₁₀)ₘ₃₂-(OC₄F₈)-(OC₃X¹⁰₆)ₘ₃₄-(OC₂F₄)ₘ₃₅-(OCF₂)ₘ₃₆-dans laquelle
m31-m36 sont un nombre entier de 0 ou 1 ou plus ;
X¹⁰ est H, F ou CI ; et
l'ordre des unités répétitives n'est pas limité ;
X¹ est un groupe de réticulation réactif contenant du silane ;
X² est un groupe monovalent ; et
dans chacune des formules (1b) ou (2b), au moins un de X¹ et X² est un groupe monovalent contenant du Si auquel sont liés OH ou un groupe hydrolysable.

5. Composition selon l'une quelconque des revendications 1 à 4, dans laquelle la teneur en unités dérivées du composé silane (A1) dans le composé silane organique (A) est ≥ 0,1 % en masse.

6. Composition selon l'une quelconque des revendications 1 à 5, dans laquelle le composé silicone (A2) comprend un composé de formule (3) :
Mₐ₁D_{b1}T_{c1}Q_{d1} (3)
dans laquelle, chacun indépendamment à chaque occurrence,
M est un groupe monovalent représenté par (R^{s1}₃SiO_{1/2}) ;
D est un groupe divalent représenté par (R^{s1}₂SiO_{2/2}) ;
T est un groupe trivalent représenté par (R^{s1}SiO_{3/2}) ;
Q est un groupe tétravalent représenté par (SiO_{4/2}) ;
R^{s1} est H, OH, un groupe hydrolysable, -X^{s1}-NR^{s²}₂, -X^{s¹}-COOH, un groupe présentant un cycle époxy, un groupe organique monovalent ou -X^{s1}-SiR^{s3}ₙ₁₁R^{s4}₃₋ₙ₁₁ ;
R^{s2} est H ou un C₁₋₂₀-alkyle ;
R^{s3} est OH ou un groupe hydrolysable ;
R^{s4} est un C₁₋₂₀-alkyle ;
X^{s1} est un groupe organique divalent ;
n11 est un nombre entier de 1 à 3 ;
a1 est un nombre entier de 3 à 60 ;
b1 est un nombre entier de 10 à 1 100 ;
c1 est un nombre entier de 0 à 30 ;
d1 est un nombre entier de 0 à 15 ; et
(c1+d1) est ≥ 1,
à condition qu'au moins un R^{s1} contienne un cycle époxy et qu'au moins un autre R^{s1} soit OH ou un groupe hydrolysable.

7. Composition selon l'une quelconque des revendications 1 à 6, dans laquelle la composition comprend en outre un agent de réticulation (B) comprenant un composé présentant deux groupes ou plus aptes à réagir avec au moins l'un d'un groupe époxy et d'un groupe silyle hydrolysable.

8. Composition selon la revendication 7, dans laquelle, dans l'agent de réticulation (B), les groupes aptes à réagir avec au moins l'un d'un groupe époxy et d'un groupe silyle hydrolysable sont au moins un sélectionné parmi -OR^{b5}, un groupe carboxy, -NR^{b⁵}₂, et -SIR^{b6}ₙ₆R^{b7}₃₋ₙ₆, dans laquelle, chacun indépendamment à chaque occurrence,
| | |
|---|---|
| R^{b⁵} | est H ou un C₁₋₂₀-alkyle ; |
| R^{b⁶} | est OH ou un groupe hydrolysable ; |
| R^{b⁷} | est un groupe C₁₋₂₀-alkyle ; et |
| n6 | est un nombre entier de 1 à 3. |

9. Composition selon la revendication 7 ou la revendication 8, dans laquelle l'agent de réticulation (B) fait de 0,1 à 30 parts en masse par rapport à 100 parts en masse du composé silane organique (A).

10. Composition selon l'une quelconque des revendications 1 à 9, comprenant en outre un catalyseur (C).

11. Composition selon l'une quelconque des revendications 7 à 9, dans laquelle la composition est une composition durcissable à deux composants comprenant
- un agent principal (I) comprenant le composé silane organique (A), et
- un agent de durcissement (II) comprenant l'agent de réticulation (B)

12. Article comprenant un substrat et, disposé sur le substrat, un film formé à partir de la composition selon l'une quelconque des revendications 1 à 11.

13. Article selon la revendication 12, dans lequel l'angle de contact avec l'eau du film, mesuré conformément à JIS R3257:1999, est ≥ 100°.

14. Article selon la revendication 12 ou la revendication 13, dans lequel le trouble du film, mesuré conformément à JIS K7135:2000, est ≤ 1.

15. Article selon l'une quelconque des revendications 12 à 14, dans lequel un indice de propriété de givrage du film est ≤ 650 kPa, déterminé par le procédé défini dans la description.
